# EUROPEAN PATENT APPLICATION

(11) **EP 2 388 146 A2**
(43) Date of publication of application: **23.11.2011**
(21) Application number: 11166726.7
(22) Date of filing: 19.05.2011
(51) Int. Cl.: B41M 7/00, B41M 1/06, C09D 11/10

(54) **Printing method, method for preparing overprint, method for processing laminate, light-emitting diode curable coating composition, and light-emitting diode curable ink composition**

(30) Priority: 19.05.2010 JP 2010115737; 06.07.2010 JP 2010153802
(71) Applicant: Fujifilm Corporation, Minato-ku Tokyo 106-8620 (JP)
(72) Inventor: Suzuki, Hiroyuki, Shizuoka 421-0396 (JP)
(74) Representative: HOFFMANN EITLE

(57) **Abstract**

Provided is a light-emitting diode curable ink composition or coating composition having a practical curing sensitivity by irradiating ultraviolet rays having a peak wavelength at 375 to 395 nm by a light-emitting diode, providing a cured matter having excellent non-tackiness, and also having excellent hue without unnecessary absorption in a visible region.

A light-emitting diode curable coating composition including (component A) compound represented by the formula (I), (component B) a photopolymerization initiator, and (component C) an ethylenically unsaturated compound, and a light-emitting diode curable ink composition including (component A) a compound represented by the formula (I), (component B) a photopolymerization initiator, (component C) an ethylenically unsaturated compound, and (component D) a colorant.

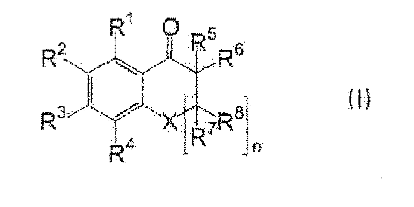

## Description

### BACKGROUND OF THE INVENTION

1. Field of the Invention

The present invention relates to a printing method, a method for preparing an overprint, a method for processing a laminate, a light-emitting diode curable coating composition, and a light-emitting diode curable ink composition.

2. Description of the Related Art

Conventionally, a printer for printing using an ultraviolet ray curable ink composition has been used, and it has been proposed to use one ultraviolet ray lamp (for example, a mercury lamp and the like) having a slightly longer dimension than the width of a body carrying a material to be printed by irradiating ultraviolet rays which cures an ultraviolet ray curable ink composition on a material to be printed (see, for example, JP2006-297690A).

Such a lamp has a short lifespan as well as generating a large amount of heat and high power consumption, and accordingly in recent years, it has also been proposed to use a light-emitting diode which is capable of irradiating ultraviolet rays (see, for example, JP2009-208463A).

### SUMMARY OF THE INVENTION

The wavelength of the ultraviolet rays irradiated by a mercury lamp as described in JP2006-297690A is in a wide range of from 200 to 500 nm, whereas the wavelength of the ultraviolet rays irradiated by a light-emitting diode as described in JP2009-208463A has a very narrow range.

It is an object of the invention to provide a light-emitting diode curable ink composition or coating composition, which has a practical curing sensitivity by irradiation from a light-emitting diode, provides a cured matter having excellent non-tackiness, and also has excellent hue without unnecessary absorption in a visible region.

Furthermore, it is another object of the invention to provide a printing method, a method for preparing an overprint, and a method for processing a laminate, each of which uses the ink composition or the coating composition.

In order to solve the above-described objects, the printing method of the invention includes a printing step of printing an ink composition including (component A) a compound represented by the following formula. (I), (component B) a photopolymerization initiator, (component C) an ethylenically unsaturated compound, and (component D) a colorant on a material to be printed, and a curing step of irradiating ultraviolet rays having a peak wavelength at 375 to 395 nm by a a light-emitting diode to cure the printed ink composition. 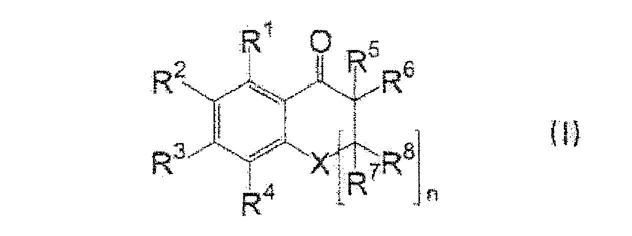 (in the formula (1), X represents O, S, or NR, n represents an integer of 0 to 4, R represents a hydrogen atom, an allyl group, or an acyl group, R¹ to R⁸ each independently represent a hydrogen atom or a monovalent substituent, two of R¹ to R⁴ which are adjacent, respectively, may be bonded to each other to form a ring, and two of R⁵ to R⁸ which are adjacent, respectively, may be bonded to each other to form an aliphatic ring).

Furthermore, the printing method of the invention is preferably an offset printing method.

Also, in the printing method of the invention, at least one of R¹ to R⁸ in the formula (I) is preferably a halogen atom.

In addition, in the printing method of the invention, the component A is preferably a compound represented by the following formula (I-C). 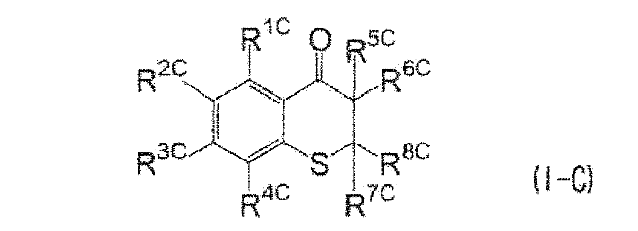 (in the formula (I-C), R^{1C} to R^{4C} each independently represent a hydrogen atom or a halogen atom, R^{5C} to R^{8C} each independently represent a hydrogen atom or an alkyl group, at least one of R^{1C} to R^{4C} is a halogen atom, and at least one of R^{5C} to R^{8C} is an alkyl group).

Furthermore, in the printing method of the invention, the component B preferably includes an α-aminoketone-based compound and/or an acylphosphine oxide-based compound. Here, the component B preferably includes an α-aminoketone-based compound and an acylphosphine oxide-based compound.

Moreover, in the printing method of the invention, the printing step is preferably a printing step of full-color printing using at least the ink composition on a material to be printed.

In addition, in order to solve the above-described objects, the method for preparing an overprint of the invention includes a coating step of coating a coating composition including (component A) a compound represented by the following formula (I), (component B) a photopolymerization initiator, and (component C) an ethylenically unsaturated compound on a printed matter, and a curing step of irradiating ultraviolet rays having a peak wavelength at 375 to 395 nm by a light-emitting diode to cure the coating composition thus coated. 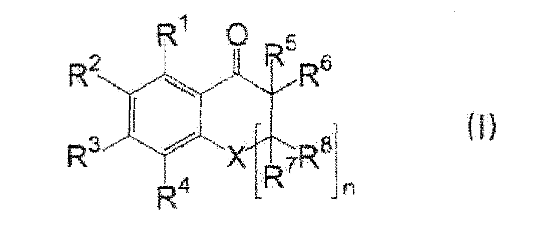 (in the formula (I), X represents O, S, or NR, n represents an integer of 0 to 4, R represents a hydrogen atom, an alkyl group, or an acyl group, R¹ to R⁸ each independently represent a hydrogen atom or a monovalent substituent, two of R¹ to R⁴ which are adjacent, respectively, may be bonded to each other to form a ring, and two of R⁵ to R⁸ which are adjacent, respectively, may be bonded to each other to form an aliphatic ring).

Further, in order to solve the above-described objects, the method for processing a laminate of the invention includes a coating step of applying a coating composition including (component A) a compound represented by the following formula (I), (component. B) a photopolymerization initiator, and (component C) an ethylenically unsaturated compound on a printed matter, a laminating step of laminating a laminated film on the printed matter having the coating composition coated thereon, and a curing step of irradiating ultraviolet rays having a peak wavelength at 375 to 395 nm by a light-emitting diode to cure the coating composition thus coated. 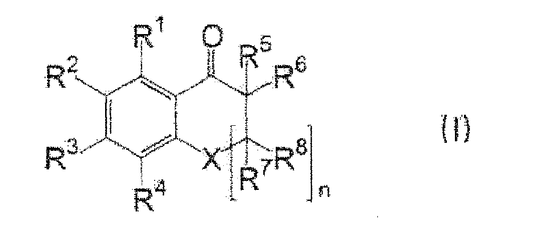 (in the formula (I), X represents O, S, or NR, n represents an integer of 0 to 4, R represents a hydrogen atom, an alkyl group, or an acyl group, R¹ to R⁸ each independently represent a hydrogen atom or a monovalent substituent, two of R¹ to R⁴ which are adjacent, respectively, may be bonded to each other to form a ring, and two of R⁵ to R⁸ which are adjacent, respectively, may be bonded to each other to form an aliphatic ring).

Furthermore, in order to solve the above-described objects, the light-emitting diode. curable coating composition of the invention may include (component A) a compound represented by the following formula (I), (component B) a photopolymerization initiator, and (component C) an ethylenically unsaturated compound, and be cured by irradiation with a light-emitting, diode having a peak wavelength at 375 to 395 nm. 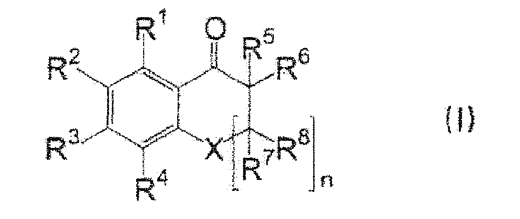 (in the formula (I), X represents O, S, or NR, n represents an integer of 0 to 4, R represents a hydrogen atom, an alkyl group, or an acyl group, R¹ to R⁸ each independently represent a hydrogen atom or a monovalent substituent, two of R¹ to R⁴ which are adjacent, respectively, may be bonded to each other to form a ring, and two of R⁵ to R⁸ which are adjacent, respectively, may be bonded to each other to form an aliphatic ring).

Furthermore, in the light-emitting diode curable coating composition of the invention, the component A is preferably a compound represented by the following formula (I-C). 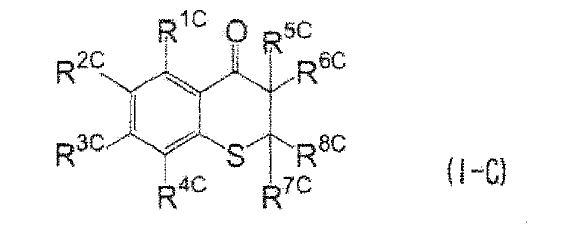 (in the formula (I-C), R^{1C} to R^{4c} each independently represent a hydrogen atom or a halogen atom, R⁵ to R⁸ each independently represent a hydrogen atom or an alkyl group, at least one of R^{1C} to R^{4C} is a halogen atom, and at least one of R^{5C} to R^{8C} is an alkyl group).

Further, the light-emitting diode curable coating composition of the invention is preferably a coating composition for offset printing.

Furthermore, in order to solve the above-described objects, the light-emitting diode curable ink composition of the invention may include (component A) a compound represented by the following formula (I), (component B) a photopolymerization initiator, (component C) an ethylenically unsaturated compound, and (component D) a colorant, and be cured by irradiation with a light-emitting diode having a peak wavelength at 375 to 395 nm. 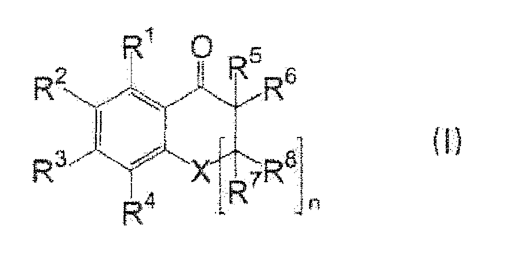 (in the formula (I), X represents O, S, or NR n represents an integer of 0 to 4, R represents a hydrogen atom, an alkyl group, or an acyl group, R¹ to R⁸ each independently represent a hydrogen atom or a monovalent substituent, two of R¹ to R⁴ which are adjacent, respectively, may be bonded to each other to form a ring, and two of R⁵ to R⁸ which are adjacent, respectively, may be bonded to each other to form an aliphatic ring).

Furthermore, in the light-emitting diode curable ink composition of the invention, the component A is preferably a compound represented by the following formula (I-C). 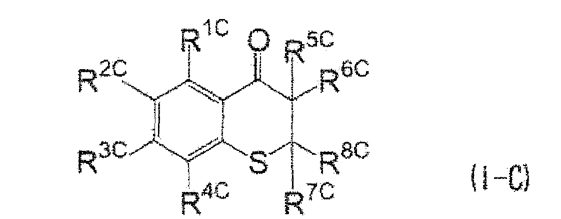 (in the formula (I-C), R^{1C} to R^{4C} each independently represent a hydrogen atom or a halogen atom, R^{5C} to R^{8C} each independently represent a hydrogen atom or an alkyl group, at least one of R^{1C} to R^{4C} is a halogen atom, and at least one of R^{5C} to R^{8C} is an alkyl group).

Further, the light-emitting diode curable ink composition of the invention is preferably a curable ink composition for offset printing.

According to the invention, a light-emitting diode curable ink composition which provides a cured matter having excellent non-tackiness and hue can be provided.

Furthermore, according to the invention, a light-emitting diode curable coating composition which provides a cured matter having excellent non-tackiness and transparency can be provided.

Further, according to the invention, a printing method, a method for preparing an overprint, and a method for processing a laminate, each of which uses the ink composition or the coating composition, can be provided.

### BRIEF DESCRIPTION OF THE DRAWINGS

Fig. 1 is a view showing an absorption spectrum of the compound (1-14), diethylthioxanthone, and IRGACURE 907.

Fig. 2 is a schematic structural view showing the printer which can be used in one embodiment of the printing method of the invention.

Fig. 3(a) is a perspective view showing the arrangements of the impression cylinder and the light-emitting diode in the ultraviolet ray-irradiated portion T, and Fig. 3(b) is a front view of a substrate equipped with a light-emitting diode in the ultraviolet ray-irradiated portion T.

Fig. 4 is an overall structural view of a coating device used in one embodiment of the method for processing a laminate of the invention.

Fig. 5 is an overall structural view of another coating device used in one embodiment of the method for processing a laminate of the invention.

### DESCRIPTION OF THE PREFERRED EMBODIMENTS

Hereinbelow, the invention will be described in detail.

The light-emitting diode curable coating composition of the invention (hereinafter also simply referred to as a "coating composition") may include (component A) a compound represented by the following formula (I), (component B) a photopolymerization initiator, and (component C) an ethylenically unsaturated compound.

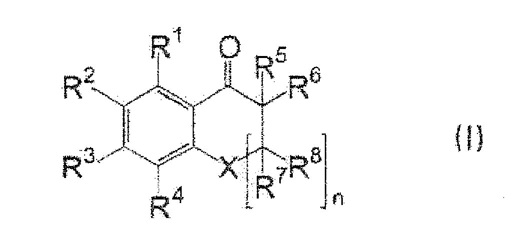

(in the formula (I), X represents O, S, or NR, n represents an integer of 0 to 4, R represents a hydrogen atom, an alkyl group, or an acyl group, R¹ to R⁸ each independently represent a hydrogen atom or a monovalent substituent, two of R¹ to R⁴ which are adjacent, respectively, may be bonded to each other to form a ring, and two of R⁵ to R⁸ which are adjacent, respectively, may be bonded to each other to form an aliphatic ring).

The light-emitting diode curable ink composition of the invention (hereinafter also simply referred to as "ink composition") may include (components A) a compound represented by the formula (I), (component B) a photopolymerization initiator, (component C) an ethylenically unsaturated compound, and (component D) a colorant.

Furthermore, both of the coating composition of the invention and the ink composition of the invention may also be simply referred to as the "curable composition".

Here, the "light-emitting diode curable" or "curable" refers to being cured by irradiation with a light-emitting diode having a light-emitting peak wavelength at 375 to 395 nm, and preferably irradiation for 0.1 to 10 seconds.

The printing method of the invention may include a printing step of printing an ink composition including (component A) a compound represented by the formula (I), (component B) a photopolymerization initiator, (component C) an ethylenically unsaturated compound, and (component D) a colorant (the ink composition of the invention) on a material to be printed, and a curing step of irradiating ultraviolet rays having a peak wavelength at 375 to 395 nm by a light-emitting diode to cure the printed ink composition.

The method for preparing an overprint of the invention may include a coating step of coating a coating composition including (component A) a compound represented by the following formula (I), (component B) a photopolymerization initiator, and (component C) an ethylenically unsaturated compound (the coating composition of the invention) on a printed matter, and a curing step of irradiating ultraviolet rays having a peak wavelength at 375 to 395 nm by a light-emitting diode to cure the coating composition thus coated.

The method for processing a laminate of the invention may include a coating step of coating a coating composition including (component A) a compound represented by the following formula (I), (component B) a photopolymerization initiator, and (component C) an ethylenically unsaturated compound (the coating composition of the invention) on a printed matter, a lamination step of laminating a laminate film on the printed matter having the coating composition coated thereon, and a curing step of irradiating ultraviolet rays having a peak wavelength at 375 to 395 nm by a light-emitting diode to cure the coating composition thus coated.

The light-emitting diode curable coating composition of the invention can be used in a composition used for UV ink, or UV varnish for an overprint, a three-dimensional structure, or the like, a composition for processing a laminate, or the like. The cured composition does not substantially have unnecessary light absorption (yellowing) in a visible region, which is thus advantageous.

Further, the light-emitting diode curable coating composition of the invention preferably has no colorant, and preferably, it has substantially no absorption in the visible region. The expression "having substantially no absorption in the visible region" means either having no absorption in a visible region of 400 to 700 nm or having only a level of absorption in the visible region that does not cause any problems as a photocurable coating composition. Specifically, a 5 µm optical path length transmittance of the coating composition in a wavelength range of 400 to 700 nm is at least 70%, preferably at least 80%, and particularly preferably at least 90% on average.

The light-emitting diode curable ink composition of the invention is a colored ink composition and contains a colorant.

The light-emitting diode curable ink composition of the invention can be suitably used as an ink composition for relief printing, lithographic printing, intaglio printing, and stencil printing, such as flexographic printing, offset printing, gravure printing, screen printing, and the like.

(Component A) Compound Represented by Formula (I) (Sensitizer)

The curable composition of the invention may include a compound represented by the following formula (I) in order to promote the polymerization-initiating ability of the photopolymerization initiator by irradiation with a light-emitting diode having a light-emitting peak wavelength at 375 to 395 nm.

The compound represented by the formula (I) functions as a sensitizer in the curable composition of the invention.

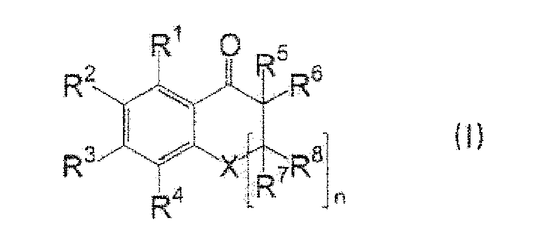

(in the formula (I), X represents O, S, or NR, n represents an integer of 0 to 4, R represents a hydrogen atom, an alkyl group, or an acyl group, R¹ to R⁸ each independently represent a hydrogen atom or a monovalent substituent, two of R¹ to R⁴ which are adjacent, respectively, may be bonded to each other to for a ring, and two of R⁵ to R⁸ which are adjacent, respectively, may be bonded to each other to form an aliphatic ring).

In the formula (I), X represents O, S, or NR, and R represents a hydrogen atom, an alkyl group, or an acyl group. n represents an integer of 0 to 4.

X is preferably O or S, and more preferably S.

Here, when n is 0, there is no carbon, atom to which R⁷ and R⁸ are bonded, and X which contains a hetero atom and the carbon atom to which R⁵ and R⁶ are bonded are directly bonded to each other to form an X-containing 5-membered hetero ring.

R¹, R², R³, R⁴, R⁵, R⁶, R⁷, and R⁸ each independently represent a hydrogen atom or a monovalent substituent. Further, examples of the substituent in the invention include atoms and atom groups.

When R¹, R², R³, R⁴, R⁵, R⁶, R⁷ and R⁸ represent a monovalent substituent, examples of the monovalent substituent include a halogen atom, an alkyl group, an aryl group, a heterocyclic group, a cyano group, a hydroxy group, a nitro group, an amino group, a mono or dialkylamino group, an alkoxy group, an aryloxy group, an amide group, an arylamino group, an ureido group, a sulfamoylamino group, an alkylthio group, an arylthio group, an alkoxycarbonylamino group, a sulfonamide group, a carbamoyl group, a sulfamoyl group, a sulfonyl group, an alkoxycarbonyl group, a hetero ring oxy group, an azo group, an acyloxy group, a carbamoyloxy group, a silyloxy group, an aryloxycarbonyl group, an aryloxycarbonylamino group, an imide group, a hetero ring thio group, a sulfinyl group, a phosphoryl group, an acyl group, a carboxylic group, or a sulfo group, and the like. Among these, an alkyl group or a halogen atom is preferred, and a lower alkyl group (alkyl group having 1 to 5 carbon atoms) or a halogen atom is further preferred.

When R¹, R², R³, R⁴, R⁵, R⁶, R⁷, and R⁸ in the formula (I) represent a monovalent substituent, preferred examples of the alkyl group include those having 1 to 4 carbon atoms such as a methyl group, an ethyl group, a propyl group, an n-butyl group, a sec-butyl group, and a t-butyl group.

Similarly, preferred examples of the alkoxy group include those having 1 to 4 carbon atoms such as a methoxy group, an ethoxy group, a hydroxyethoxy group, a propoxy group, an n-butosy group, an isobutoxy group, a sec-butoxy group, and a t-butoxy group.

Examples of the halogen atom include a fluorine atom, a chlorine atom, a bromine atom, and an iodine atom.

Two of R¹, R², R³, and R⁴ which are adjacent, respectively, may be bonded to each other, for example, condensed, to form a ring.

When they form a ring, the ring structure may be a 5- or 6-membered aliphatic ring, aromatic ring, or the like, or may be a hetero ring containing an element other than a carbon atom.

Furthermore, two of R⁵, R⁶, R⁷, and R⁸ which are adjacent, respectively, may be bonded to each other to form an aliphatic ring, but does not form an aromatic ring. Also, when they form the aliphatic ring, R⁵ and R⁷ are preferably bonded to each other to form an aliphatic ring.

In addition, the rings thus formed may further be combined to form a polycyclic condensed ring or a spiro ring. Also, these ring structures may further have a substituent such as each of those cited as examples for the monovalent substituents represented by R¹ to R⁸ in the formula (I). Examples of the hetero atom when the ring structure thus formed is a hetero ring include N, O, and S.

For the compound represented by the formula (I), at least one of R¹, R², R³ , R⁴, R⁵, R⁶, R⁷, and R⁸ is preferably a monovalent substituent.

The compound represented by the formula (I) is preferably a compound represented by the following formula (I-A).

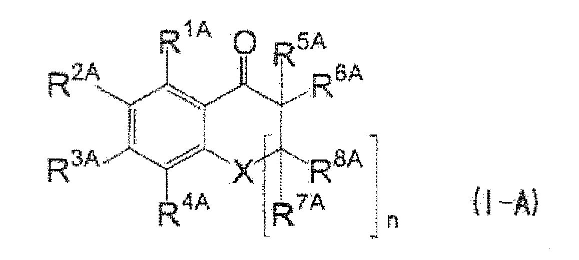

In the formula X represents O or S. n represents an integer of 0 to 4. R^{1A}, R^{2A}, R^{3A}, R^{4A}, R^{5A}, R^{6A}, R^{7A}, and R^{8A} each independently represent a hydrogen atom, a halogen atom, an alkyl group, a hydroxyl group, a cyano group, a nitro group, all amino group, an alkylthio group, a mono- or dialkylamino group, an alkoxy group, an alkoxycarbonyl group, an acyloxy group, an acyl group, a carboxylic group, or a sulfo group. Also, two of R^{1A}, R^{2A}, R^{3A}, and R^{4A} which are adjacent, respectively, may be bonded to (condensed with) each other to form a ring.

When two of R^{1A}, R^{2A}, R^{3A}, and R^{4A} which are adjacent, respectively, are bonded to (condensed with) each other, they may form a 5- or 6-membered aliphatic ring or aromatic ring, and these rings may be hetero rings containing an element other than a carbon atom, and the rings thus formed may further be combined to form a polycyclic condensed ring or a spiro ring. Furthermore, these ring structures may further have a substituent such as each of those cited as examples for the monovalent substituent represented by R¹, R², R³, R⁴, R⁵, R⁶, R⁷, and R⁸ in the formula (I). Examples of the hetero atom when the ring structure is a hetero ring include N, O, and S.

The compound represented by the formula (I) is more preferably a compound represented by the following formula (I-B).

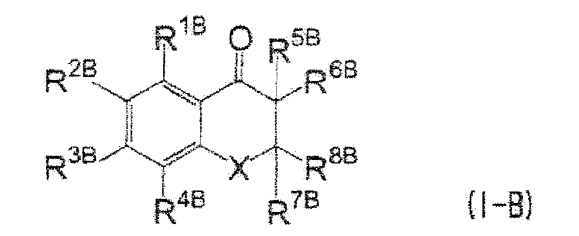

In the formula (I-B), X represents O or S. R^{1B}, R^{2B}, R^{3B}, R^{4B}, R^{5B}, R^{6B}, R^{7B}, and R^{8B} each independently represent a hydrogen atom, a halogen atom, an alkyl group, a hydroxy group, a cyano group, a nitro group, an amino group, an alkylthio group, a mono- or dialkylamino group, an alkoxy, group, an alkoxycarbonyl group, an acyloxy group, an acyl group, a carboxylic group, or a sulfo group. Also, two of R^{1B}, R^{2B}, R^{3B}, and R^{4B} which are adjacent, respectively, may be bonded to (condensed with) each other to form a ring.

When two of R^{1B}, R^{2B}, R^{3B}, and R^{4B} which are adjacent, respectively, are bonded to (condensed with) each other, they may form a 5- or 6-membered aliphatic ring or aromatic ring, and these rings may be hetero rings containing an element other than a carbon atom, and the rings thus formed may further be combined to form a polycyclic condensed ring or a spiro ring. Furthermore, these ring structures may further have a substituent such as each of those cited as examples for the monovalent substituent represented by R¹, R², R⁴, R⁵, R⁶, R⁷, and R⁸ in the formula (I). Examples of the hetero atom when the ring structure is a hetero ring include N, O, and S.

The compound represented by the formula (I) is even more preferably a compound represented by the following formula (I-C).

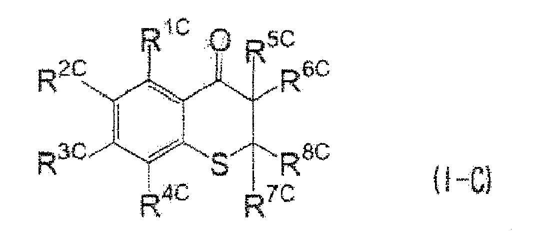

In the formula (I-C), R^{1C} to R^{4C} each independently represent a hydrogen atom or a halogen atom, R^{5C} to R^{8C} each independently represent a hydrogen atom or an alkyl group, at least one of R^{1C} to R^{4C} is a halogen atom, and at least one of R^{5C} to R^{8C} is an alkyl group.

The number of carbon atoms of the alkyl group is preferably 1 to 8, more preferably 1 to 5, even more preferably 1 to 3, and particularly preferably 1.

Furthermore, the halogen atom is preferably a chlorine atom.

Specific examples (exemplified Compounds (I-1) to (I-138)) of the compound represented by the formula (I) that can suitably be used in the invention are listed below, but the invention is not limited thereto. Further, in the specific examples below, Me represents a methyl group, Bu^{t} represents a t-butyl group, and Prⁱrepresents an isopropyl group. Also, in the invention, a hydrocarbon chain in some of the chemical formulae is sometimes represented by a simplified structural formula in which symbols for carbon (C) and hydrogen (H) are omitted. In the invention, the exemplified compound (I-14) or (I-132) is particularly preferred.

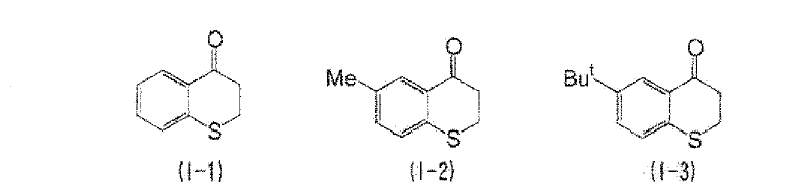

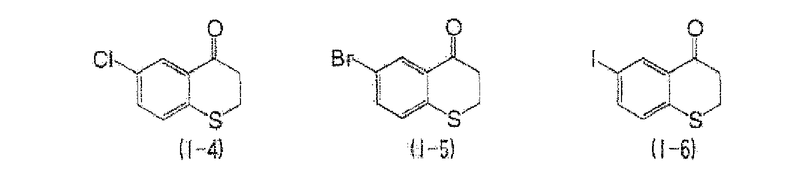

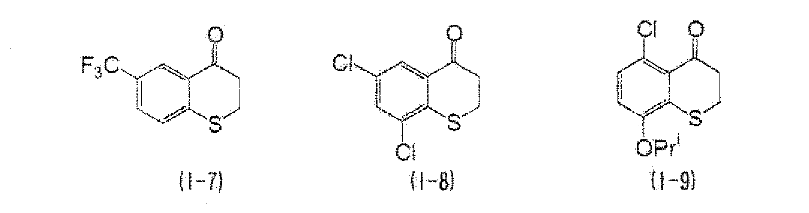

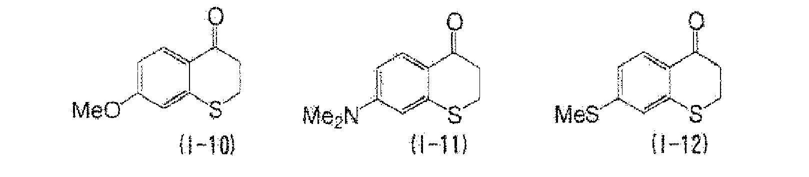

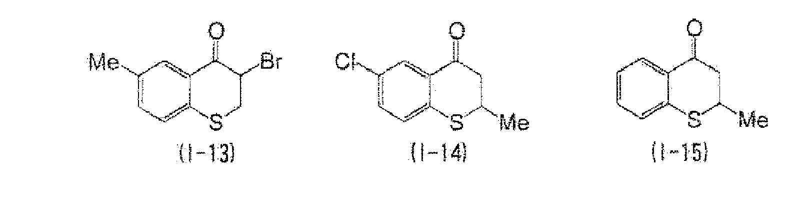

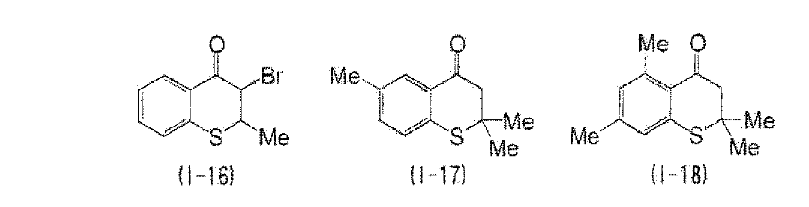

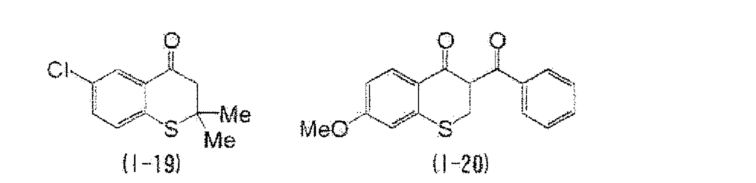

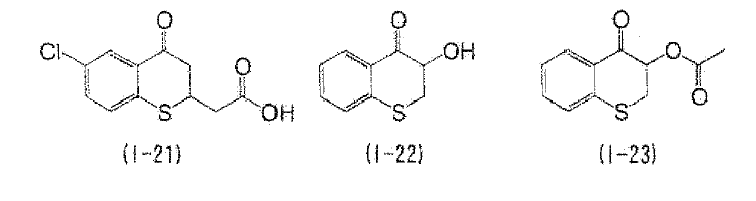

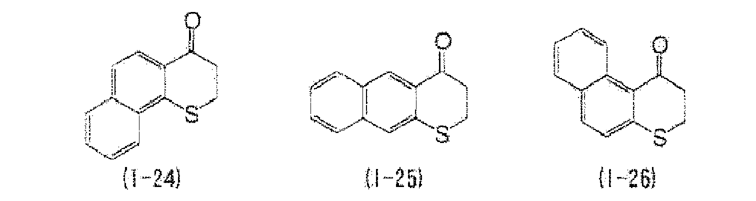

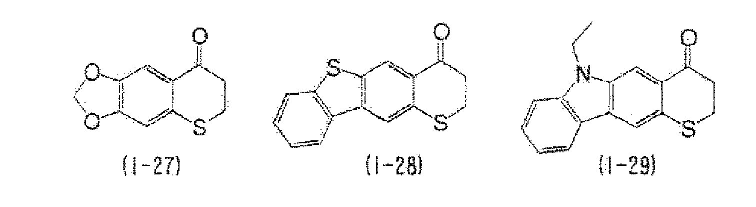

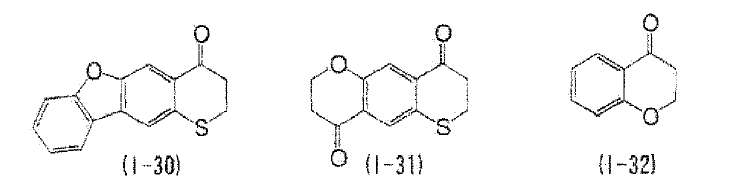

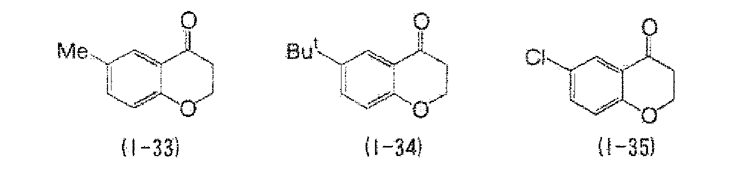

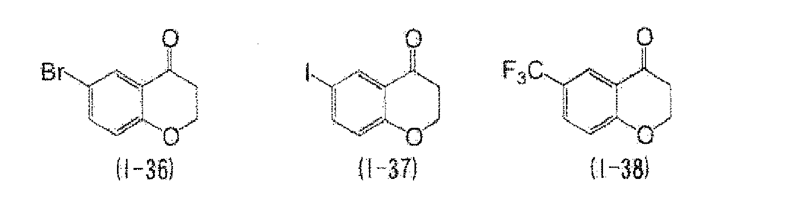

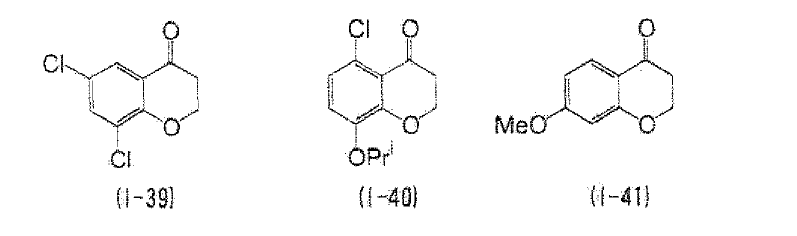

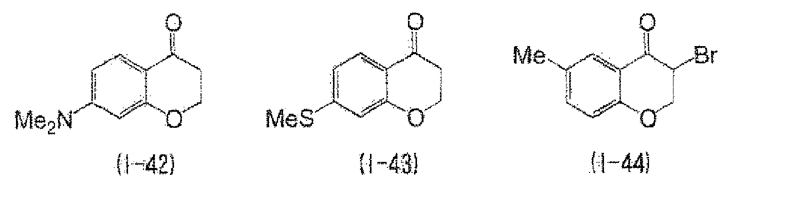

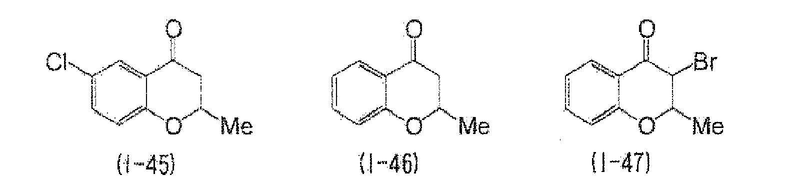

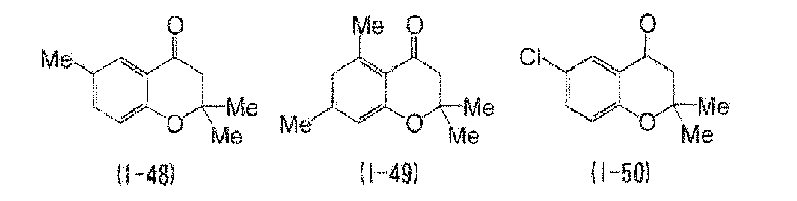

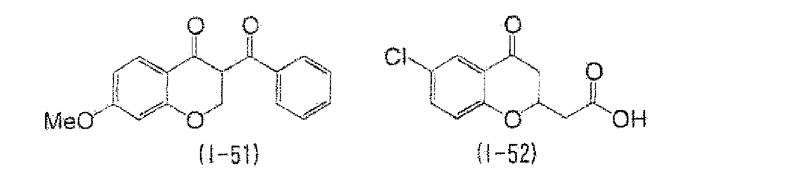

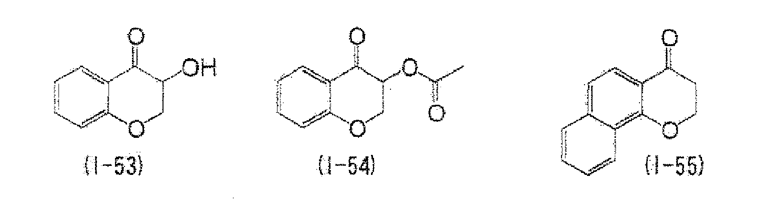

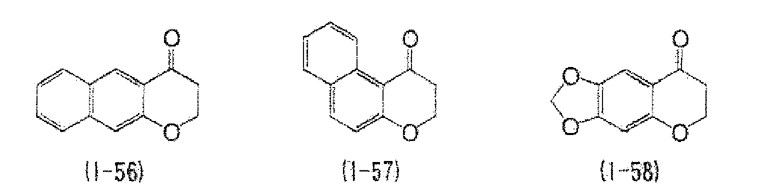

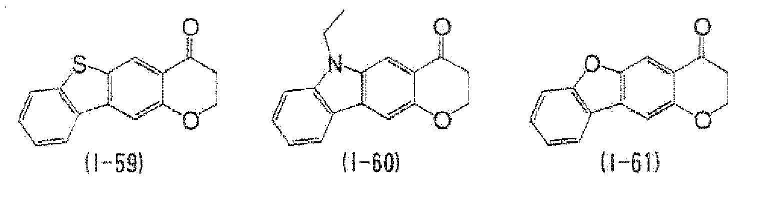

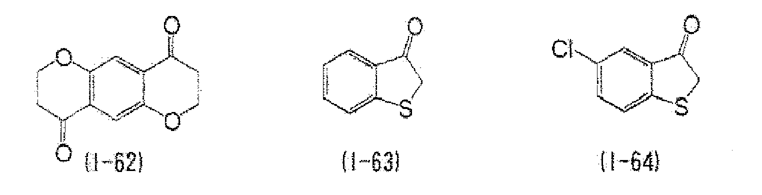

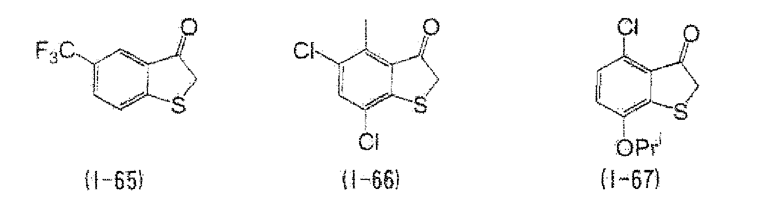

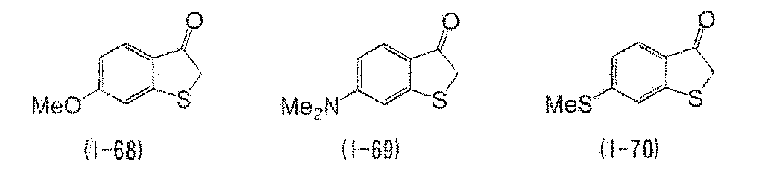

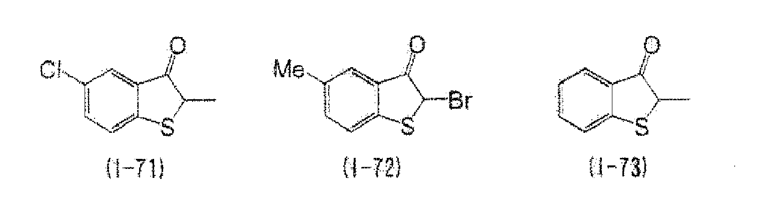

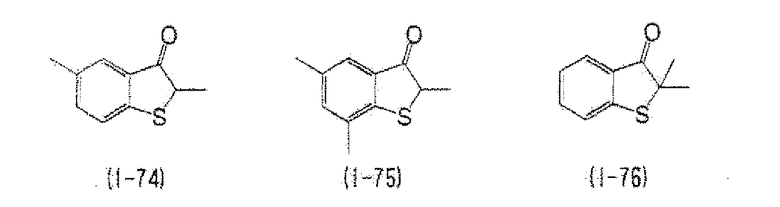

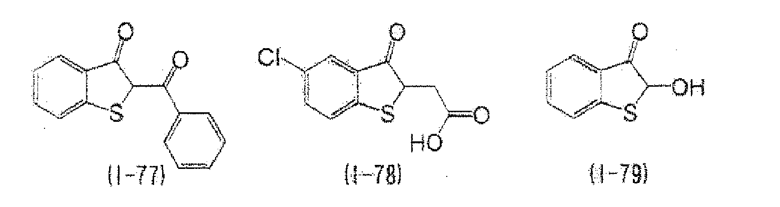

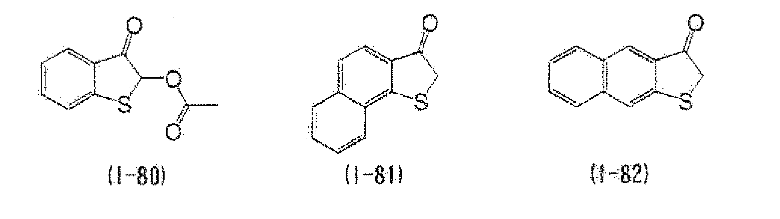

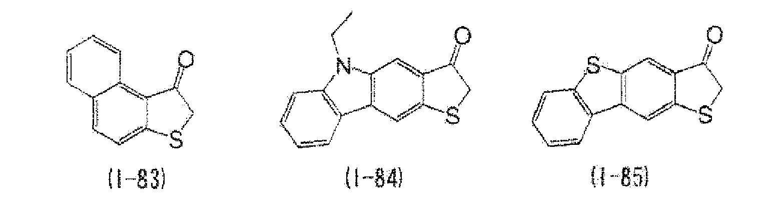

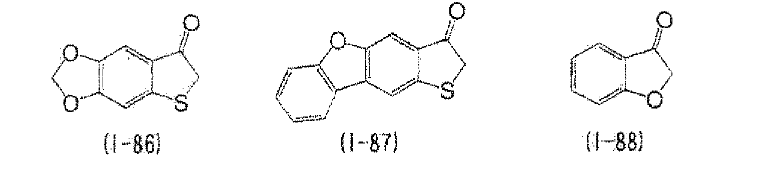

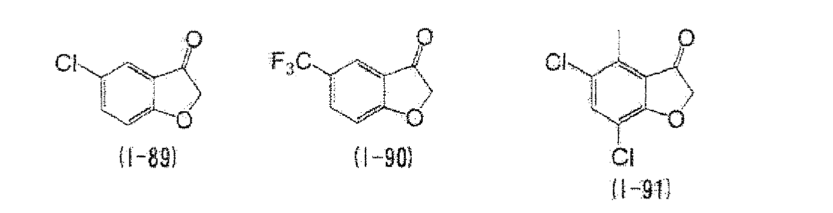

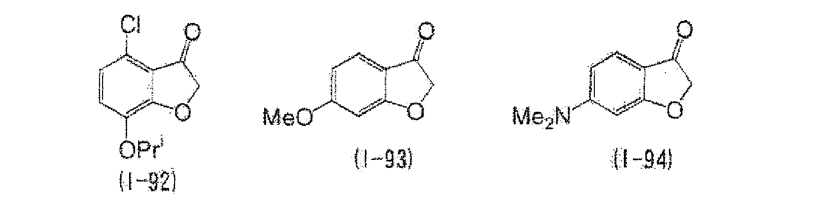

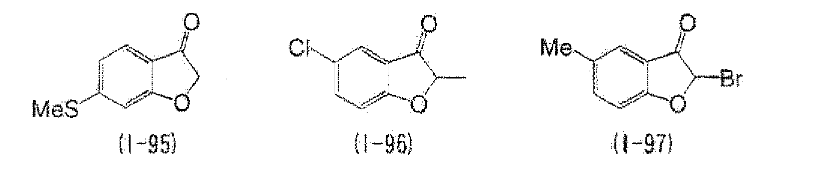

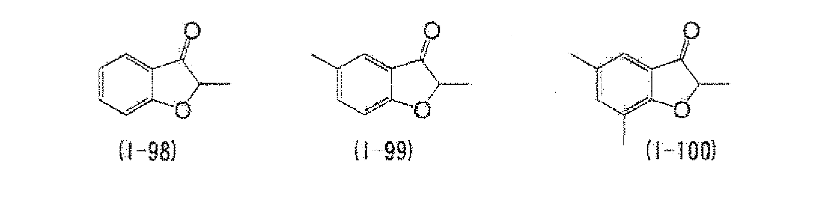

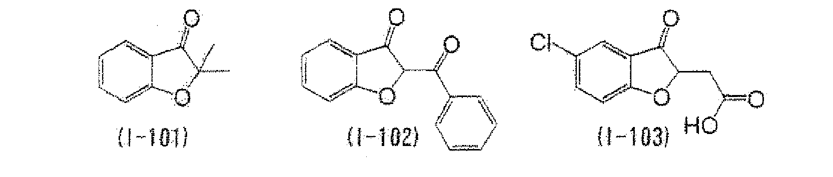

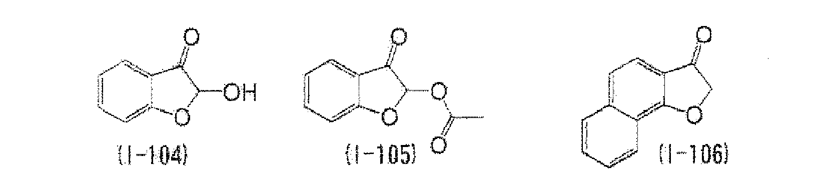

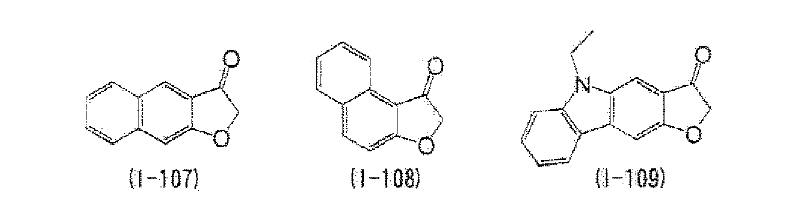

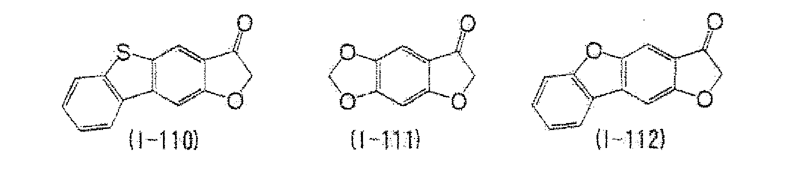

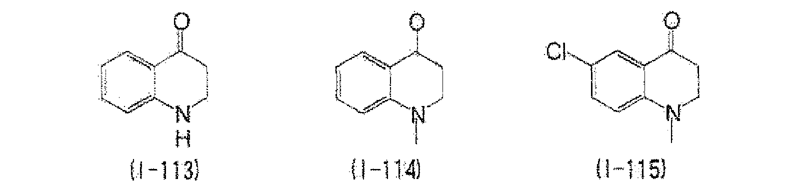

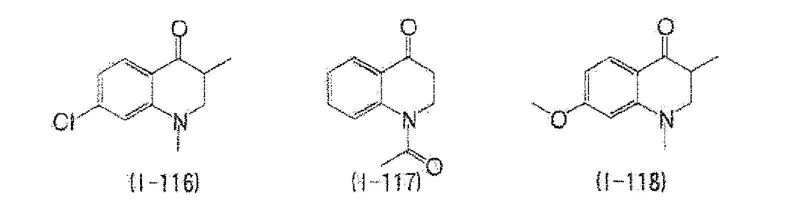

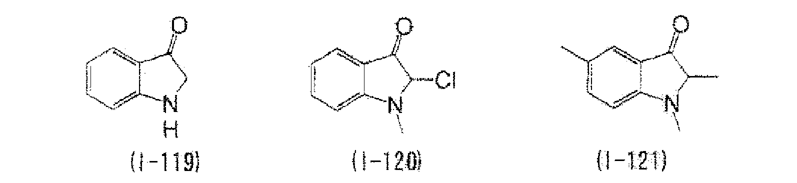

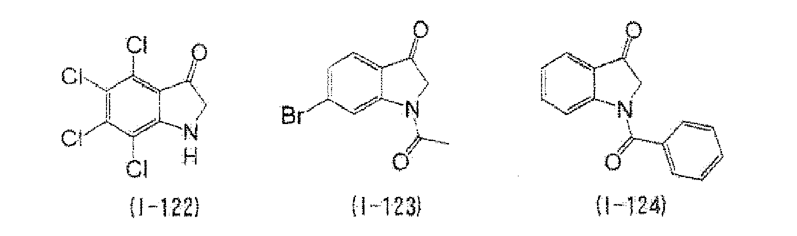

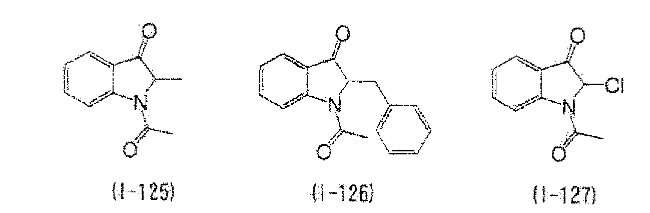

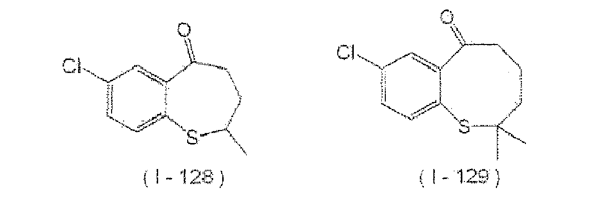

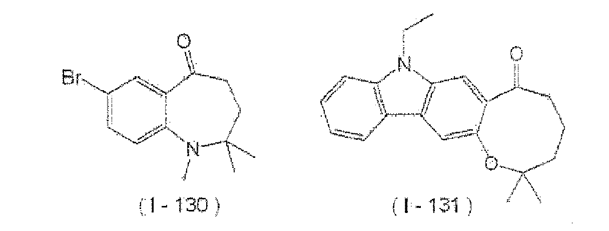

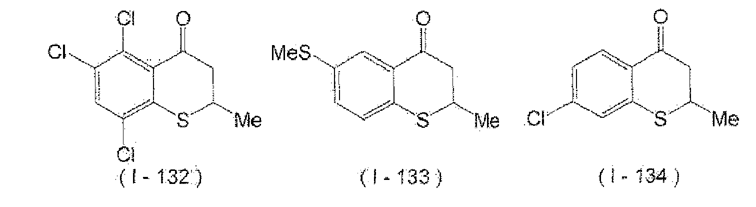

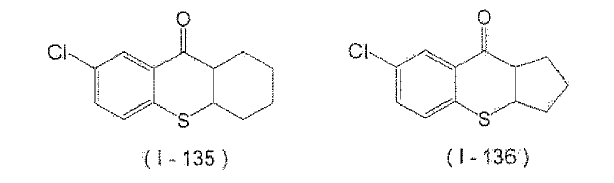

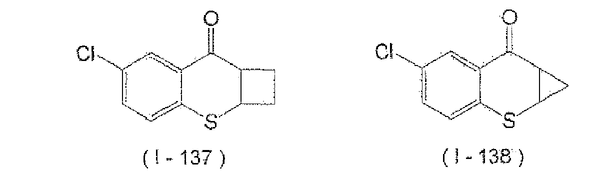

By way of example, for the exemplified compound (1-14), and diethylthioxanthone (DETX) and IRGACURE 907 (Irg-907), manufactured by Ciba Specialty Chemicals Inc.) which are conventional sensitizers, the absorption spectra were measured by the method shown below. The measurement results are shown in Fig. 1. Further, the vertical axis of Fig. 1 denotes a molar absorbance coefficient ε (mol⁻¹·L·cm⁻¹) and the horizontal axis denotes a wavelength (nm).

Furthermore, for the exemplified compound (I-14), and dielhylthioxanthone, benzophenone. and N-ethylcarbazole, which are conventional sensitizers, the molar absorbance coefficient ε mol⁻¹·L·cm⁻¹) at 365 nm and 400 nm was calculated. The measurement results are shown below.

As for the molar absorbance coefficient of the compound, a 0.01 g/L solution of a compound to be measured in methanol was produced and the absorbance was measured using cary-5uv-vis-NIRSPECTROPHOTMETERS manufactured by Varian Inc. Further, the molar absorbance coefficients ε (mol⁻¹·L·cm⁻¹) at 365 nm and 400 nm were calculated.

| Sensitizer | ε at 365 nm | ε at 400 nm |
|---|---|---|
| Compound (I-14) | 2,578 | 156 |
| Diethylthioxanthone | 3,792 | 4,078 |
| Benzophenone | 81 | 0 |
| N-Ethylcarbazole | 92 | 0 |

The method for synthesizing the compound represented by the formula (I) is not particularly limited, but a known method can be used, and thus, the compound can be synthesized according to the method described in, for example, JP2004-189695A, "Tetrahedron", Vol. 49, p. 939 (1993), "Journal of Organic Chemistry", p. 893 (1945), and "Journal of Organic Chemistry", p. 4939 (1965), or the like.

The content of the compound represented by the formula (I) in the curable composition of the invention is preferably on the order of 0.05 to 40% by weight, more preferably 0.1 to 30% by weight, and even more preferably 0.2 to 25% by weight, based on the solid content of the coating composition.

Further, since the compound represented by the formula (I) has hardly any adsorption in the visible light region, even if an amount such that an effect can be exhibited is added, there is an advantage that there is no probability of affecting the hue of the curable composition, which is an advantage.

With respect to a photopolymerization initiator, which is described later, the content in the curable composition of the invention is an amount that satisfies the ratio by weight of the photopolymerization initiator:the compound represented by the formula (I) of preferably 200: 1 to 1:200, more preferably 50:1 to 1: 50, and even more preferably 20:1 to 1:5.

Generally, the sensitizer absorbs a specific actinic radiation and attains an electronically excited state. The sensitizer in the electronically excited state causes actions such as electron transfer, energy transfer, heat generation, and the like upon contact with the photopolymerization initiator. This promotes the chemical change of the photopolymerization initiator, that is, decomposition, generation of active species such as a radical, an acid, a base, or the like, and the active species thus generated causes and promotes generation of the polymerization and curing reactions of the polymerizable compounds as described later.

### [Other Sensitizers]

In the invention, in addition to the compound represented by the formula (I), a known sensitizer can be used in combination therewith as long as the effects of the invention are not impaired.

When another sensitizer is used, the amount of the other sensitizer used is preferably 1:5 to 100:1, more preferably 1:1 to 100:1, and even more preferably 2:1 to 100:1 of the compound represented by the formula (I):the other sensitizer ratio by weight, based on the compound represented by the formula (I).

Examples of the known sensitizer that can be used in combination include benzophenone, thioxanthone, isopropylthioxanthone, anthraquinone, 3-acylcoumarin derivatives, terphenyl, styryl ketone, 2-(aroylmethylene)thiazoline camphorquinone, eosin, rhodamine, erythrosine, and the like.

Further examples of the sensitizer that can be used in combination are as follows.

### (1) Thioxanthones

thioxanthone, 2-isopropylthioxanthone, 2-chlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl- 3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di-[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-mett)yl-6-(1,1-dimethoxybenzyl)thioxanthone, 2-morpholinomethylthioxanthone, 2-methyl-6-morpholinomethylthioxanthone, n-allylthioxanthone-3,4-dicarboximide, n-octylthioxanthone-3,4-dicarboximide, N-(1,1,3,3-tetramethylbuthyl)thioxanthone-3,4-dicarboximide, 1-phenoxythioxanthone, 6-ethoxycarbonyl-2-methoxythioxanthone, 6-ethoxycarbonyl-2-methylthioxanthone, thioxanthone-2-potyethylene glycol ester, 2-hydroxy-3-(3,4-dimethyl-9-oxo-9H-thioxanthon-2-yloxy)-N,N,N-trimethyl-1-propanaminiu m chloride;

### (2) Benzophenones

benzophenone, 4-phenylbenzophenone, 4-methoxybenzophenone, 4,4'-dimethoxybenzophenone, 40,4'-dimethylbenzophenone, 4,4'-dachlorobenzophenone, 4,4'-dimethylaminobenzophenone, 4,4'-diethylaminobenzophenone, 4-methylbenzophenone, 2,4,6-trimethylbenzophenone, 4-(4-methylthio phenyl)benzophenone, 3,3'-dimethyl-4-methoxybenzophenone, methyl-2-benzoylbenzoate, 4-(2-hydroxyethylthio)benzophenone, 4-(4-tolylthio)benzophenone, 4-benzoyl-N,N,N-trimethylbenzenemethanaminium chloride, 2-hydroxy-3-(4-belizoylphonoxy)-N,N,N-trimethyl-1-propanaminium chloride monohydrate, 4-(13-acryloyl-1,4,7,10,13-penlaoxatridecyl)benzophenone, 4-benzoyl-N,N-dimethyl-N-[2-(1-oxo-2-propenyl)oxy]ethylbenzenemethanaminium chloride;

### (3) 3-Aylcoumarins

3-benzoylcoumarin, 3-benzoyl-7-mothoxycoumarin, 3-benzoyl-5,7-di(propoxy)coumarin, 3-benzoyl-6,8-dichlorocoumarin, 3-benzoyl-6-chlorocoumarin, 3,3'-carbonylbis[5,7-di(propoxy)coumarin], 3,3'-carbonylbis(7-methoxycoumarin), 3,3'-carbonylbis(7-diethylaminocoumarin), 3-isobutyroylcoumarin, 3-benzoyl-5,7-dimethoxycoumarin, 3-benzoyl-5,7-diethoxycoumarin, 3-benzoyl-5,7-dibutoxycoumarin, 3-benzoyl-5,7-di(methoxyethoxy)coumarin, 3-benzoyl-5,7-di(allyloxy)coumarin, 3-benzoyl-7-dimethylaminocoumarin, 3-benzoyl-7-diethylaminocoumarin, 3-isobutyroyl-7-dimethylaminnocoumarin, 5,7-ditnethoxy-3-(1-naphthoyl)coumarin, 5,7-dimethoxy-3-(1-naphthoyl)coumarin, 3-benzoylbenzo [f]coumarin, 7-diethylamino-3-thienoyleoumarin, 3-(4-cyanobenzoyl)-5,7-dimethoxycoumarin;

### (4) 2-(-Aroylmethylene)thiazolines

3-methyl-2-benzoylmethylene-β-naphthothiazoline, 3-methyl-2-benzoylmethylenebenzothiazoline, 3- ethyl-2-propionylmethylene-β-naphthothiazoline;

### (5) Anthracenes

9,10-dimethoxyanthracene, 9,10-diethoxyanthracene, 9,10-dimethoxy-2-ethylanthracene;

### (6) Other Carbonyl Compounds

acetophenone, 3-methoxyacetophenone, 4-phenylacetophenone, benzil, 2-acetylnaphthalene, 2-naphthaldehyde, 9,10-naphthoquinone, 9-fluorenone, dibenzosuberone, xanthone, 2,5-bis(4-diethylaminobenzylidene)cyclopentanone, an α-(para-dimethylaminobenzylidene) ketone such as, for example, 2-(4-dimethylaminobenzylidene)indan-1-one or 3-(4-dimethylaminophenyl)-1-mdan-5-ylpropenone, 3-phenylthiophthalimide, N-methyl-3,5-di(ethylthio)phthalimide.

Furthermore, in addition to the sensitizers as described above, sensitizers used in the photopolymerizable compositions described in JP2009-221441A, JP2005-36152A, or the like can be used in combination therewith in the curable composition of the invention.

### (Component B) Photopolymerization Initiator

The curable composition of the invention contains a photopolymerization initiator.

As the photopolymerization initiator, a known polymerization initiator can be used. In the invention, a radical photopolymerization initiator is preferably used.

The photopolymerization initiator used in the curable composition of the invention is a compound that absorbs actinic radiation and generates a polymerization initiating species. Examples of the actinic radiation used for initiating the polymerization include γ-rays, β-rays, an electron beam, ultraviolet rays, visible light, and infrared rays. The wavelength used is not particularly limited, but is preferably a wavelength range of 200 to 500 nm, and more preferably a wavelength range of 200 to 450 nm.

### <Radical Photopolymerization Initiator>

Preferred examples of the radical photopolymerization initiator that can be used in the invention include (a) aromatic ketones, (b) acylphosphine compounds, (c) aromatic onium salt compounds, (d) organic peroxides, (e) thio compounds, (f) hexaarylbiimidazole compounds, (g) ketoxime ester compounds, (h) borate compounds, (i) azinium compounds, (j) metallocene compounds, (k) active ester compounds, (1) compounds having carbon-halogen bonds, (m) azo-based compounds, and the like.

### (a) Aromatic Ketones and (b) Acylphosphine Compounds

Preferred examples of the (a) aromatic ketones that are used in the invention include a compound having a benzophenone skeleton or a thioxanthone skeleton described in "RADIATION CURING IN POLYMER SCIENCE AND TECHNOLOGY" J. P. Fouassier, J. F. Rabek (1993), p. 77-117. For example, the compounds described below can be cited.

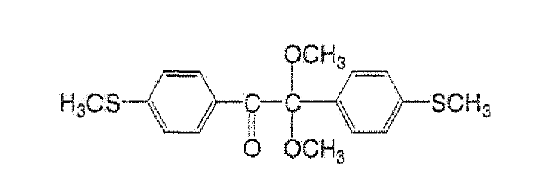

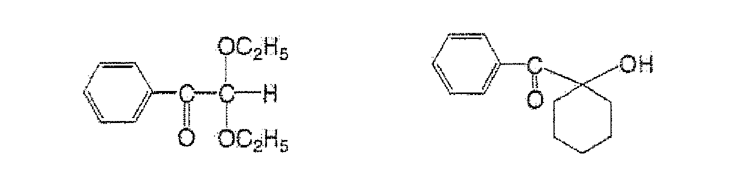

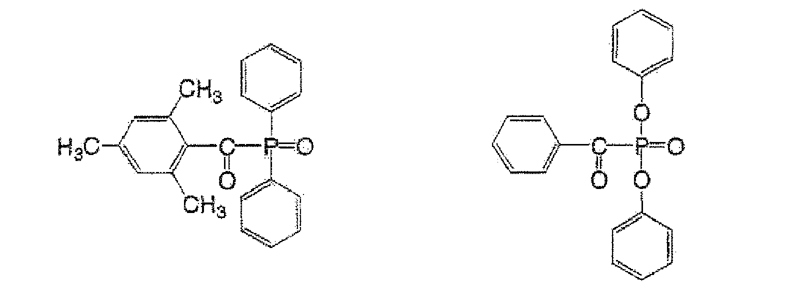

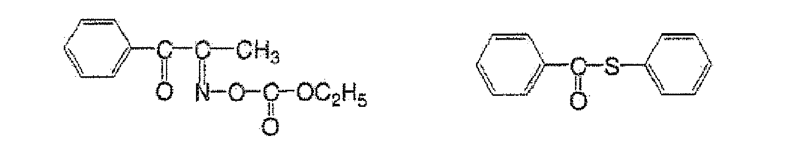

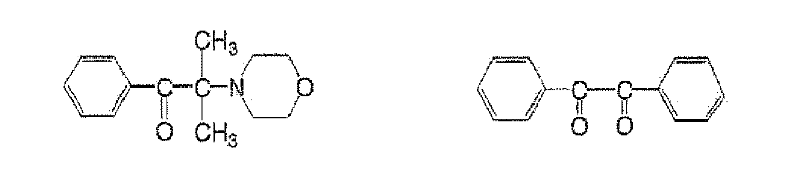

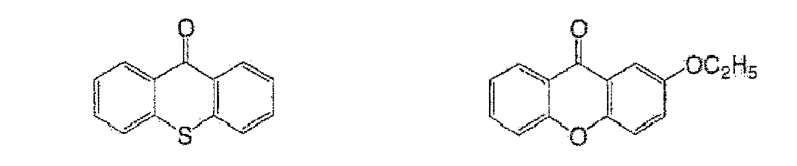

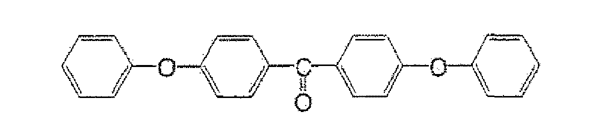

Among these, particularly preferred examples of the (a) aromatic ketones include the following compounds.

An α-thiobenzophenone compound described in JP-S47-6416B and a benzoin ether compound described in JP-S47-3981B, for example, a compound described below can be cited.

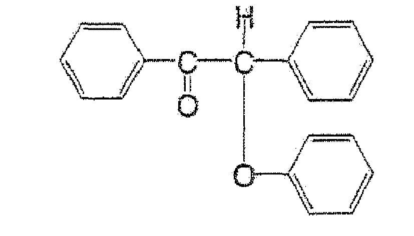

An α-substituted benzoin compound described in JP-S47-22326B, for example, a compound described below can be cited.

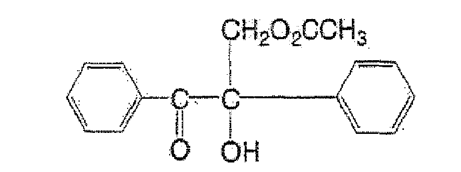

A benzoin derivative described in JP-S47-23664B, an aroylphosphonic acid ester described in JP-S57-30704A, a dialkoxybenzophenone described in JP-S60-26483B, for example, a compound described below can be cited.

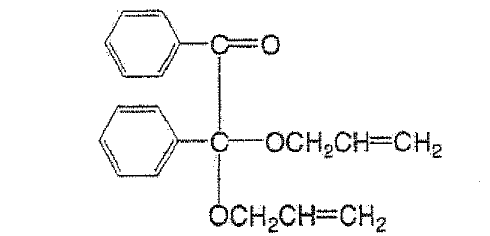

Benzoin ethers described in JP-S60-26403B and JP-S62-81345B, for example, a compound described below can be cited.

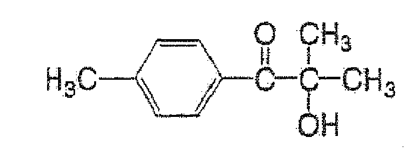

An α-Aminobenzophenone described in JP-H01-34242B, U.S. Pat. No. 4,318,791, and EP No. 0284561, for example, a compound described below can be cited.

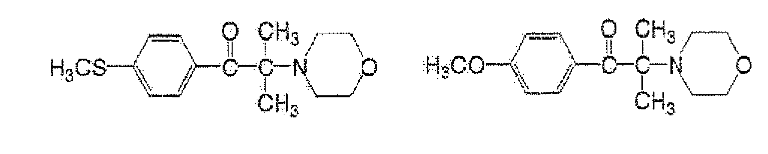

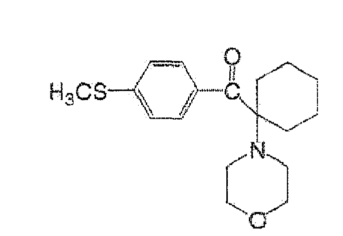

A p-di(dimethylaminobenzoyl)benzene described in JP-1-102-211452A, for example, a compound described below can be cited.

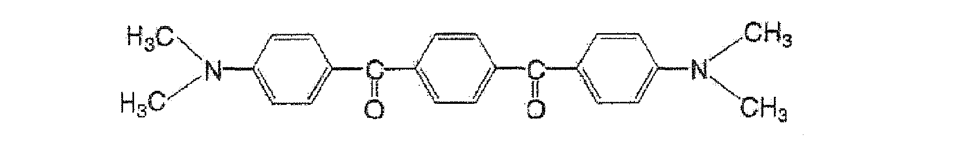

A thio-substituted aromatic ketone described in JP-S61-194062A, for example, a compound described below can be cited.

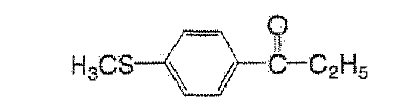

An α-aminoketone-based compound and/or an acylphosphine oxide-based compound is particularly preferred.

The α-aminoketone-based compound is preferably the compound represented by the following formula (1).

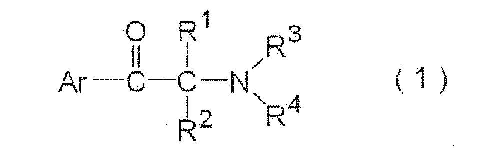

In the formula (1), Ar is a phenyl group substituted with -SR¹³ or -N(R⁷)(R⁸), wherein R¹³ represents a hydrogen atom or an alkyl group.

R¹ and R² each represents an alkyl group having 1 to 8 carbon atoms. R¹ and R² may be bonded to each other to form an alkylene group having 2 to 9 carbon atoms.

and R⁴ each independently represent a hydrogen atom, an alkyl group having 1 to 12 carbon atoms, an alkyl group having 2 to 4 carbon atoms substituted with an alkoxy group having 1 to 4 carbon atoms, or an alkenyl group having 3 to 5 carbon atoms. Here, R³ and R⁴ may be bonded to each other to form an alkylene group having 3 to 7 carbon atoms, the alkylene group may contain -O- or -N(R¹²)- in the alkylene chain, wherein R¹² represents an alkyl group having 1 to 4 carbon atoms.

R⁷ and R⁸ independently represents a hydrogen atom, an alkyl group having 1 to 12 carbon atoms, an alkyl group having 2 to 4 carbon atoms substituted with an alkoxy group having 1 to 4 carbon atoms, or an alkenyl group having 3 to 5 carbon atoms. Here, R⁷ and R⁸ may be bonded to each other to form an alkylene group having 3 to 7 carbon atoms, and the alkylene group may contain -O- or -N(R¹²)- in the alkylene chain. Here, R¹² has the same meaning as above.

Examples of the compounds encompassed by the α-ammoketones include 2-methyl-1-phenyl-2-morpholinopropan-1-one, 2-methyl-1-(4-hexylphenyl)-2-morpholmopropan-1-one, 2-ethyl-2-dimethylammo-1-(4-morpholinophenyl)-butan-1-one, and the like. Furthermore, there are commercially available products such as the IRGACURE series manufactured by Nihon Ciba-Geigy K. K., for example, IRGACURE 907, IRGACURE 379, and the like, which are also included in the compounds encompassed by the α-aminoketones and can be used suitably in the invention.

The acylphosphine oxide-based compound is preferably a compound represented by the following formula (2) or (3).

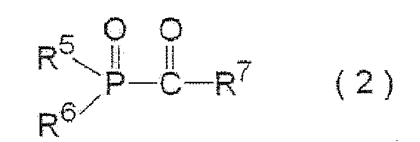

In the formula (2), R⁵ and R⁶ each independently represent an aliphatic group, an aromatic group, an aliphatic oxy group, an aromatic oxy group, or a heterocyclic group, and R⁷ represents an aliphatic group, an aromatic group, or a heterocyclic group.

Examples of the aliphatic group in R⁵, R⁶, or R⁷ include an alkyl group, a substituted alkyl group, an alkenyl group, a substituted alkenyl group, an alkenyl group, a substituted alkynyl group, an aralkyl group, a substituted aralkyl group, and the like, and among these, an alkyl group, a substituted alkyl group, an alkenyl group, a substituted alkenyl group, an aralkyl group, and a substituted aralkyl group are preferred, and an alkyl group and a substituted alkyl group are particularly preferred. Furthermore, the aliphatic group may be a cyclic aliphatic group or an open-chain aliphatic group. The open-chain aliphatic group may be branched.

Examples of the alkyl group include straight-chained, branched, and cyclic alkyl groups, and the number of carbon atoms of the alkyl group is preferably 1 to 30, and more preferably 1 to 20. A preferred number of carbon atoms for the alkyl moiety of the substituted alkyl group is the same as that for the alkyl group. Also, the alkyl group may be either a substituted alkyl group or an unsubstituted alkyl group. Examples of the alkyl group include a methyl group, an ethyl group, a propyl group, a butyl group, a pentyl group, a hexyl group, an octyl group, a 2-ethylhexyl group, a decyl group, a dodecyl group, an octadecyl group, a cyclohexyl group, a cyclopentyl group, a neopentyl group, an isopropyl group, an isobutyl group, and the like.

Examples of a substituent of the substituted alkyl group include a carboxyl group, a sulfo group, a cyano group, a halogen atom (for example, a fluorine atom, a chlorine atom, or a bromine atom), a hydroxy group, an alkoxycarbonyl group having no more than 30 carbon atoms (for example, a methoxycarbonyl group, an ethoxycarbonyl group, and a benzyloxycarbonyl group), an alkylsulfonylaminocarbonyl group having no more than 30 carbon atoms, an arylsulfonylaminocarbonyl group, an alkylsulfonyl group, an arylsulfonyl group, an acylaminosulfonyl group having no more than 30 carbon atoms, an alkoxy group having no more than 30 carbon atoms (for example, a methoxy group, an ethoxy group, a benzyloxy group, a phenoxyethoxy group, a phenethyloxy group, and the like), an alkylthio group having no more than 30 carbon atoms (for example, a methylthio group, an ethylthio group, a methylthioethylthioethyl group, and the like), an aryloxy group having no more than 30 carbon atoms (for example, a phenoxy group, a p-tolyloxy group, a 1-naphthoxy group, a 2-naphthoxy group, and the like), a nitro group, an alkyl group having no more than 30 carbon atoms, an alkoxycarbonyloxy group, an aryloxycarbonyloxy group, an acyloxy group having no more than 30 carbon atoms (for example, an acetyloxy group, a propionyloxy group, and the like), an acyl group having no more than 30 carbon atoms (for example, an acetyl group, a propionyl group, a benzoyl group, and the like), a carbamoyl group (for example, a carbamoyl group, an N.N-dimethylcarbamoyl group, a morpholinocarbonyl group, a piperidinocarbonyl group, and the like), a sulfamoyl group (for example, a sulfamoyl group, an N,N-dimethylsulfamoyl group, a morpholinosulfonyl group, a piperidinosulfonyl group, and the like), a substituted amino group (for example, an amino group, an alkylamino group, a dialkylamino group, an arylamino group, a diarylamino group, an acylamino group, and the like), a substituted ureido group, a substituted phosphono group, a heterocyclic group, and the like. Here, the carboxyl group, the sulfo group, the hydroxy group, and the phosphono group may be in salt form. In this case, as a cation forming the salt, preferred examples thereof include an organic cation (for example, primary to quaternary ammonium), a transition metal coordination complex cation (a compound described in JP2791143, and the like), and a metal cation (for example, Na⁺, K⁺, Li⁺, Ag⁺, Fe²⁺, Fe³⁺, Cu⁺, Cu²⁺, Zn²⁺, Al³⁺, and the like).

Examples of the alkenyl group include straight-chained, branched, or cyclic alkenyl groups, and the number of carbon atoms of the alkenyl group is preferably 2 to 30, and more preferably 2 to 20. Furthermore, the alkenyl group may be either a substituent-containing substituted alkenyl group or an unsubstituted alkenyl group, and a preferred range for the number of carbon atoms of the alkenyl moiety of the substituted alkenyl group is the same as for the alkenyl group. Examples of the substituent of the substituted alkenyl group include the same substituents as for the substituted alkyl group, and an aryl group having no more than 30 carbon atoms (for example, a phenyl group, a 4-chlorophenyl group, a 4-methylphenyl group, an α-naphthyl group, and the like).

Examples of the alkynyl group include straight-chained, branched, or cyclic alkynyl groups, and the number of carbon atoms of the alkynyl group is preferably 2 to 30, and more preferably 2 to 20. Furthermore, the alkynyl group may be either a substituent-containing substituted alkynyl group or an unsubstituted alkynyl group, and a preferred range for the number of carbon atoms of the alkynyl moiety of the substituted alkynyl group is the same as for the alkynyl group. Examples of the substituent of the substituted alkynyl group include the same substituents as for the alkenyl group.

Examples of the aralkyl group include straight-chained, branched, or cyclic aralkyl groups, and the number of carbon atoms of the aralkyl group is preferably 7 to 35, and more preferably 7 to 25. Furthermore, the aralkyl group may be either a substituent-containing substituted aralkyl group or an unsubstituted aralkyl group, and a preferred range for the number of carbon atoms of the aralkyl moiety of the substituted aralkyl group is the same as for the aralkyl group. Examples of the substituent of the substituted aralkyl group include the same substituents as for the alkenyl group.

Examples of the aromatic group represented by R⁵, R⁶, or R⁷ include an aryl group and a substituted aryl group. The number of carbon atoms of the aryl group is preferably 6 to 30, and more preferably 6 to 20. A preferred range for the number of carbon atoms of the aryl moiety of the substituted aryl group is the same as for the aryl group. Examples of the aryl group include a phenyl group, an α-naphthyl group, a β-naphthyl group, and the like. Examples of a substituent of the substituted aryl group include the same substituents as for the alkenyl group.

Examples of the aliphatic oxy group represented by R⁵ or R⁶ include a substituted or unsubstituted alkoxy group, an alkenyloxy group, an group, an aralkyloxy group, and the like, a substituted or unsubstituted alkoxy group having 1 to 30 carbon atoms is preferred, and examples thereof include a methoxy group, an ethoxy group, a butoxy group, an octyloxy group, a phenoxyethoxy group, and the like. However, the aliphatic oxy group is not limited thereto.

Examples of the aromatic oxy group represented by R⁵ or R⁶ include a substituted or unsubstituted aryloxy group; a substituted or unsubstituted aryloxy group having 6 to 30 carbon atoms is preferred, and examples thereof include a phenoxy group, a methylphenyloxy group, a chlorophenyloxy group, a methoxyphenyloxy group, an octyloxyphenyloxy group, and the like. However, the aromatic oxy group is not limited thereto.

Preferred examples of the heterocyclic group represented by R⁵, R⁶, or R⁷ include N, O, or S atom-containing heterocyclic groups, and examples thereof include a pyridyl group, a furyl group, a thienyl group, an imidazolyl group, a pyrrolyl group, and the like.

Furthermore, the compound represented by the formula (2) may be bonded, via R⁵, R⁶, or R⁷, to another compound represented by the formula (2) to thus form a multimer having 2 or more acylphosphine structures.

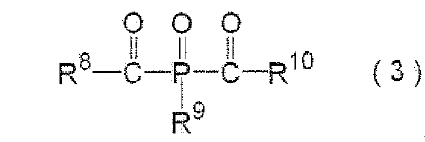

R⁸ and R¹⁰ in the formula (3) each independently represent an alkyl group, an aryl group, or a heterocyclic group, and R⁹ represents an alkyl group, an aryl groups, an alkoxy group, an aryloxy group, or a heterocyclic group. The alkyl group, the aryl group, the heterocyclic group, the alkoxy group, and the aryloxy group represented by R⁸, R⁹, or R¹⁰ may have a substituent, and examples of the substituent include the same substituents as for the formula (2).

The alkyl group, the aryl group, the heterocyclic group, the alkoxy group, and the aryloxy group in the formula (3) have the same meanings as for the formula (2) above.

Furthermore, the compound represented by the formula (3) may be bonded, via R⁸, R⁹, or R¹⁰ to another compound represented by the formula (3) to form a multimer having 2 or more acylphosphine structures.

Moreover, examples of the acylphosphine oxide-based compound represented by the formula (2) or (3) include the compounds described in JP-563-407998, JP-H05-29234B, JP-H10-95788A, JP-H10-29997A, or the like.

Examples of the acylphosphine oxide-based compound include the compound described below (exemplified Compounds (P-1) to (P-26)), but in the invention, the acylphosphine oxide-based compound is not limited thereto.

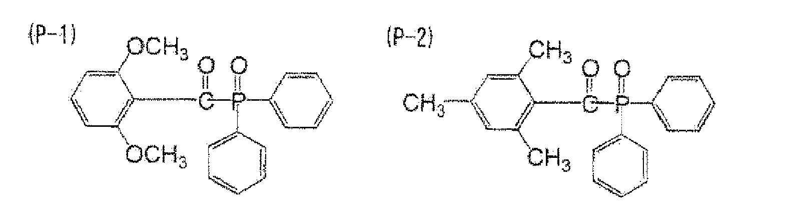

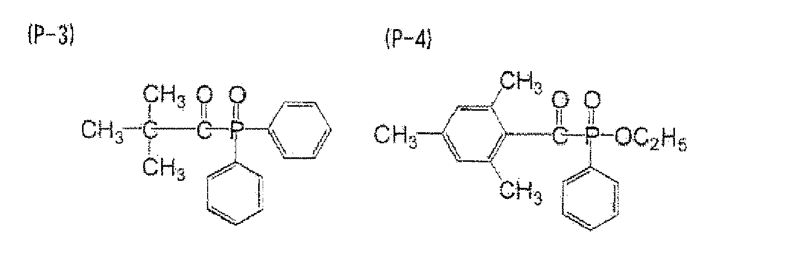

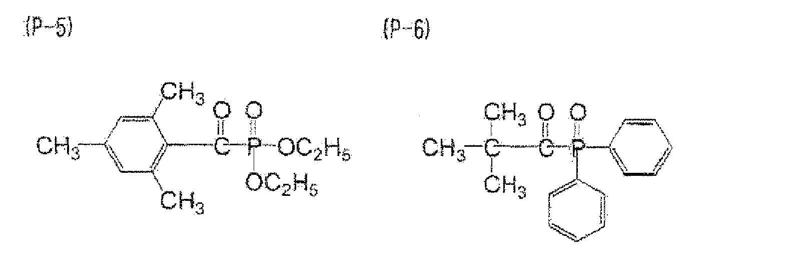

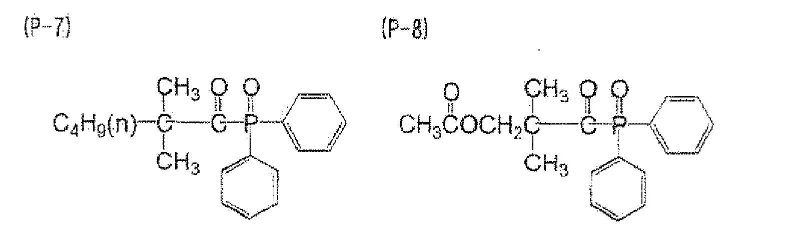

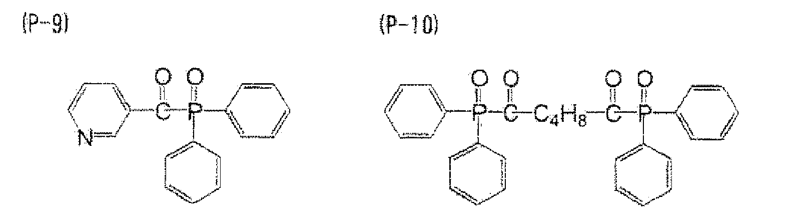

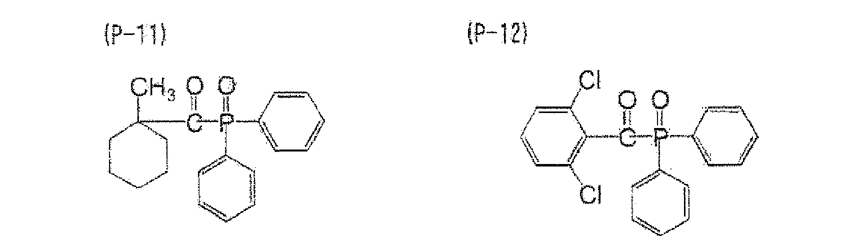

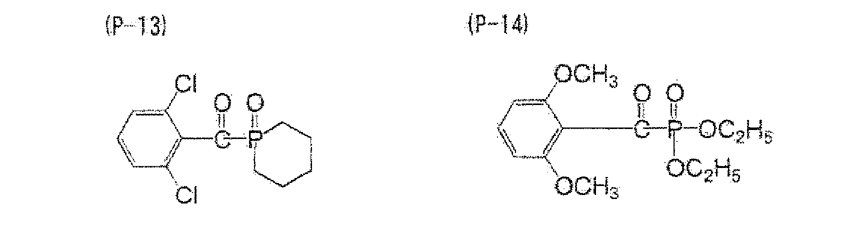

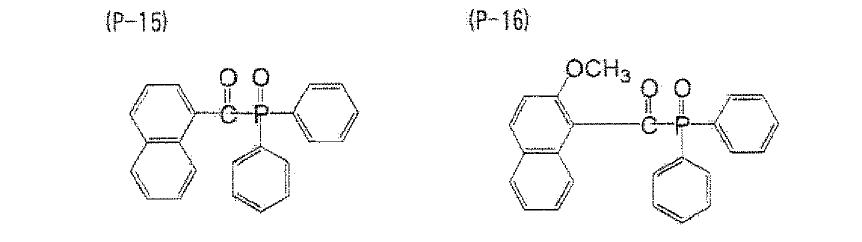

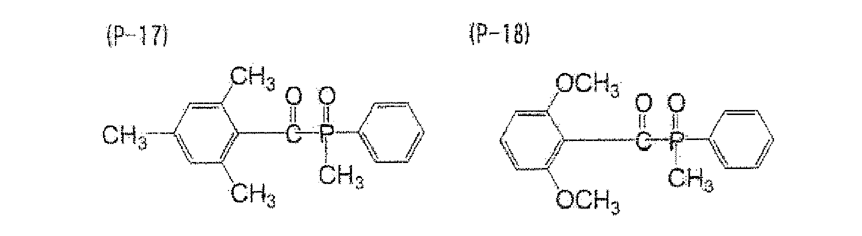

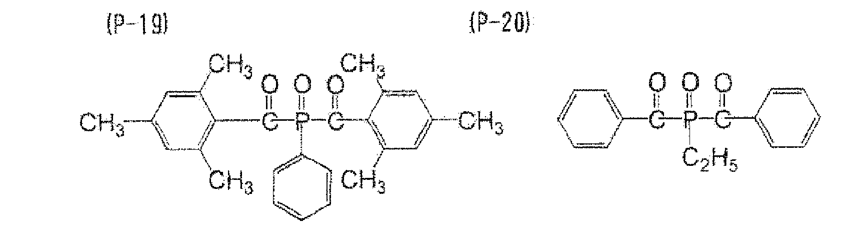

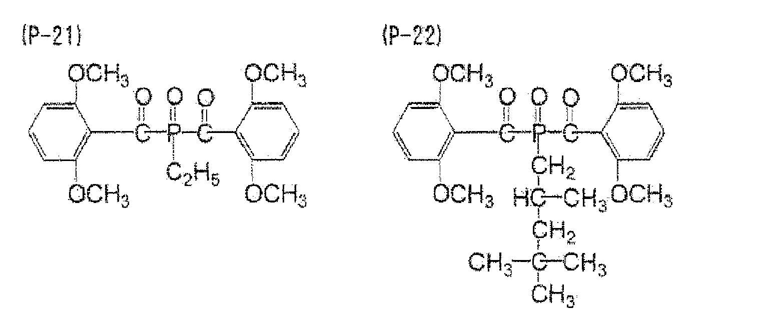

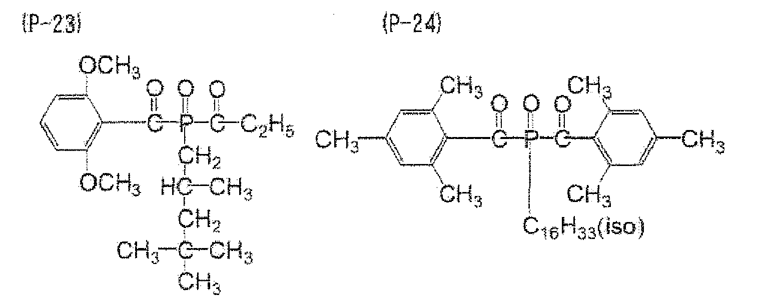

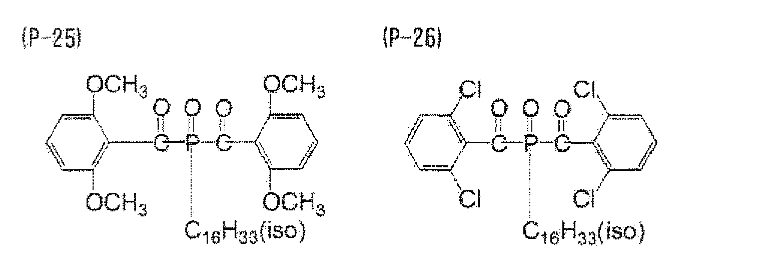

Furthermore, among the exemplified compounds above, for example, (P-2): 2,4,6-trimethylbenzoyldiphenylphosphine oxide is available under the product name DAROCUR TPO (manufactured by Ciba Specialty Chemicals Inc.), and (P-19): bis(2,4,6-trimethylbenzoyl)phenylphosphine oxide is available under the product name IRGACURE 819 (manufactured by Ciba Specialty Chemicals Inc.).

### (c) Aromatic Onium Salt Compound

Preferred examples of the (c) aromatic onium salt compound used as a radical initiator in the invention include the compounds represented by the following formulae (1) to (3).

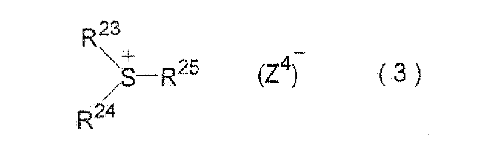

In the formula (1), Ar¹ and Ar² each independently represent an aryl group having not more than 20 carbon atoms, which may have a substituent. Preferred examples of the substituents when the aryl group has a substituent include a halogen atom, a nitro group, an alkyl group having not more than 12 carbon atoms, an alkoxy group having not more than 12 carbon atoms, or an aryoxyl group having not more than 12 carbon atoms. (Z²)⁻ represents a counter ion selected from the group consisting of a halide ion, a perchlorate ion, a carboxylate ion, tetrafluoroborate ion, a hexafluorophosphate ion, and a sulfonate ion, and preferred examples thereof include a perchlorate ion, a hexafluorophosphate ion, and an arylsulfonate ion.

In the formula (2), Ar³ represents an aryl group having not more than 20 carbon atoms, which may have a substituent. Preferred examples of the substituent include a halogen atom, a nitre group, an alkyl group having not more than 12 carbon atoms, an alkoxy group having not more than 12 carbon atoms, an aryoxyl group having not more than 12 carbon atoms, an alkylamino group having not more than 12 carbon atoms, a dialkylamino group having not more than 12 carbon atoms, an arylamino group having not more than 12 carbon atoms, or a diaryl group having not more than 12 carbon atoms. (Z³)⁻ represents a counter ion having the same meaning as defined for (Z²)⁻.

In the formula (3), R²³, R²⁴, and R²⁵ may be the same as or different from each other and represent a hydrocarbon group having not more than 20 carbon atoms, which may have a substituent Preferred examples of the substituent include a halogen atom, a nitro group, an alkyl group having not more than 12 carbon atoms, an alkoxy group having not more than 12 carbon atoms, or an aryoxyl group having not more than 12 carbon atoms. (Z⁴)⁻ represents a counter ion having the same meaning as defined for (Z²)⁻.

Specific examples of the onium salt which can be preferably used in the invention include those described in Paragraph Nos. [0030] to [0033] of JP2001-133969A and Paragraph Nos. [0015] to [0046] of JP2001-343742A, specific aromatic sulfonium salt compounds described in JP2002-148790A, JP2001-343742A, JP2002-6482A, JP2002-H6539A, and JP2004-102031A, and the like.

The onium salt used in the invention preferably has a maximum absorption wavelength of 400 nm or less, and more preferably 360 nm or less. By using the absorption wavelength in the ultraviolet ray region, the handling can be performed under a white light lamp,

### (d) Organic Peroxide

Preferred examples of the (d) organic peroxide which is used as the radical initiator in the invention include almost all organic compounds having at least one oxygen-oxygen bond in the molecules thereof which include methyl ethyl ketone peroxide, cyclohexanone peroxide, 3,3,5-trimethylcyclohexanone peroxide, methylcyelohexanone peroxide, acetylacetone peroxide, 1,1-bis(tert-butylperoxy)-3,3,5-trimethylcyclohexane, 1,1-bis(tert-butylperoxy)cyclohexane, 2,2-bis(tert-butylperoxy)butane, tert-butylhydroperoxide, cumene hydroperoxide, diisopropylbenzene hydroperoxide, paramethane hydroperoxide, 2,5-dimethylhexane-2,5-dihydroperoxide, 1,1,3,3-tetramethylbutyl hydroperoxide, di-tert-butyl peroxide, tert-butyl cumyl peroxide, dicumyl peroxide, bis(tert-butylperoxyisopropyl)benzene, 2,3-dimethyl-2,5-di(tert-butylperoxy)hexane, 2,5-xanoyl peroxide, succinic peroxide, benzoyl peroxide, 2,4-dichlorobenzoyl peroxide, methatoluoyl peroxide, diisopropylperoxy dicarbonate, di-2-ethylhexylperoxy dicarbonate, di-2-ethoxyethylperoxy dicarbonate, dimethoxyisopropylperoxy carbonate, di(3-methyl-3-methoxybutyl)peroxy dicarbonate, tert-butylperoxy acetate, tert-butylperoxy pivalate, tert-butylperoxy neodecanoate, tert-butylperoxy octanoate, tert-butylperoxy-3,3,5-trimethylhexanoate, tert-butylperoxy laurate, tertiary carbonate, 3,3',4,4'-tetra(tert-butylperoxycarbonyl)benzophenone, 3,3',4,4'-tetra(tert-amylperoxycarbonyl)benzophenone, 3.3',4,4'-tetra(tert-hexylperoxycarbonyl)benzophenone, 3,3',4,4'-tetra(tert-octylperoxycarbonyl)benzophenone, 3,3',4,4'-tetra(cumylperoxycarbonyl)benzophenone, 3,3',4,4'-tetra(p-isopropylcumylperoxycarbonyl)benzophenone, carbonyl di(tert-butylperoxydihydrogen diphthalate), carbonyl di(tert-hexylperoxydihydrogen diphthalate), and the like.

Among those, peroxy ester compounds such as 3,3',4,4'-tetra(tert-butylperoxycarbonyl)benzophenone, 3,3',4,4'-tetra(tert-amylperoxycarbonyl)benzophenone, 3,3',4,4'-tetra(tert-hexylperoxy-carbonyl)benzophenone, 3,3',4,4'-tetra(tert-octylpetoxycarbonyl)benzophenone, 3,3',4,4'-tetra(cumylperxoxycarbonyl)benzophenone, 3,3',4,4'-tetra(p-isopropylcumylperoxycarbonyl)benzophenone, di-tert-butyldiperoxy isophthalate, and the like are preferred.

### (e) Thio Compound

Examples of the (e) thio compound which is preferred as the radical initiator used in the invention include compounds having a structure represented by the following formula (4):

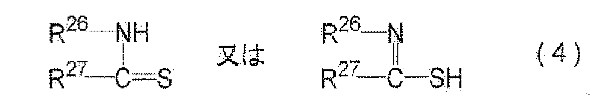

or
(wherein R²⁶ represents an alkyl group, an aryl group or a substituted aryl group. R²⁷ represents a hydrogen atom or an alkyl group. Alternatively. R²⁶ and R²⁷ represent non-metallic atomic groups necessary for being combined with each other to form a 5- to 7-membered ring which may contain a hetero atom selected from an oxygen atom, a sulfur atom, and a nitrogen atom).

The alkyl group in the formula (4) preferably has 1 to 4 carbon atoms. Further, the aryl group is preferably one having 6 to 10 carbon atoms, such as a phenyl group and a naphthyl group, and examples of the substituted aryl group include the above-described aryl groups substituted with a halogen atom such as a chlorine atom, an alkyl group such as a methyl group, or an alkoxy group such as a methoxy group and an methoxy group. R²⁷ is preferably an alkyl group having 1 to 4 carbon atom. Specific examples of the thio compound represented by the formula (4) include the following compounds.

| No. | R²⁶ | R²⁷ |
|---|---|---|
| 1 | -H | -H |
| 2 | -H | -CH₃ |
| 3 | -CH₃ | -H |
| 4 | -CH₃ | -CH₃ |
| 5 | -C₆H₅ | -C₂H₅ |
| 6 | -C₆H₅ | -C₄H₉ |
| 7 | -C₆H₄Cl | -CH₃ |
| 8 | -C₆H₄Cl | -C₄H₉ |
| 9 | -C₆H₄-CH₃ | -C₄H₉ |
| 10 | -C₆H₄-OCH₃ | -CH₃ |
| 11 | -C₅H₄-OCH₃ | -C₂H₅ |
| 12 | -C₆H₄-OC₂H₅ | -CH₃ |
| 13 | -C₆H₄-OC₂H₅ | -C₂H₅ |
| 14 | -C₆H₄-OCH₃ | -C₄H₉ |
| 15 | -(CH₂)₂- | |
| 16 | -(CH₂)₂-S- | |
| 17 | -CH(CH₃)-CH₂-S- | |
| 18 | -CH₂-CH(CH₃) -S- | |
| 19 | -C(CH₃)₂-CH₂-S- | |
| 20 | -CH₂-C(CH₃)₂-S- | |
| 21 | -(CH₂)₂-O- | |
| 22 | -CH(CH₃)-CH₂-O- | |
| 23 | -C(CH₃)₂-CH₂-O- | |
| 24 | -CH=CH-N(CH₃)- | |
| 25 | -(CH₂)₃-S- | |
| 26 | -(CH₂)₂-CH(CH₃)-S- | |
| 27 | -(CH₂)₃-O- | |
| 28 | -(CH₂)₅- | |
| 29 | -C₆H₄-O- | |
| 30 | -N=C(SCH₃)-S- | |
| 31 | -C₆H₄-NH- | |
| 32 | 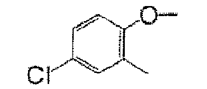 | |

### (f) Hexaarylbiimidazole Compound

Preferred examples of the (f) hexaarylbiimidazole compound as the radical initiator which is used in the invention include lophine dimers described in JP-S45-03737713 and JP-S44-086516B, for example, 2,2'-bis(o-chlorophenyl)-4,4',5,5'-tetraphenylbimidazole, 2,2-bis(o-bromophenyl)-4,4',3,3'-tetraphenylbiimidazole, 2,2' -bis(o,p-dichlorophenyl)-4,4',5,5'-tetraphenylbiimidazole, 2,2'-bis(o-chlorophenyl)-4,4',5,5'-tetra(m-methoxyphenyl) biimidazole, 2,2'-bis(o,o'-dichlorophenyl)-4,4',5,5'-tetraphenylbiimidazole, 2,2'-bis(o-nitrophenyl)-4,4',5,5'tetraphenylbiimidazole, 2,2'-bis(o-methylphenyl)-4,4',5,5'-tetraphenylbiimidazole, 2,2'-'bis(o-trifluorophenyl)-4,4',5,5'-tetraphenylbiimidazole, and the like.

### (g) Ketoxime Ester Compound

Examples of the (g) ketoxime ester compound which is preferred as the radical initiator used in the invention include 3-benzoyloxyiminobutan-2-one, 3-acetoxyiminobutan-2-one, 3-propionyloxyiminobutan-2-one, 3-acestoxyiminopentan-3-one, 2-acetoxylmino-1-phenylpropan- 1-one, 2-benzoylosyimino-1-phenylpropan- 1-one, 3-p-toluenesulfonyloxyiminobutan-2-one, 2'ethoxycarbonyloxyimino-1-phenylpropan-1-one, and the like.

### (h) Borate Compound

Examples of the (h) borate compound which is preferred as the radical initiator used in the invention include a compound represented by the following formula (5).

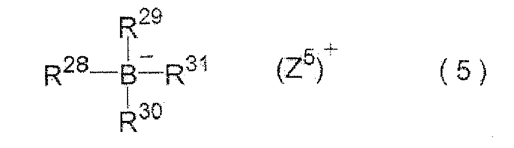

(wherein R²⁸, R²⁹, R³⁰, and R³¹ may be the same as or different from each other and each represents a substituted or unsubstituted alkyl group, a substituted or unsubstituted aryl group, a substituted or unsubstituted alkenyl group, a substituted or unsubstituted alkynyl group, or a substituted or unsubstituted heterocyclic group, or at least two of R²⁸ R²⁹, R³⁰, and R³¹ may be combined with each other to form a cyclic structure, provided that at least one of R²⁸, R²⁹, R³⁰, and R³¹ represents a substituted or unsubstituted alkyl group. (Z⁵)⁺ represents an alkali metal cation or a quaternary ammonium cation).

The alkyl groups of R²⁸ to R³¹ include straight-chain, branched, and cyclic alkyl groups, and those having 1 to 18 carbon atoms are preferred. Specific examples thereof include methyl, ethyl, propyl, isopropyl, butyl, pentyl, hexyl, octyl, stearyl, cyclobutyl, cyclopentyl, cyclohexyl, and the like. In addition, the substituted alkyl groups include the above-described alkyl group containing, as a substituent, a halogen atom (for example, -Cl, -Br, and the like), a cyano group, a nitro group, an aryl group (preferably a phenyl group), a hydroxy group, -COOR³² (wherein R³² represents a hydrogen atom or an alkyl or aryl group having 1 to 14 carbon atoms), -OCOR³³, or -OR³⁴ (wherein R³³ and R³⁴ represent an alkyl or aryl group having 1 to 14 carbon atoms), and a group represented by the following formula.

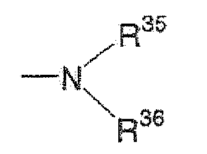

(wherein R³⁵ and R³⁶ each independently represent a hydrogen atom, or an alkyl or aryl group having 1 to 14 carbon atoms).

The aryl groups of R²⁸ to R³¹ above include monocyclic to tricyclic aryl groups such as a phenyl group, a naphthyl group, and the like, and the substituted aryl groups include the aryl groups above that have additionally the substituent group for the substituted alkyl group described above or an alkyl group having 1 to 14 carbon atoms. The alkenyl groups of R²⁸ to R³¹ include straight-chain, branched and cyclic alkenyl groups having 2 to 18 carbon atoms, and the substituent groups of the substituted alkynyl group include those described as the substituent groups of the substituted alkyl group. The alkynyl groups of R²⁸ to R³¹ include straight-chain or branched-chain alkynyl groups having 2 to 28 carbon atoms, and the substituent groups of the substituted alkynyl group include those described as the substituent groups of the substituted alkyl group. Further, the heterocyclic groups of R²⁸ to R³¹ include heterocyclic groups of 5- or higher membered rings, preferably 5- to 7-membered rings, containing at least one of N, S, and O atoms, and the heterocyclic group may be a fused ring. The heterocyclic groups may have additionally one of the groups described as the substituent groups of the substituted aryl group described above as their substituent group. Specific examples of the compounds represented by Formula (5) include the compounds described in U.S. Pat. Nos. 3,567,453 and 4,343,891, and E.P. Nos. 109772 and 109773, and the compounds described below.

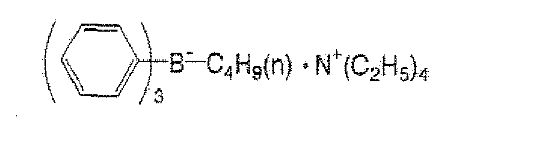

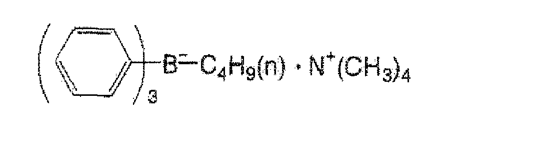

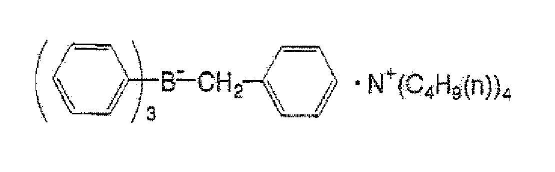

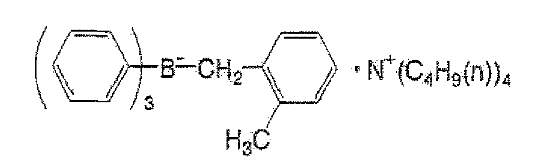

### (i) Azinium Compounds

Examples of the (i) azinium compound which is preferred as the radical initiator used in the invention include compounds having N-O bonds described in JP-S63-138345A, JP-S63-142345A, JP-S63-142346A, JP-S63-143537A, and JP-S46-042363B.

### (i) Metallocene Compound

Examples of the (i) metallocene compound which is preferred as the radical initiator used in the invention include titanocene compounds described in JP-S59-152396A, JP-S61-15197A, JP-S63-41484A, JP-H02-000249A, and JP-H02-004705A, and iron-arene complexes described in JP-H01-304453A and JP-H01-152109A.

Specific examples of the titanocene compound include dicyclopentadienyl-Ti-dichloride, dicyclopentadienyl-Ti-bis-phenyl, dicyclopentadienyl-Ti-bis-2,3,4,5,6-pentafluorophen-1-yl, dicyclopentadienyl-Ti-bis-2,3,5,6-tetrafluorophen-1-yl, dicyclopentadienyl-Ti-bis-2,4,6-trifluorophen-1-yl, dicyelopetitadienyl-Ti-2,6-difuorophen-1-yl, dicyclopentadienyl-Ti-bis-2,4-diflurophen-1-yl, dimethylcyctopcntadienyl-Ti-bis-2,3,4,5,6-pentafluorophen-1-yl, dimethylcyclopentadienyl-Ti-bis-2,3,5 ,6-tetrafluorophen-1-yl, dimethylcyclopentadienyl-Ti-bis-2,4-difluorophen-1-yl, bis(cyclopentadienyl)-bis(2,6-difluoro-3-(pyr-1-yl)phenyl)titanium, bis(cyclopentadienyl)bis [2,6-difluoro-3-(methylsulfonamide)phenyl]titanium bis(cyclopentadienyl)bis [2,6-difluoro-3-(N-butylbiaroyl-amino)phenyl]titanium,

bis(cyclopentadienyl)bis[2,6-difluoro-3-(N-butyl-(4-chorobenzoyl)aimno)phenyl]titanium, bis(cyclopentadienyl)bis[2,6-difluoro-3-(N-benzyl-2,2-dimethylpentanoylamino)phenyl]titani um,
bis(cyclcapentadienyl)bis[2,6-difluoro-3-(N-(2-ethylhexyl)-4-tolylsulfonyl)amino]phenyl]titani um, bis(cyclopentadienyl)bis[2,6-difluoro-3-(N-(3-oxaheptyl)benzoylamino)phenyl]titanium, bis(cyclopentadienyl)bis[2,6-difluoro-3-(N-(3,6-dioxadecyl)benzoylamino)phenyl]titanium, bis(cyclopentadienyl)bis[2,6-difluoro-3-(trifluoromethylsulfonyl)amino]phenyl]titanium, bis(cyclopentadienyl)bis[2,6-difluoro-3-(trifluoroacetylamino)phenyl]titanium,

bis(cyclopentadienyl)bis[2,6-difluoro-3-(2-chlorobenzoyl)aimno]phenyl]titanium, bis(cyclopentadienyl)bis[2,6-difluoro-3-(4-chlorobenzoyl)amino]phenyl]titanium, bis(cyclopetitadienyl)bis[2,6-difluoro-3-(N-(3.6-dioxadecyl)-2,2-dimethylpentanoylamino)phe nyl]titanium, bis(cyclopentadienyl)bis[2,6-difluoro-3-(N-(3,7-dimethyl-7-methaxyoctyl)benzoylamino)phen yl]titanium, bis(cyclopentadienyl)bis[2,6-difluoro-3-(N-cyclohexylbenzoylamino)phenyl]titanium, and the like.

### (k) Active Ester Compound

Preferred examples of the (k) active ester compound which is preferred as the radical initiator used in the invention include imidosulfonate compounds described in JP-S6 2-006223B, and active sulfonates described in JP-S63-14340B and JP-S59-174831A.

### (1) Compound Having a Carbon-Halogen Bond

Examples of the (1) compound having a carbon-halogen bond which is preferred as the radical initiator used in the invention include the compounds represented by the following formulae (6) to (12):

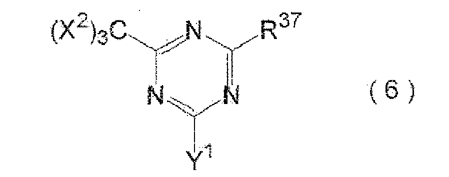

(wherein X² represents a halogen, atom, Y¹ represents -C(X²)₃, -NH₂, -NHR³⁸, -NR³⁸, or -OR³⁸, in which R³⁸ represents an alkyl group, a substituted alkyl group, an aryl group, or a substituted aryl group, and R³⁷ represents -C(X²)₃, an alkyl group, a substituted alkyl group, an aryl group, a substituted aryl group, or a substituted alkenyl group).

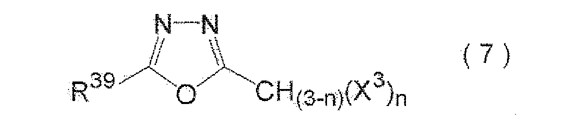

(wherein R³⁹ represents an alkyl group, a substituted alkyl group, an alkenyl group, a substituted alkenyl group, an aryl group, a substituted aryl group, a halogen atom, an alkoxy group, a substituted alkoxyl group, a nitro group or a cyano group, X³ represents a halogen atom, and n represents an integer of 1 to 3).

R⁴⁰-- Z⁶-CH₍₂₋ₘ₎(X³)ₘR⁴¹ (8)

(wherein R⁴⁰ represents an aryl group or a substituted aryl group, R⁴¹ represents a group shown below or a halogen, Z⁶ represents -C(=O)-, -C(=S)-, or -SO₂₋, X³ represents a halogen atom, and m represents I or 2).

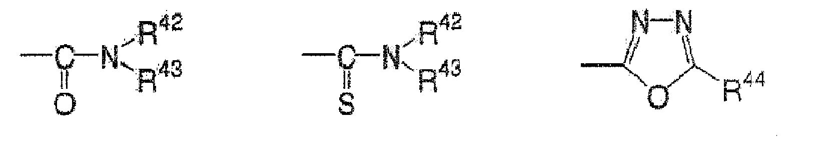

(R⁴² and R⁴³ represent an alkyl group, a substituted alkyl group, an alkenyl group, a substituted alkenyl group, an aryl group or a substituted aryl group, and R⁴⁴ has the same meaning as defined for R³⁸ in the formula (6)).

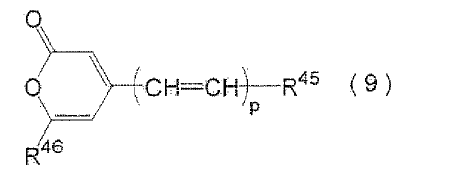

(wherein R⁴⁵ represents an aryl group or heterocyclic group, which may be substituted. R⁴⁶ represents a trihaloalkyl group or trihaloalkenyl group having 1 to 3 carbon atoms, and p represents 1, 2, or 3).

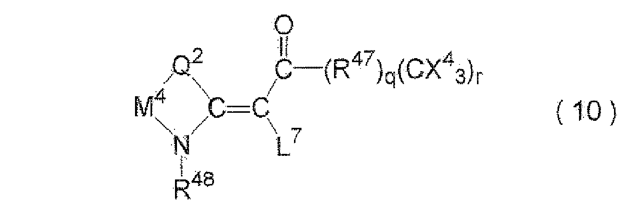

(in the formula (10), which represents a carbonylmethylene heterocyclic compound having a trihalogenomethyl group, L⁷ represents a hydrogen atom or a group represented by the formula -CO-(R⁴⁷)q(C(X⁴)₃)ᵣ, Q² represents a sulfur atom, a selenium atom, an oxygen atom, a dialkylmelhylene group, an alken-1,2-ylene group, a 1.2-phenylene group or -N-R, M⁴ represents a substituted or unsubstituted alkylene group, a substituted or unsubstituted alkenylene group or a 1,2-arylene group, R⁴⁸ represents an alkyl group, an aralkyl group or an alkoxyalkyl group, R⁴⁷ represents a divalent carbocyclic or heterocyclic aromatic group, X⁴ represents a chlorine atom, a bromine atom, or an iodine atom, and q=0 and r=1 or q=1 and r=1 or 2).

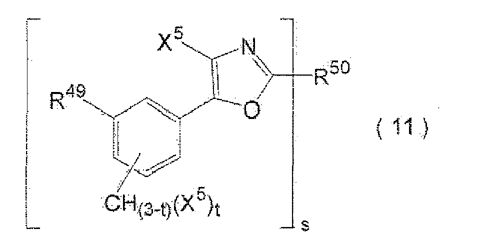

(in the formula (11), which represents a 4-habgeno-5-(halogcnomethylphenyl)oxazole derivative, X⁵ represents a halogen atom, t represents an integer of 1 to 3, s represents an integer of 1 to 4, R⁴⁹ represents a hydrogen atom or -CH(₃₋ₜ)X⁵ₜ and R⁵⁰ represents an s-valent unsaturated organic group, which may be substituted).

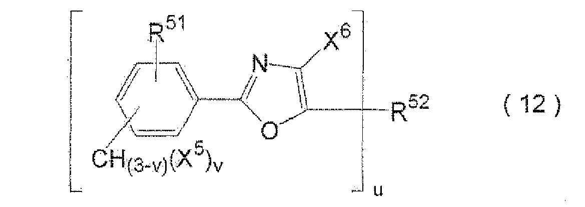

(in the formula (12), which represents a 2-(halogenomethylphenyl)-4-halogenooxazole derivative, X⁶ represents a halogen atom, v represents an integer of 1 to 3, u represents an integer of 1 to 4, R⁵¹ represents a hydrogen atom or CH₍₃₋ᵥ₎X⁶ᵥ, and R⁵² represents a u-valent unsaturated organic group, which may be substituted).

Specific examples of the compound having a carbon-halogen bond include the compounds described by Wakabayashi et al. in Bull. Chem. Soe. Japan, 42, 2924 (1969), for example, 2-Phenyl-4,5-bis(trichlorothyl)-s-triazine, 2-(p-chloropheiiyl)-4,6-bis(trichloromethyl)-s-triazine, 2-(p-tolyl)-4,6-bis(trichloromethyl)-s-triazine, 2-(p-methoxyphenyl)-4,6-bis(trichloromethyl)-s-triazine, 2-(2',4'-dichlorophenyl)-4,6-bis(thchloromethyl)-s-triazme, 2,4,6-tris(trichloromethyl)-s-triazine, 2-methyl-4,6-bis(trchloromethyl)-s-triazine, 2-n-nonyl-4,6-bis(trichloromethyl)-s-triazine, 2-(α,α,β-trichloroethyl)-4,6-bis(trichloromethyl)-s-triazine, and the like. Other examples thereof include the compounds as described in GB Patent No. 1388492, for example, 2-styryl-4,6-bis(trichloromethyl)-s-triazine, 2-(p-methylstyryl)-4,6-bis(trichloromethyl)-s-triazine, 2-(p-methoxystyryl)-4,6-bis(trichloromethyl)-s-triazine, 2-(p-methoxystyryl)-4-amino-6-trichloromethyl-s-triazine, and the like, the compounds described in JP-S53-133428A, for example, 2-(4-methoxynaphtho-1-yl)-4,6-bis(trichloromethyl)-s-triazine, 2-(4-etboxvnapl-itho- I -yl)-4.6-bis(trichloromethyl)-s-triazine, 2-[4-(2-ethoxyethyl)-naphtho-1-yl]-4,6-bis(trichloromethyl)-s-triazine, 2-(4,7-dimethioxynaphitho-1-yl)-4,6-bis(trichloromethyl)-s-triazine), 2-(acenaphtho-5-yl)-4,6-bis(trichloromethyl)-s-triazine, and the like, and the compounds as described in D.E. Pat. No. 3,337,024, for example, the compounds described below and the like.

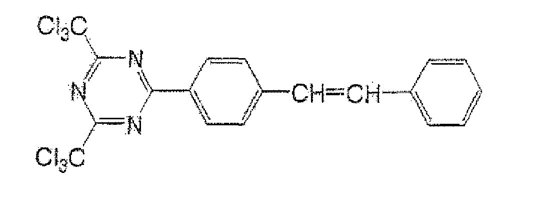

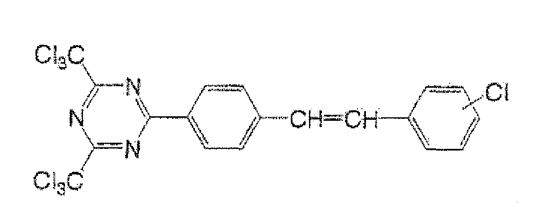

Furthermore:, other examples thereof include the compounds described by F. C. Schaefer et al. in J. Ore. Chem., 29, 1527 (1964), for example, 2-methyl-4,6-bis(tribromomethyl)-s-triazine, 2,4,6-tris(tribromomethll)-s-triazine, 2,4,6-tris(dibromomethyl)-s-triazine, 2-amino-4-methyl-6-tribromomethyl-s-triazine, 2-metoxy-4-methyl-6-trichloromethyl-s-triazine, and the like, and still further, the compounds described in JP-S62-058241A, for example, the compounds described below and the like.

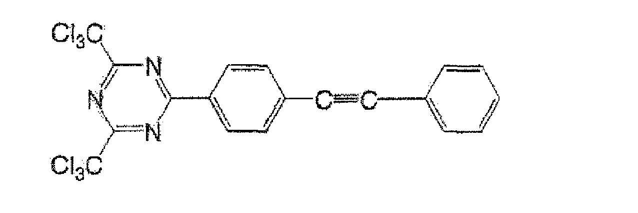

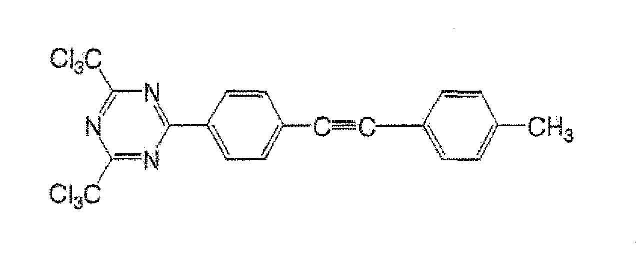

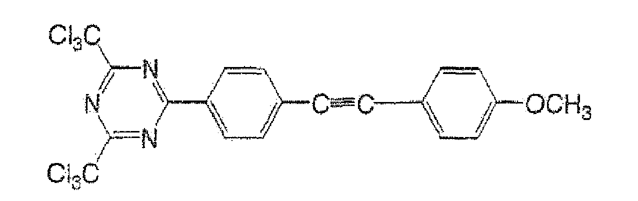

Still further, the compounds described in JP-H05-281728A, for example, the compounds described below and the like can be cited.

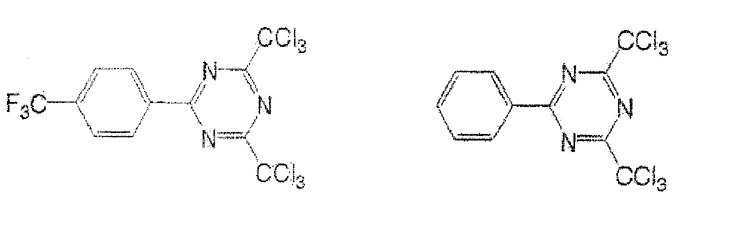

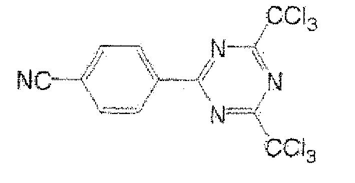

In addition, a group of compounds that can be easily synthesized by a person skilled in the art in accordance with the synthesis process as described in "Journal of Heterocyclic Chemistry", Vol. 7 (No. 3), p. 511 and later (1970) authored by M. P. Hutt, E. F. Elslager, and L. M., Herbel for example, the compounds described below and the like can be cited,

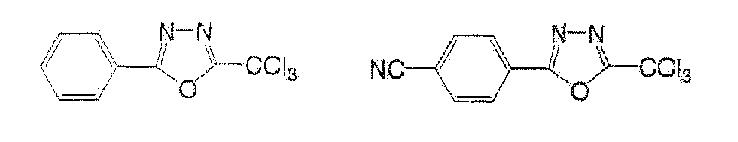

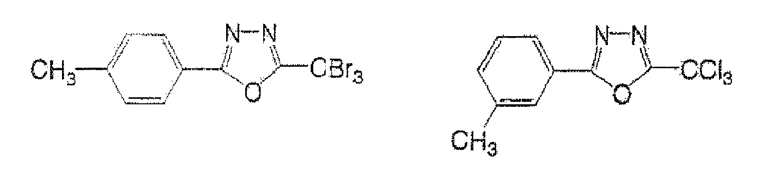

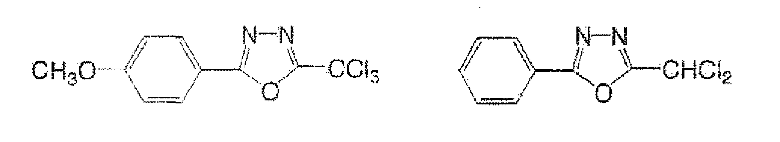

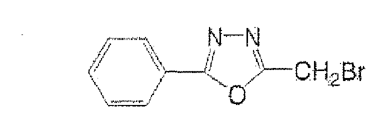

### (m)Azo-Based Compound

Examples of the (m) azo-based compound which is preferred as the radical initiator, used in the invention include 2,2'-azobisiaobutyronitrile, 2,2'-azobispropionitrile, 1, 1'azobis(cyclohexane- 1-carbonitrile), 2,2'azobis(2-methylbutyronitrile), 2,2'-azobis(2,4-dimethylvaleronitrile), 2,2'-azobis(4-methoxy-2,4-dimethylvaleronitrile), 4,4'-azobis(4-cyanovaleric acid), dimethyl-2,2'-azobisisobutyrate, 2,2'azobis(2-methypropionamidoxime), 2,2'-azobis[2-(2-imidazolin-2-yl)propane], 2,2'-azobis {2-methyl-N-[1,1-bis(hydroxymethyl)-2-hydroxyethyl]propionamide }, 2,2'-azobis[2-methyl-N-(2-hydroxyethyl)propionamide], 2,2'-azobis(N-butyl-2-methylpropionamide), 2,2'-azobis(iN-cyclohex-yl-2-methylpropionamide), 2,2'-azobis[N-(2-propenyl)-2-methylpropionamide], 2,2'-azobis(2,4,4-trimethylpentane), and the like.

More preferable examples of the radical initiator for use in the invention include the above-described (a) aromatic ketones, (b) acylphosphine compounds, (c) aromatic onium salt compounds, (d) organic peroxides, (f) hexaarylbiimidazole compounds, (j) metallocene compounds, and (1) compounds having carbon-halogen bonds, even more preferable examples of the radical initiator include (a) aromatic ketones, (b) acylphosphine compounds, (c) aromatic onium salt compounds, and (1) compounds having carbon-halogen bonds, and particularly preferable examples of the radical initiator include (a) α-aminoketones represented by the formula (1) of the aromatic ketones and (b) compounds represented by the formula (2) or (3) of the acylphosphine compounds.

The content of the radical initiator in the curable composition is preferably 0.1 to 50% by weight, more preferably 0.5 to 30% by weight, and particularly preferably 5 to 20% by weight, based on the total solid content of the curable composition.

The radical initiator in the invention is preferably used singly or in combination of two or more kinds thereof

As a photopolymerization initiator that is preferred from the viewpoint of transparency, when the photopolymerization initiator is made into a 3 g/cm² thick film, a compound with an absorbance at a wavelength of 400 nm of no more than 0.3 is preferred; it is more preferably no more than 0.2, and even more preferably no more than 0.1.

Among the above, from the viewpoint of the relationship with the compound represented by the formula (1) used in the invention and the transparency, it is preferable to use an α-aminoketone-based compound and/or an acylphosphine oxide-based compound as the photopolymerization initiator, and it is particularly preferable to use an α-aminoketone-based compound and an acylphosphine oxide-based compound in combination.

The content of the photopolymerization initiator in the curable composition of the invention is preferably in the range of 0.1 to 30% by weight, and more preferably in the range of 0.2 to 20% by weight, on a solid basis.

In the invention, as a cationic polymerization initiator (photo-acid generator), for example, compounds that are used for chemically amplified photoresists or cationic photopolymerization are used (for example, "Organic Materials for Imaging", edited by The Japanese Research Association for Organic Electronics Material, Bunshin Publishing Co. (1993), pp. 187-192).

Examples of the cationic polymerization initiator that is suitable in the invention are as follows.

That is, firstly, B(C₆F₅)₄⁻, PF₆⁻, AsF₆⁻, SbF₆⁻, and CF₃SO₃ salts of the aromatic onium compounds of diazonium, ammonium, iodimum, sulfonium, phosphonium, and the like can be cited. Secondly, sulfonated materials that generate a sulfonic acid can be cited. Thirdly, halides that photogenerate a hydrogen halide can also be used. Fourthly, iron arene complexes can be cited.

The cationic polymerization initiator, one type thereof may be used singly or in combination of two or more kinds thereof.

### (Component C) Ethylenically Unsaturated Compound

The curable composition of the invention contains an ethylenically unsaturated compound.

The ethylenically unsaturated compound which can be used in the invention is not particularly limited as long as it is a compound having an ethylenically unsaturated group, but is preferably a radically polymerizable or cationically polymerizable compound.

The radically polymerizable compound in the invention may be any compound as long as it has at least one ethylenically unsaturated bond, and a monomer, an oligomer, a polymer, and the like are included therein.

The radically polymerizable compound may be used singly or in combination at any ratio of two or more kinds thereof in order to improve the intended properties. From the viewpoint of controlling the performances such as the reactivity, the physical properties, and the like, it is preferred to use two or more kinds of radically polymerizable compounds in combination.

Examples of the radically polymerizable compound include unsaturated carboxylic acids such as acrylic acid, methacrylic acid, itaconic acid, crotonic acid, isocrotonic acid, maleic acid, and the like, and salts thereof, and radically polymerizable compounds including anhydrides having an ethylenically unsaturated bond, acrylonitrile, styrenes, various kinds of unsaturated polyesters, unsaturated polyethers, unsaturated polyamides, unsaturated urethanes, and the like.

Specific examples thereof include acrylic acid derivatives such as methyl acrylate, ethyl acrylate, n-butyl acrylate, 2-ethylhexyl acrylate, 2-hydroxyethyl acrylate, butoxyethyl acrylate, carbitol acrylate, cyclohexyl acrylate, tetrahydrofurfuryl acrylate, benzyl acrylate, bis(4-acryloxypolyethoxyphenyl)propane, neopentylglycol diacrylate, 1,6-hexanediol diacrylate, ethylene glycol diacrylate, diethylene glycol diacrylate, triethylene glycol diacrylate, tetraethylene glycol diacrylate, polyethylene glycol diacrylate, polypropylene glycol diacrylate, pentaerythritol triacrylate, pentaerythritol tetraacrylate, dipentaerythritol tetraacrylate, trimethylolpropane triacrylate, tetramethylolmethane tetraacrylate, oligoester acrylate, N-methylolaerylamide, diacetoneacrylamide, epoxyacrylate, and the like, methacrylic derivatives such as methyl methacrylate, n-butyl methacrylate, 2-ethylhexyl methacrylate, lauryl methacrylate, allyl methacrylate, glycidyl methacrylate, benzyl methacrylate, dimethylaminomethyl methacrylate, 1,6-hexanediol dimethacrylate, ethylene glycol dimethacrylate, triethylene glycol dimethacrylate, polyethylene glycol dimethacrylate, polypropylene glycol dimethacrylate, trimethylolethane trimethacrylate, trimethylolpropane trimethacrylate, 2,2-bis(4-methaervloxypolyethoxyphenyl)propane, and the like, N-vinyl compounds such as N-vinylpyrrolidoixe, N-vinylcaprolactam, and the like, allyl compound derivatives such as allyl glycidyl ether, diallyl phthalate, triallyl trimellitate, and the like, and more specifically, radically polymerizable or crosslinkable monomers, oligomers, and polymers, which are commercial products or are known in the art, such as those described in "Crosslinking Agent Handbook", edited by S. Yamashita (1981, Taiseisha); "UV-EB Curing Handbook (Starting Materials)", edited by K. Kato (1985, Kobunshi Kankoukai); "Application and Market of UV·EB Curing Technology", p. 79, edited by RadTech (CMC, 1989); "Polyester Resin Handbook", edited by E. Takiyama (1988, The Nikkan Kogyo Shimbun Ltd.); and the like can be used.

Furthermore, as the radically polymerizable compound, photocurable polymerizable compound materials used in photopolymerizable compositions described in, for example, JP-H07-139983A, JP-H07-31399B, JP-H08-224982A, JP-H10-000863A, JP-H09-134011A, or the like are known, and they may also be applied in the curable composition of the invention.

Moreover, as the radically polymerizable compound, a vinyl ether compound is also preferably used.

Examples of the vinyl ether compounds which are suitably used include di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, trimethylolpropane trivinyl ether, and the like; monovinyl ether compounds such as ethyl vinyl ether, n-butyl vinyl ether, isobutyl vinyl ether, octadecyl vinyl other, cyclohexyl vinyl ether, hydroxybutyl vinyl ether, 2-ethylhexyl vinyl ether, cyclohexanedimethanol monovinyl ether, n-propyl vinyl ether, isopropyl vinyl ether, isopropenyl vinyl ether, dodecyl vinyl ether, diethylene glycol monovinyl ether, octadecyl vinyl ether, ethylene glycol monovinyl ether, triethylene glycol monovinyl ether, hydroxyethyl monovinyl ether, hydroxynonyl monovinyl ether, and the like; etc.

Among these vinyl ether compounds; divinyl ether compounds and trivinyl ether compounds are preferred from the viewpoint of curability, adhesion, and surface hardness, and divinyl ether compounds are particularly preferred. The vinyl ether compound may be used singly or in an appropriate combination of two or more kinds thereof.

As other polymerizable compounds which can be used in the invention, (meth)acrylic acid esters such as (meth)acrylic-based monomers or prepolymers, epoxy-based monomers or prepolymers, urethane-based monomers or prepolymers, and the like (hereinafter also simply referred to as "acrylate compounds" as appropriate) are preferably used. Even more preferred compounds are as follows.

That is, examples thereof include acrylate compounds such as 2-ethylhexyldiglycol acrylate, 2-hydroxy-3-phenoxypropyl acrylate, 2-hydroxybutyl acrylate, hydroxypivalic acid neopentyl glycol diacrylate, 2-acryloyloxyelhylphthalie acid, methoxy polyethylene glycol acrylate, tetramethylolmethane triacrylate, 2-acryloyloxyethyl-2-hydroxyethylphthalic acid, dimethyloltricyclodecane diacrylate, ethoxylated phenyl acrylate, 2-acryloyloxyethylsuccinic acid, nonylphenol ethylene oxide (EO) adduct acrylate, modified glycerin triacrylate, bisphenol A diglycidyl ether acrylic acid adduct, modified bisphenol A diacrylate, phenoxypolyethylene glycol acrylate, 2-acryloyloxyethylhexahydrophthalic acid, bisphenol A propylene oxide (PO) adduct diacrylate, bisphenol A EO adduct diacrylate, dipentaerythritol hexaacrylate, pentaerythritol triacrylate tolylenediisocyanate urethane prepolymer, lactone-modified flexible acrylate, butoxyethyl acrylate, propylene glycol diglycidyl ether acrylic acid adduct, pentaerythritol triacrylate hexamethylenediisocyanate urethane prepolymer, 2-hydroxyethyl acrylate, methoxydipropylene glycol acrylate, ditrimethylolpropane tetraacrylate, pentaerythritol triacrylate hexamethylenediisocyanate urethane prepolymer, stearyl acrylate, isoamyl acrylate, isomyristyl acrylate, isostearyl acrylate, lactone-modified acrylate, and the like, and corresponding methacrylate compounds in which acryloxy groups of these acrylate compounds are modified into methacryloxy groups.

Furthermore, the monomers listed above have high reactivity, low viscosity, and excellent adhesion to a recording medium.

Also, in addition to the above-cited monomers, the polymerizable compounds used in the photopolymerizable compositions described in JP-2003-026711A, JP-H04-031467, JP-H04-041563A, JP-H04-041564A, JP-R05-263012A, JP-H05-263013A, and JP4277936B, or the like can also be used as the ethylenically unsaturated compound in the invention.

Further, in the invention, in order to improve the non-tackiness (suppression of surface Tackiness) and surface smoothness, it is preferred to use the compound represented by the formula (I) in combination with, among the ethylenically unsaturated compounds as described above, a polyfunctional acrylate compound.

When a polyfunctional ethylenically unsaturated compound is used, the content of the polyfunctional ethylenically unsaturated compound is preferably 5 to 80% by weight, and more preferably 40 to 70% by weight, based on the total weight of the curable composition. When the content is in the above-mentioned range, the non-tackiness is excellent.

Further, in the invention, depending on various intended applications, a radical·cationic hybrid coating composition may be employed in which a combination of the radically polymerizable compound and the radical photopolymerization initiator is used together with a combination of the cationically polymerizable compound described below and the cationic polymerization initiator.

In the invention, the radically polymerizable compound is preferred, but a cationically polymerizable compound can also be used. The cationically polymerizable compound that can be used is not particularly limited as long as it is a compound for which a polymerization reaction is initiated by an acid generated from a photo-acid generator and which cures, and various kinds of known cationically polymerizable monomers known as cationically photopolymerizable monomers can be used.

When the cationically polymerizable compound used does not have an ethylenically unsaturated bond, a compound having an ethylenically unsaturated bond and the cationically polymerizable compound having no ethylenically unsaturated bond are used in combination.

Examples of the cationically polymerizable monomer include epoxy compounds, vinyl ether compounds, oxetane compounds, and the like described in JP-H06-009714A, JP-2001-31892A, JP-2001-40068A, JP-2001-55507A, JP-2001-310938A, JP-2001-310937A, JP-2001-220526A, or the like.

Furthermore, as the cationically polymerizable compound, for example, a polymerizable compound applied in a photocurable resin of a cationic polymerization system is known, and in recent years polymerizable compounds applied in photocurable resins of cationic photopolymerization systems sensitized to a visible light wavelength range of 400 nm or more have been disclosed in, for example, JP-H06-043633A and JP-H08-324137A. They can be applied in the curable composition of the invention.

From the viewpoint of curability and surface smoothness, the content of the ethylenically unsaturated compound in the curable composition of the invention is preferably in the range of 10 to 97% by weight, more preferably in the range of 30 to 95% by weight, and particularly preferably in the range of 50 to 90% by weight, based on the total weight of the curable composition.

Furthermore, the ethylenically unsaturated compound can be used singly or in combination of two or more kinds thereof.

### (Component D) Colorant

It is preferable that the ink composition of the invention contain a colorant.

The colorant which can be used in the invention is not particularly limited, and any one can be selected from known colorants such as a pigment, a dye, and the like and used, but the pigment is preferred.

Examples of the organic pigment include natural dye-based pigments such as Madder Lake, Logwood Lake, Cochineal Lake, and the like, nitroso-based pigments such as Naphthol Green B, Naphthol Green Y, and the like, nitro-based pigments such as Naphthol Yellow S, Lithol Fast Yellow 2G, and the like, insoluble azo-based pigments such as Permanent Red 4R, Brilliant Fast Scarlet, Hansa Yellow, Benzidine Yellow, and the like, not easily soluble azo-based pigments such as Lithol Red, Lake Red C, Lake Red D, and the like, soluble azo-based pigments such as Brilliant Carmine 6B, Permanent Red F5R, Pigment Scarlet 3B, Bordeaux 10B, and the like, phthalocyanine-based pigments such as Phthalocyanine Blue, Phthalocyanine Green, Sky Blue, and the like, basic dye-based pigments such as Rhodamine Lake, Malachite Green Lake, Methyl Violet Lake, and the like, acidic dye-based pigments such as Peacock Blue Lake, Eosine Lake, Quinoline Yellow Lake, and the like, vat dye-based pigments such as Indanthrene Blue, Thioindigo Maroon, and the like, mordant dye-based type pigments such as Alizarine Lake and the like, Quinacridone Red, Quinacridone Violet, Perylene Red, Perylene Scarlet, Isoindolinone Yellow, Dioxazine Violet, Aniline black, organic fluorescent pigments, and the like.

Examples of the inorganic pigments include natural inorganic pigments such as clay, barytes, mica, loess, and the like, chromates such as chrome yellow, zinc yellow, barium yellow, and the like, ferrocyanides such as Prussian Blue and the like, sulfides such as Red mercuric sulfide, cadmium yellow, zinc sulfide, antimony white, cadmium red, and the like, sulfates such as barium sulfate, lead sulfate, strontium sulfate, and the like, oxides such as zinc white, titanium white, Bengara, black iron, chromium oxide, and the like, hydroxides such as aluminum hydroxide and the like, silicates such as calcium silicate, ultramarine and the like, carbonates such as calcium carbonate, magnesium carbonate, and the like, carbons such as carbon black, vegetable black, bone black, graphite, and the like, metal powders such as aluminum powders, bronze powders, zinc powders, and the like, arsenate, phosphate, etc.

It is preferable that the colorant which can be used in the invention be added to the ink composition of the invention, and then suitably dispersed in the ink composition. For dispersion of the colorant, for example, a dispersing device such as a ball mill, a sand mill, an attritor, a roll mill, an agitator, a Henschel mixer, a colloidal mill, an ultrasonic homogenizer, a pearl mill, a wet type jet mill, a paint shaker, and the like can be used.

The colorant may be directly mixed with another component in the production of the ink composition of the invention, but in order to improve dispersibility, it may be mixed after being added in advance to a dispersion medium such as a solvent or a radically polymerizable compound used in the invention, and uniformly dispersed or dissolved.

In the invention, in order to prevent the degradation of solvent resistance when there is a residual solvent in a cured image and prevent the VOC (Volatile Organic Compound) problem due to the residual solvent, the colorant is preferably added to a dispersion medium such as a radically polymerizable monomer and then mixed. When only taking dispersion suitability into consideration, it is preferred to select a monomer having the lowest viscosity as the polymerizable compound used for the addition of the colorant.

These colorants may be used by appropriately selecting one kind or two or more kinds according to the intended purpose of the ink composition.

Further, when a colorant such as a pigment and the like, which is present as a solid in the ink composition of the invention, is intended to be used, it is preferred for the colorant, the dispersant, and the dispersion medium to be selected and for the dispersion conditions and the filtration conditions to be set so that the average particle diameter of colorant particles may be preferably 0.005 to 0.5 µm, more preferably 0.01 to 0.45 µm, and even more preferably 0.015 to 0.4 µm. By such control of the particle diameter, the storage stability, the transparency, and the curing sensitivity of the ink composition can be maintained, which is thus preferable.

The content of the colorant in the ink composition of the invention is appropriately selected according to the color and the use purpose, but is preferably 0.01 to 30% by weight based on the total weight of the ink composition.

### <Co-Sensitizer>

The curable composition of the invention may include a co-sensitizer.

In the invention, the co-sensitizer has a function of further improving the sensitivity of a sensitizer toward actinic radiation, suppressing the inhibition of polymerization of a polymerizable compound by oxygen, or the like.

Examples of such a co-sensitizer include amines, for example, the compounds described in M. R. Sander et al., "Journal of Polymer Society", Vol. 10, p. 3173 (1972), JP-S44-020189B, JP-S51-082102A, JP-S52-134692A, JP-S59-138205A, JP-S60-084305A, JP-S62-018537A, JP-S64-033104A, and Research Disclosure No. 33825.

Specific examples thereof include triethanolamine, ethyl p-dimethylaminobenzoate ester, p-formyldimethylaniline, p-methylthiodimethylaniline, and the like.

Other examples of the co-sensitizer include thiols and sulfides, for example, thiol compounds described in JP-S53-000702A, JP-S55-500806T, and JP-S05-142772A, disulfide compounds described in JP-S56-075643A, and the like.

Specific examples thereof include 2-mercaptobenzothiazole, 2-mercaptobenzoxazole, 2-mercaptobenzoimidazole, 2-mercapto-4(3H)-quinazoline, β-mercaptonaphthalene, and the like.

Other examples thereof include amino acid compounds (for example, N-phenylglycine and the like), organometallic compounds described in JP-S48-042965B (for example, tributyltin acetate and the like), hydrogen donors described in JP-S55-034414B, sulfur compounds described in JP-H06-308727A (for example, trithiane and the like), phosphorus compounds described in JP-H06-250387A (for example, diethylphosphite and the like), Si-H and Ge-H compounds described in JP-H08-054735A, and the like.

### <Surfactant>

The curable composition of the invention may include a surfactant.

Examples of the surfactant include those described in JP-S62-173463A and JP-S62-18345 7A, for example, anionic surfactants such as dialkylsulfosuccinates, alkylnaphthalenesulfonates, fatty acid salts, and the like, nonionic surfactants such as polyoxyethylene alkyl ethers, polyoxyethylene alkyl aryl ethers, acetylene glycols, polyoxyethylene/polyoxypropylene block copolymers, and the like, and cationic surfactants such as alkylamine salts, quaternary ammonium salts, and the like. An organofluoro compound or a polysiloxane compound may be used as the surfactant. The organofluoro compound is preferably hydrophobic. Examples of the organofluoro compound include fluorine-based surfactants, oil-like fluorine-based compounds (for example, fluorine oil), solid fluorine compound resins (for example, a tetrafluoroethylene resin), and those described in JP-S57-009053B (paragraphs 8 to 17) and JP-S62-135826A. Among these, polydimethylsiloxane can be preferably cited as the surfactant.

This surfactant can be used singly or in combination of two or more kinds thereof.

### <Other Components >

Other components may be added to the curable composition of the invention as necessary. Examples of such other components include a polymerization inhibitor, a solvent, inorganic particles, organic particles, and the like.

The polymerization inhibitor may be added from the viewpoint of enhancing the storage stability. The polymerization inhibitor is preferably added at 200 to 20,000 ppm based on the total amount of the curable composition of the invention.

Examples of the polymerization inhibitor include hydroquinone, benzoquinone, p-methoxyphenol, TEMPO, TEMPOL, cupferron Al, and the like.

Furthermore, it is possible to form an image, overprint layer, or overprint with intentionally degraded surface gloss by adding inorganic particles such as Aerosil or organic particles such as crosslinked polymethyl methacrylate (PMMA) to the curable composition of the invention.

It is preferable for the curable compositions of the invention not to contain any solvent so that the curable composition of the invention can react quickly and be cured after coating. However, as long as the curing speed and the like of the curable composition is not affected, a specified solvent may be added.

In the invention, an organic solvent may be used as the solvent, and from the viewpoint of curing speed, it is preferred that substantially no water to be added. The organic solvent may be added in order to improve adhesion to a printing substrate (an image receiving substrate such as paper and the like).

When an organic solvent is used, the smaller the amount thereof, the more preferable it is, and it is preferably 0.1 to 5% by weight based on the total weight of the curable composition of the invention, and more preferably 0.1 to 3% by weight.

In addition to the above, a known compound may be added to the curable composition of the invention as necessary. Examples thereof include a leveling additive, a matting agent and, for adjusting film physical properties, a polyester-based resin, a polyurethane-based resin, a vinyl-based resin, an acrylic-based resin, a rubber-based resin, a wax, and the like, which can be appropriately selected and added.

Preferred examples of the polyurethane-based resin include a urethane compound having no ethylenically unsaturated bond.

Examples of the urethane compound having no ethylenically unsaturated bond include a reaction product of a polyhydric alcohol component with a polyisocyanate component having no aromatic ring structure.

Examples of the polyhydric alcohol component include polyhydric alcohols having no aromatic ring structure such as ethylene glycol, propylene glycol, 1,3-butanediol, 1,4-butanediol, 1,5-pentanediol, 2,2,4-trimethyl-1,3-pentanediol, 1,6-hexanediol, 1,9-nonanediol, neopentyl glycol, diethylene glycol, triethylene glycol, dipropylene glycol, tripropylene glycol, tetramethylene glycol, ditetramethylene glycol, tritetramethylene glycol, 1,4-cyclohexanediol, cyclohexanedimethanol, hydrogenated bisphenol A, glycerine, trimethylolethane, trimethylolpropane, pentaerythritol 2,2-dimethyl-3-hydroxypropyl-2,2-dimethyl-3-hydroxypropionate, and the like; polyester polyols having no aromatic ring structure, such as reaction products of the above-mentioned polyhydric alcohols with caprolactone and reaction products of the above-mentioned polyhydric alcohols with polybasic acids having no aromatic ring structure such as succinic anhydride, succinic acid, adipic acid, azelaic acid, sebacic acid, tetrahydrophthalic acid, tetrahydrophthalic anhydride, hexahydrophthalic acid, hexahydrophthalic anhydride, himic acid, himic acid anhydride, maleic acid, maleic anhydride, fumaric acid, itaconic acid, and the like; polyether polyols having no aromatic ring structure such as polypropylene glycol, polytetramethylene glycol, polyhexamethylene glycol, and the like; and polyhydric alcohols having an aromatic ring structure such as bisphenol A, bisphenol F, propylene oxide addition product of bisphenol A, propylene oxide addition product of bisphenol F and polycarbonatediol, and the like. Among these, it is preferable to use polyhydric alcohols having no aromatic ring structure in order to further suppress yellowing.

As the polyisocyanate component, one having no aromatic ring structure is preferably used. Specific examples thereof include one or a mixture of two or more kinds of 1,4-tetramethylene diisocyanate, 1,6-hexamethylene diisocyanate, 2,6-diisocyanate dimercaptoate, 4,4'-methylene bis(cyclohexylisocyanate), methylcyclohexane-2,4-diisocyanate, methylcyclohexane-2,6-diisocyanate, 1,3-(isocyanatomethyl)cyclohexane, 1,4-(isocyanatomethyl)cyclohexane, isophorone diisocyanate, trimethylhexamethylene diisocyanate, and the like. Among these, one or a mixture of two or more kinds of 4,4'-methylene bis(cyclohexylisocyanate), methylcyclohexane-2,4-diisocyanate, methylcyclohexane-2,6-diisocyanate, and isophorone diisocyanate are preferred from the viewpoint of reduced yellowing or the like.

Preferred combinations of specific polyhydric alcohol components and polyisocyanate components are, for example, as follows.

### [Polyhydric Alcohol Component]

(1) Pentaerythritol 2,2-dimethyl-3-hydroxypropyl-2,2-dimethyl-3-hydroxypropionate
(2) Polyester polyol of adipic acid and 1,6-hexanediol (average molecular weight: 300 to 5,000)
(3) Polypropylene glycol (average molecular weight: 300 to 5,000)
(4) Polytetramethylene glycol (average molecular weight: 300 to 4,000)

### [Polyisocyanate Component]

(1)Mixture of methylcyclohexane-2,4-diisocyanate and methylcyclohexane-2,6-diisocyanate
(2) Isophorone diisocyanate
(3) 4,4'- Methylene bis(cyclohexylisocyanate)

As a urethane compound having no ethylenically unsaturated bond, there can be used commercially available products, but when commercially available products containing a solvent are used, it is desirable to use them after removing the solvent.

Furthermore, preferable examples of the polyurethane-based resin include a urethane compound having an ethylenically unsaturated bond.

Examples of the urethane compound having an ethylenically unsaturated bond include compounds obtained by modifying the above-described urethane compound having no ethylenically unsaturated bond with a hydroxyl group-containing (meth)acrylate.

Also, among the urethane acrylate-based prepolymers known as an active energy curable material, there can be used a prepolymer in which a component having no aromatic ring structure is used as a polyisocyanate component Examples of the general-purpose urethane acrylate prepolymer include a reaction product of a polyether polyol, a polyisocyanate having no aromatic ring structure, and a hydroxyl group-containing (meth)acrylate. This reaction product has an ethylenically unsaturated bond derived from the hydroxyl group-containing (meth)acrylate at an end thereof.

Specific examples of the urethane acrylate-based prepolymer include those described in JP-H05-009247A, JP-H10-030012A, or the like, which include a reaction product of a polyether polyol, a polyisocyanate, and a hydroxy group-containing (meth)acrylate. Also, in the invention, commercially available urethane acrylate-based prepolymers can also be used.

Furthermore, preferred examples of the polyester-based resin include a polyester resin obtained by reacting a polybasic acid with a polyhydric alcohol. In addition, a polyester resin obtained by further reacting fat or fatty acids can also be used.

Moreover, the polyester-based resin may or may not have an ethylenically unsaturated bond, but preferably has an ethylenically unsaturated bond.

For synthesis of the polyester resin having no ethylenically unsaturated bond, the following polybasic acids and polyhydric alcohols can be preferably used.

Examples of the polybasic acid include adipic acid, phthalic anhydride, isophthalic acid, terephthalic acid, succinic anhydride, azelaic acid, sebacic acid, tetrahydrophthalic anhydride, tetrachlorophthalic anhydride, himic acid anhydride, maleic anhydride, fumaric acid, itaconic acid, trimellitic anhydride, methylcyclohexenetricarboxylic anhydride, pyromellitic anhydride, and the like. Also, the polybasic acid can be used singly or in combination of two or more kinds thereof.

Examples of the polyhydric alcohol component include ethylene glycol, propylene glycol, 1,3-butanediol, 1,4-butanediol, 1,5-pentanediol, 2,2,4-trimethyl-1,3-pentanediol, 1,6-hexanediol, 1,9-nonanediol, neopentyl glycol, diethylene glycol, triethylene glycol, dipropylene glycol, tripropylene glycol, tetramethylene glycol, ditetramethylene glycol, tritetramethylene glycol, 1,4-cyclohexanediol, cyclohexanedimethanol, hydrogenated bisphenol A, glycerine, trimethylolethane, trimethylolpropane, pentaerythritol 2,2- dimethyl-3-hydroxypropyl-2,2-dimethyl-3-hydroxypropionate, trishydroxymethylaminomethane, pentaerythritol, dipentaerythritol, and the like. Also, the polyhydric alcohols may be used alone or in a combination of two or more thereof.

Those polyester resins may be synthesized in the presence of oil, fat, monovalent saturated organic acid, monovalent saturated alcohol, or the like, if desired.

Examples of the oil include linseed oil, tung oil, dehydrated castor oil, soybean oil, safflower oil, rice-bran oil, tall oil, castor oil, palm oil, coconut oil and the like.

Examples of fat include fatty acid of linseed oil, fatty acid of tung oil, fatty acid of castor oil, fatty acid of soybean oil, fatty acid of safflower oil, fatty acid of rice-bran oil, fatty acid of tall oil, fatty acid of palm oil, fatty acid of coconut oil, and the like.

Examples of the monovalent saturated organic acid include nonanoic acid, octanoic acid, undecanoic acid, lauric acid, tridecanoic acid, myristic acid, pentadecanoic acid, palmitic acid, margaric acid, stearic acid, isostearic acid, and the like.

Examples of the monovalent saturated alcohol include octyl alcohol, decanol, lauryl alcohol, cetyl alcohol, stearyl alcohol, isostearyl alcohol, glycol esters, phenyl glycol, and the like.

Among these, from the viewpoint of good balance of strength and flexibility, particularly preferred are polyester resins obtained by reacting a polybasic acid such as phthalic anhydride, isophthalic acid, terephthalic acid, tetrahydrophthalic anhydride, trimellitic anhydride, and the like with a polyhydric alcohol such as propylene glycol, butylene glycol, hexanediol, neopentyl glycol, octanediol, nonanediol, butyl ethyl propanediol, hydrogenated bisphenol A, hydrogenated bisphenol F, trimethylolpropane, and the like.

As the polyester resin having an ethylenically unsaturated bond, preferred is a polyester resin obtained by introducing an ethylenically unsaturated bond to the polyester resin having no ethylenically unsaturated bond by reacting the polyester resin with an unsaturated organic acid.

Examples of the polyester resin include a polyesteracrylate-based prepolymer obtained by reacting the polyester resin having no ethylenically unsaturated bond with a (meth)acrylic acid. Specifically, preferred examples thereof include a polyester acrylate-based prepolymer obtained by reacting a (meth)acrylic acid with a polyester produced by reacting a polybasic acid such as phthalic anhydride, isophthalic acid, terephthalic acid, tetrahydrophthalic anhydride, trimellitic anhydride, and the like with a polyhydric alcohol such as propylene glycol, butylene glycol, hexanediol, neopentyl glycol, octanediol, nonanediol, butyl ethyl propanediol, hydrogenated bisphenol A, hydrogenated bisphenol F, trimethylolpropane, and the like. Further, as the polyester acrylate-based prepolymer, commercially available products can also be used.

Furthermore, the polyester resin may have a carboxyl group as well as an acidic group such as a phosphoric acid group, a sulfonic acid group, and the like. Introduction of an acidic group such as a carboxyl group and the like can be carried out, for example, by adjusting the amount of the polybasic acid, the polyhydric alcohol, or the (meth)acrylic acid to be added in the esterification reaction. The acid value of the polyester resin is preferably 5 to 100 mgKOH/g. Within this range, the mechanical strength or water resistance is excellent.

Moreover, in order to improve the adhesion to a printing substrate such as a polyolefin, polyethylene terephthalate (PET), and the like, a tackifier that does not inhibit polymerization is preferably incorporated. Specific examples of the tackifier include high molecular weight tacky polymers described on p. 5 to 6 of JP2001-49200A (for example, a copolymer formed from an ester of a (meth)acrylic acid and an alcohol having an alkyl group having 1 to 20 carbon atoms, an ester of a (meth)acrylic acid and an alicyclic alcohol having 3 to 14 carbon atoms, or an ester of a (meth)acrylic acid and an aromatic alcohol having 6 to 14 carbon atoms), a low molecular weight tackifying resin having a polymerizable unsaturated bond, and the like.

In addition, a gel varnish described in JP2000-313850A, an amino group-containing high molecular compound described in JP2003-026711A, alkyd resins described in each of JP2005-314511A and JP2005-314832A, or the like can also be used in the curable composition of the invention.

### <Properties of Curable Composition>

Preferred physical properties of the curable composition of the invention are now explained.

When used as a photocurable coating composition, while taking into consideration coating properties, the viscosity at 25 to 30°C is preferably 5 to 100 mPa·s, and more preferably 7 to 75 mPa·s. Setting the viscosity at 25 to 30° C at the above value enables an image and an overprint having excellent non-tackiness (no surface tackiness) and excellent surface smoothness to be obtained.

The compositional ratio of the curable composition of the invention is preferably adjusted as appropriate so that the viscosity is in the above range.

The surface tension of the curable composition of the invention is preferably 16 to 40 mN/m, and more preferably 18 to 35 mN/m.

### <Method for Producing Curable Composition>

The method for producing the curable composition of the invention will be described. However, the method is not limited to the following methods. The curable composition of the invention is produced by an ordinary method. That is, an ultraviolet ray curable resin or a prepolymer, a monomer, a polymerization initiator, a polymerization inhibitor, and the like are put into a melting pot and dissolved by heating. Then, a pigment is added thereto and mixed in a mixer, and thereafter or immediately, dispersed using a two-roll mill, a three-roll mill, a jet mill, a ∑ blade type kneader, a Banbury mixer, a high-speed biaxial continuous mixer, an extruder type kneader, or the like. At this time, the pigment may be dispersed in a thermoplastic resin such as a styrene-maleic acid copolymer resin and the like, using a kneader such as a sand mill, a two-roll mill, and the like in advance.

### (Printing Method)

A printing method of the invention includes a printing step of printing an ink composition including (component A) a compound represented by the formula (I), (component B) a photopolymerization initiator, (component C) an ethylenically unsaturated compound, and (component D) a colorant on a material to be printed, and a curing step of irradiating ultraviolet rays having a peak wavelength at 375 to 395 nm by a light-emitting diode to cure the printed ink composition.

### [Printing Step]

The printing method of the invention includes a printing step of printing an ink composition (an ink composition of the invention) including (component A) a compound represented by the formula (I), (component B) a photopolymerization initiator, (component C) an ethylenically unsaturated compound, and (component D) a colorant on a material to be printed.

In the printing step, preferred examples of the respective components of the ink composition include the respective components of the ink composition of the invention.

The material to be printed is not particularly limited, and a known material to be printed may be used. Examples of the material to be printed include printing paper such as coated paper, high-quality paper, medium-quality paper, and the like, plastics, metals, fibers, and the like. The printing step is preferably a printing step of printing the ink composition of the invention on the material to be printed by a printing plate, and more preferably, a printing step of printing the ink composition of the invention on the material to be printed by a printing plate which is attached to a printing machine.

The printing method using a printing plate is not particularly limited, and relief printing, lithographic printing, intaglio printing, and stencil printing, such as flexographic printing, offset printing, gravure printing, screen printing, and the like, may be used. Among these, offset printing is particularly preferable.

For example, in offset printing, an ink composition is transferred from an original plate to a material to be printed by an offset printing machine. As the original plate, a PS plate, a multilayer metal plate, a deep-etch plate, a Wipon plate, a synthetic resin plate, a waterless lithographic plate having a non-image area coated with a silicone compound, or the like is used. The offset printing machine is not particularly limited. For example, a metal plate printing machine, an offset printing proofreading machine, or the like is used.

The printing step may be carried out only once for single-color printing or may be carried out twice or more for color printing or the like.

### [Curing Step]

The printing method of the invention includes a curing step of irradiating ultraviolet rays having a peak wavelength at 375 to 395 nm by a light-emitting diode to cure the printed ink composition.

The ink composition printed on the material to be printed is cured by irradiating ultraviolet rays having a peak wavelength at 375 to 395 nm from a light-emitting diode. This is because the photopolymerization initiator in the ink composition of the invention is excited directly or indirectly by the irradiation of ultraviolet rays to generate an initiation species, such as radical, acid, or base, and the polymerization reaction of a specific monofunctional (meth)acrylate derivative or another polymerizable compound which is used in combination as desired occurs and is promoted because of the function of the initiation species, such that the ink composition is cured. At this time, if there is a compound represented by the formula (I) along with the photopolymerization initiator in the ink composition, the compound represented by the formula (I) in the system absorbs ultraviolet ray having a peak wavelength at 375 to 395 nm from the light-emitting diode, is put in an excited state, and comes into contact with a polymerization initiator to promote the dissolution of the polymerization initiator. Thus, it is estimated that a higher-sensitivity curing reaction is achieved.

### <Irradiation of UV-LED>

A UV-LED (ultraviolet ray-emitting diode) is compact, has a long lifespan, high efficiency, low cost, and is foreseen as a light source for curing a photocurable ink composition and a photocurable coating composition. In the invention, ultraviolet rays which are irradiated from the UV-LED to cure the photocurable ink composition or the photocurable coating composition have a peak wavelength at 375 to 395 nm. If the peak wavelength of ultraviolet rays which are irradiated onto the photocurable composition or the photocurable coating composition is in a range of 375 to 395 nm, it is possible to select a sensitizer with little absorption in a visible region as a sensitizer favorable to curing, thereby obtaining a cured matter having excellent non-tackiness and excellent hue without having unnecessary absorption in the visible region. That is, if the peak wavelength of ultraviolet rays irradiated by the UV-LED is more than 395 nm, the absorption wavelength of the sensitizer favorable to curing has absorption in the visible region, and the photocurable ink composition and the photocurable coating composition are yellowed. As a result, the hue is deteriorated.

Meanwhile, a high-power UV-LED which has a peak wavelength of less than 375 nm and is suitable for the object of the invention has a problem in that the cost is high and practicability is low.

As described below, when the UV-LED is used as a light source for curing the photocurable ink composition or the photocurable coating composition, various advantages are obtained compared to an ultraviolet ray lamp.

First, the UV-LED has an advantage in that power consumption is low, compared to an ultraviolet ray lamp. For this reason, when a printing apparatus, an overprint apparatus, a device for processing a laminate, or the like using a UV-LED as a light source for curing is configured, it is possible to reduce power consumption.

Since ultraviolet rays which are generated by an ultraviolet ray lamp include ultraviolet rays having a wavelength of 242 nm or less which cause the generation of ozone, ozone is generated in the air. For this reason, when an ultraviolet ray lamp is used, it is necessary to provide discharge means for discharging odor due to the ozone. In contrast, since ultraviolet rays which are generated by the UV-LED do not include ultraviolet rays having such a wavelength, ozone is not generated in the air, and it is not necessary to provide discharge means for discharging the odor due to the ozone. When a light source is constituted by a UV-LED, mercury is not required, unlike an ultraviolet ray lamp. As described above, a light source using a UV-LED is a light source which is excellent in environmental compatibility compared to a mercury lamp.

Since light which is generated by the UV-LED does not include infrared rays, and the amount of heat generation is small, it is possible to reduce the influence of heat on a material to be printed or a printing machine.

When a light source is constituted by a UV-LED, it is possible to reduce the size of an ancillary facility, thereby saving the space for a printing apparatus, an overprint apparatus, a device for processing a laminate, or the like.

Since the UV-LED has a long lifespan compared to an ultraviolet ray lamp, it is possible to reduce a burden of maintenance.

While an ultraviolet ray lamp requires a waiting time for turning on and off, the UV-LED does not require a waiting time and can be turned on and off instantaneously. Therefore, according to the UV-LED, it is possible to reduce an operation waiting time.

In the invention, various known UV-LEDs can be used in irradiating ultraviolet rays.

The illuminance of ultraviolet rays irradiated from the UV-LED on an irradiation target, such as a material to be printed, a printed matter, and the like is preferably 1,000 mV/cm² or more, and more preferably 2,000 mV/cm² or more. The illuminance is measured with an irradiation distance of 10 mm, and is preferably measured by an Ushio UV Meter 405 (manufactured by Ushio Inc.) with an irradiation distance of 10 mm.

The photocurable ink composition and the photocurable coating composition of the invention has sufficient sensitivity even as a low-power UV-LED. For example, when the printing feed speed is in a range of 5 m to 300 m, the irradiation amount of the UV-LED is preferably in a range of 10 to 4,000 mJ/cm², and more preferably, in a range of 20 to 4,000 mJ/cm².

An ultraviolet curing device in which the UV-LED, which is usable in the invention, is used as a light source is not particularly limited. For example, Aicure UD80 Series manufactured by Panasonic Electric Works Co. Ltd. is used. Of the Aicure UD80 Series, a type having an irradiation width of 750 mm uses a UV-LED, which generates ultraviolet rays having a wavelength of 385 nm±10 nm, is used as a light source.

Hereinafter, an example of the printing method of the invention will be described with reference to the drawings.

Fig. 2 is a schematic configuration diagram of a printing machine which can be used in an embodiment of the printing method of the invention.

As shown in Fig. 2, a printing machine 100 is configured such that five-color printing is carried out, and such that, in addition to an ink composition of four primary colors of cyan (C), magenta (M), yellow (Y), and black (Bk), which is a printing ink of a plurality of different primary colors, for example, specific color printing or complementary color printing is carried out using one specific color (referred to as a specific color) of an ink composition or the like of gold, silver, fluorescent, and pearl. The printing machine 100 includes a sheet feeding section 20, a printing section 30, and a sheet discharging section 40. The sheet feeding section 20 can feed a material to be printed (not shown) to the printing section 30. The printing section 30 can carry out printing on the material to be printed fed from the sheet feeding section 20, and includes a plurality of printing units (in this case, five printing units 30a to 30e in which the primary color images of C, M, Y, and Bk and the specific color image in which specific color printing or complementary color printing is performed are formed). The sheet discharging section 40 can discharge the material to be printed which is printed by the printing section 30 and laminate the material to be printed in the up-down direction.

An ultraviolet ray curable ink composition is used as the ink composition, and a drying unit 30f is connected to the end of the printing unit 30e so as to cure the ink composition of the material to be printed which is printed through the printing units 30a to 30e.

In the printing machine 100, the material to be printed is fed from the sheet feeding section 20 to the printing section 30, after the fed material to be fed is printed by the printing units 30a to 30e in the printing section 30, the ink composition is cured by the drying unit 30f, and the material to be printed is discharged to the sheet discharging section 40. Before the material to be printed is fed from the sheet feeding section 20 to the printing section 30, alignment (referred to as registration) is made such that the material to be printed in the conveying direction 20 and the left-right width direction is at a predetermined position. After being aligned, the material to be printed is conveyed to the sheet discharging section 40 while maintaining the aligned state.

Each of the printing units 30a to 30e of the printing section 30 is constituted by a plate cylinder 1, a rubber cylinder 2, and an impression cylinder 3 as a set of main constituent elements. Reference numeral 9a in the printing unit 30a and reference numerals 9b and 9c in the printing units 30b to 30d are all transfer cylinders and are different in size. The transfer cylinder and the impression cylinder have grippers (not shown) which convey the material to be printed with the material to be printed sandwiched therebetween and transfer the material to be printed to the next adjacent cylinder in the conveying direction.

In the plate cylinder 1 in each of the printing units 30a to 30e, a plate for printing is provided. Ink and water are supplied to the plate, and the ink composition is transferred to the rubber cylinder 2 along the plate. The ink composition transferred to the rubber cylinder 2 is further transferred to the material to be printed which is conveyed while being sandwiched between the rubber cylinder 2 and the impression cylinder 3 facing the rubber cylinder 2. Therefore, printing can be sequentially carried out on the material to be printed which is fed from the sheet feeding section 20, by the plate provided in each of the five plate cylinders 1.

Inside the drying unit 30f, an ultraviolet irradiation portion T is provided which irradiates ultraviolet rays onto the ink composition of the material to be printed, which is printed and conveyed, to cure the ink composition.

Fig. 3(a) is a perspective view showing the arrangement relationship between the impression cylinder and a light-emitting diode in the ultraviolet irradiation portion T. Fig. 3(b) is a front view of a substrate having light-emitting diodes in the ultraviolet irradiation portion T.

As shown in Figs. 3(a) and 3(b), the ultraviolet irradiation portion T includes 44 light-emitting diodes 4 which have an irradiation axis in a direction substantially perpendicular to the surface of the impression cylinder 3, and the light-emitting diodes 4 are arranged above the impression cylinder 3. Although the gap between the light-emitting diodes 4 and the impression cylinder 3 is preferably as small as possible from the viewpoint of curing efficiency, the gap is preferably set such that the light-emitting diodes 4 do not come into contact with the material to be printed.

The 44 light-emitting diodes 4 are arranged on a straight line at predetermined intervals (regular intervals) in the width direction of the material to be printed (impression cylinder 3) to irradiate ultraviolet rays over the entire width direction of the impression cylinder 3.

Of the 44 light-emitting diodes, 11 light-emitting diodes 4 are provided in a single oblong substrate 5. Four substrates 5 are connected to each other in the width direction of the material to be printed (impression cylinder 3), and support members 6 (a part of one end is shown in Fig. 3(b)) are respectively attached to the ends of the substrates 5 on both sides, such that the four substrates 5 are supported by the left and right support members 6 and 6 at a predetermined distance (predetermined height) from the impression cylinder 3.

### (Method of Producing Overprint)

A method of preparing an overprint of the invention includes a coating step of coating a coating composition including (component A) a compound represented by the formula (I), (component B) a photopolymerization initiator, and (component C) an ethylenically unsaturated compound on a printed matter, and a curing step of irradiating ultraviolet rays having a peak wavelength at 375 to 395 nm by a light-emitting diode to cure the coating composition thus coated.

An overprint of the invention has an overprint layer which is formed by irradiating ultraviolet rays having a peak wavelength at 375 to 395 nm by a light-emitting diode to cure the coating composition of the invention on a printed matter.

The overprint has at least one overprint layer on the surface of a printed matter obtained by a printing method, such as electrophotographic printing, ink jet printing, screen printing, flexographic printing, lithographic printing, intaglio printing, or relief printing.

The printing method is not particularly limited, and known methods may be used.

In the overprint of the invention, the overprint layer may be formed in a part of the printed matter or may be formed over the entire surface of the printed matter. In the case of a duplex printed matter, the overprint layer is preferably formed over both surfaces of a printing base material. Needless to say, the overprint layer may be formed in an unprinted portion in a printed matter.

In the overprint of the invention, the thickness of the overprint layer is preferably in a range of 1 to 10 µm and more preferably, in a range of 3 to 6 µm.

As a method of measuring the thickness of the overprint layer is not particularly limited, a method may be used in which the cross-section of the overprint is observed and measured by an optical microscope or the like.

The coating step may be a step of coating a coating composition on the surface of a three-dimensional structure. The three-dimensional structure is not particularly limited, and the coating composition of the invention can be coated on a known object as desired. The ink composition of the invention may be coated as desired instead of the coating composition of the invention.

### [Coating Step]

The method of preparing an overprint includes a coating step of coating a coating composition including (component A) a compound represented by the formula (I), (component B) a photopolymerization initiator, and (component C) an ethylenically unsaturated compound on a printed matter.

In the coating step, in order to coat the coating composition, a liquid film coating device which is commonly used can be used. Specific examples of the liquid film coating device include a roll coater, a rod coater, a blade, a wire-wound bar, a dip coater, an air knife, a curtain coater, a slide coater, a doctor knife, a screen coater, a gravure coater, for example, an offset gravure coater, a slot coater, an extrusion coater, and the like. These devices may be used in the same manner as normal, and examples thereof include direct and reverse roll coating, blanket coating, dampner coating, curtail coating, lithographic coating, screen coating, gravure coating, and the like. In a preferred embodiment, coating and curing of the coating composition, of the invention are carried out using two or three roll coaters and UV curing stations.

In coating or curing the coating composition of the invention, if necessary, heating may be carried out

In the coating step, the coating amount of the coating composition of the invention is preferably in a range of 1 to 10 g/m², and more preferably, in a range of 3 to 6 g/m² as a weight per unit area.

The amount per unit area of the overprint layer formed in the overprint obtained by the method of preparing an overprint of the invention is preferably in a range of 1 to 1 g/m², and more preferably, in a range of 3 to 6 g/m².

The printing base material is not particularly limited, and known materials may be used. For example, image receiving paper is preferably used, plain paper or coated paper is more preferably used, and coated paper is still more preferably used. As coated paper, double-sided coated paper is preferable because a full color image can be duplex-printed richly. When the printing base material is paper or double-sided coated paper, the paper weight is preferably in a range of 20 to 200 g/m²*,* and more preferably, in a range of 40 to 160 g/m².

### [Curing Step]

The method of preparing an overprint of the invention includes a curing step of irradiating ultraviolet rays having a peak wavelength at 375 to 395 nm by a light-emitting diode to cure the coating composition thus coated.

With regard to the irradiation of ultraviolet rays having a peak wavelength at 375 to 395 nm by the light-emitting diode in the curing step, a form of the curing step in the printing method of the invention can be preferably used.

### (Laminate Processing Method)

A method for processing a laminate of the invention includes a coating step of coating a coating composition including (component A) a compound represented by the formula (1), (component B) a photopolymerization initiator, and (component C) an ethylenically unsaturated compound on a printed matter, a laminating step of laminating a laminate film on the printed matter having the coating composition coated thereon, and a curing step of irradiating ultraviolet rays having a peak wavelength at 375 to 395 no by a light-emitting diode to cure the coating composition thus coated.

The irradiation of ultraviolet rays having a peak wavelength, at 375 to 395 nm by the light-emitting diode in the coating step and the curing step in the method for processing a laminate of the invention are the same as the coating step and the irradiation of ultraviolet rays having a peak wavelength at 375 to 395 nm by the light-emitting diode in the curing step of the method of preparing an overprint of the invention, and the preferred ranges are also the same.

### [Laminating Step]

The method for processing a laminate of the invention includes a laminating step of laminating a laminate film on the printed matter having the coating composition coated thereon.

In the method for processing a laminate of the invention, the coating composition preferably serves as an adhesive of the printed matter and the laminate film.

The laminate film which can be used in the laminating step is not particularly limited, and a known laminate film such as a resin film and the like can be used. The laminate film may be a film having an uneven pattern even in a smooth film as desired.

### [Curing Step]

The method for processing a laminate of the invention includes a curing step of irradiating ultraviolet rays having a peak wavelength at 375 to 395 nm by a light-emitting diode to cure the coating composition thus coated.

The irradiation of ultraviolet rays may be carried out from the side to which the laminate film is attached, or if the base material of the printed matter is a transparent base material, the irradiation of ultraviolet rays may be carried out from the opposing side or both sides. It is preferable that irradiation is carried out from the side to which the laminate film is attached.

It is preferable that the laminate film is a plate which has concaves and convexes formed in the surface thereof overlapping the coating composition. The concaves and convexes of the plate are transferred to a coated film, such that the glossiness (matt, gloss) of a coated surface is adjusted. An arbitrary uneven pattern or a hologram may be formed.

When a laminate film is laminated so as to form a shape such as concaves and convexes and the like or a smooth surface in the coated film of the coating composition, the method for processing a laminate of the invention preferably includes a separating step of separating the laminate film from the laminated printed matter.

Although the separating step may be before or after the curing step, when the laminate film and the coating composition come into contact with each other and cured with adhesiveness, the separating step may be carried out before the curing step.

A device for processing a laminate which can be used in the method for processing a laminate of the invention is not particularly limited. For example, the devices described in JP-H11-350398A, JP-H06-008400A, JP-S56-037398A, JP-S63-278847A, and JP-H08-325991A are used.

Fig. 4 is a diagram showing the schematic configuration of a coating device 200 which can be used in the method for processing a laminate of the invention.

A paper material 202 is held around a paper material unwinding device 204 as a roll 203, and the unwound paper material 202 is guided by a guide roller 205 and wound around a paper material winding device 206 as a roll. The paper material unwinding device 204, the guide roller 205, and the paper material winding device 206 constitute a paper material conveying device as a whole, and a coating device which coats a coating composition, a curing device, and a separating device are sequentially provided in the course of conveying the paper material 202 by the guide roller 205.

Meanwhile, an elongated laminate film 210 which has a specific light transmission characteristic, that is, transmits ultraviolet rays having a peak wavelength at 375 to 395 nm generated by the light-emitting diode in this embodiment is held around a laminate film unwinding device 212 as a roll 211. The unwound laminate film 210 is guided by a guide roller 213 and wound around a laminate film winding device 214 as a roll. The laminate film unwinding device 212, the guide roller 213, and the laminate film winding device 214 constitute a laminate film conveying device as a whole, and a curing device and a separating device are sequentially provided in the course of conveying the laminate film 210 by the guide roller 213.

The above-described coating device includes a storage tank 215 which stores the coating composition, a roller 217 which coats the coating composition in the storage tank 215 uniformly on the surface of a coating roller 216, and the coating roller 216 which is driven to rotate in the conveying direction of the paper material 202, and is provided near the upstream side of the curing device.

The above-described curing device includes a specific light transmissive pressing roller 220 which is in contact with the laminate film 210 and driven to rotate in the conveying direction of the laminate film 210, a receiving-side pressing roller 221 which is rotatably provided to press the conveyed laminate film 210 and paper material 202 in an overlapping manner along with the pressing roller 220, a first light-emitting diode 222 which is embedded in the pressing roller 220, and a second light-emitting diode 223 which is provided near the pressing rollers 220 and 221 on the downstream side in the conveying direction.

The above-described separating device includes a separating roller 224 which guides the laminate film 210 in a direction distant from the cured coated film formed on the paper material 202, and a pair of holding rollers 225 which guides the paper material 202 to face the separated laminate film 210 while sandwiching the paper material 202 therebetween.

The laminate film 210 is preferably a material which has a smooth surface so as to prevent the penetration or adhesion of the coating composition. As the material, a film made of an ultraviolet transmissive material, such as polypropylene, polyethylene, or a polyethylene composite, is used. The laminate film 210 is preferably an unprocessed film which is not subject to treatment such as corona treatment and the like.

The laminate film 210 is not limited to one having a smooth surface, and can be appropriately selected depending on how the surface of the resin film is processed. For example, when the resin film is formed to have a polished surface having glossiness, the laminate film 210 having a smooth surface is selected and used. When the resin film is desired to be removed by polishing, the laminate film 210 having a matted surface is selected. When a pattern or figure having fine concaves and convexes is desired to be formed in the resin film, a laminate film with a pattern or a figure having small concaves and convexes, for example, embosses in the surface is used as a plate. When a hologram having ultrafine concaves and convexes is formed in the resin film, a laminate film having ultrafine concaves and convexes opposite to the hologram to be formed in the surface thereof is used as an inverting transfer plate.

As such, in creating an inverting transfer plate (laminate film) with concaves and convexes in the surface thereof, a separating agent is coated on the original plate with concaves and convexes by means of printing or the like, and a thermal-melt resin, for example, molten polyethylene is then coated. The molten resin is separated after curing, and the separated cured coated film is used as an inverting transfer plate (laminate film 210) with the concaves and convexes of the original plate transferred. If an inverting transfer plate is created in such a manner, a plate for printing can be generally inexpensive and easy. Therefore, even using inverting transfer, a plate for coating can be created easily and inexpensively, and a plate, such as a hologram, having ultrafine concaves and convexes can be created easily and inexpensively while maintaining sufficient precision.

When an original plate is created by printing, the original plate can be created by known printing, such as gravure printing, flexographic printing, offset printing, or screen printing, and ink printed portions are made convex. A figure or the like may be directly printed on the surface of a laminate film to form concaves and convexes of ink, and the concaves and convexes may be transferred to a resin coated film. In this case, a separating agent is preferably coated on the printed surface of the laminated film.

The pressing roller 220 is constituted by, for example, a transparent glass tube, and the material thereof is not particularly limited insofar as the material has strength resistant to pressing and a required ultraviolet transmission characteristic.

Next, the method for processing a laminate of the invention will be specifically described in connection with the action of the coating device 200 configured as above. First, the paper material 202 is conveyed from the paper material unwinding device 204 to the paper material winding device 206 by the paper material conveying device while being guided by the guide roller 205. The coating roller 216 which is provided near the upstream side of the curing device is driven to reversely rotate, and the coating composition in the storage tank 215 is stuck to the outer circumferential surface of the coating roller 216 through the roller 217 and coated on one surface of the paper material 202 being conveyed.

The paper material 202 with the coated film of the coating composition formed in the above-described manner is wound between a pair of pressing rollers 220 and 221 being driven to rotate in a state where the surface on the side with no coated film comes into contact with the pressing roller 221.

Meanwhile, the laminate film 210 is guided by the guide roller 213 and conveyed from the laminate film unwinding device 212 to the laminate film winding device 214 by the laminate film conveying device. In the conveying path, the laminate film 210 is wound between the pressing rollers 220 and 221 along with the paper material 202, and overlaps the paper material 202 through the coated film. Ultraviolet rays from the first light-emitting diode 222 are irradiated onto the coated film pressed and bonded to the surface of the paper material 202 through the pressing roller 220 and the laminate film 210. In this way, the paper material 202 and the laminate film 210 are sandwiched and pressed between the pressing rollers 220 and 221, such that the coated film is pressed and bonded to the laminate film 210, and cured to some extent.

Immediately before the coated film coated on the paper material 202 is pressed and bonded to the laminate film 210 by the pressing rollers 220 and 221, ultraviolet rays from the first light-emitting diode 222 are irradiated onto the surface of the coated film. For this reason, after the surfaces of the coated film starts to be cured, pressure bonding to the laminate film 210 by the pressing rollers 220 and 221 are carried out, and the coated film is formed smoothly because of the pressure bonding. The bonding force of the cured coated film and the laminate film 210 is weak compared to a case where the laminate film 210 is pressed and bonded from the time before the surface of the coated film starts to be cured. Therefore, it is possible to easily separate the laminate film 210 in a laminate film separating step described below.

A method is also considered in which a coating composition is coated on a film side to form a coated film, the film and a paper material are pressed and bonded to each other by the pressing rollers, ultraviolet rays are irradiated to cure the coated film, and external force is applied after curing to separate the laminate film from the paper material and to transfer the coated film to the surface of the paper material.

Thereafter, the laminate film 210 and the paper material 202 which overlap each other by the above-described half-cured coated film are conveyed from the pressing rollers 220 and 221 to the second light-emitting diode 223. Ultraviolet rays are irradiated onto the coated film again through the laminate film 210, such that the coated film is completely cured. The coated film formed on the paper material 202 is thin, and there is no oxygen alienation in a chemical reaction because the coated film is exposed to external air in the course of being conveyed. For this reason, the curing of the coated film is finished rapidly, and cure reversion does not occur.

If the coated film is completely cured, the paper material 202 and the laminate film 210 are conveyed to the separating device, the laminate film 210 is guided and separated by the separating roller 224 in a direction distant from the paper material 202, and the paper material 202 against the separated laminate film 210 is sandwiched by a pair of holding rollers 225.

The paper material 202 whose surface is coated with the cured coated film in the above-described manner is wound around the paper material winding device 206 as a roll. Meanwhile, the laminated film 210 is wound around the laminate film winding device 214 as a roll.

The laminate film 210 is in contact with the coated film only during a period from the pressure bonding/curing step by the pressing rollers 220 and 221, or the like to the separating step, such that it is possible to reduce the time for which the laminate film 210 is in contact with the coating composition. Simultaneously, since the laminate film 210 is in contact with the coated film in a half-cured state, it is possible to suppress deterioration (deterioration in smoothness due to pressure bonding and separating) of the surface of the laminate film 210 in contact with the coated film. Therefore, the laminate film 210 can be repeatedly used in a state where a function of smoothing the coated film is maintained.

Fig. 5 is a diagram showing a coating device 201 according to an embodiment different from that described above. In this embodiment, the surface of a sheet 230 is coated with a film of an ultraviolet ray curable resin. The same portions as those in the above-described embodiment are represented by the same reference numerals, and overlapping description will not be repeated.

In this embodiment, sheets 230 which are cut to a predetermined size are coated. Thus, a paper material conveying device includes a feed device 231 which feeds the sheets 230 one by one, and a stock device 232 which sequentially accommodates the coated sheets 230 in an overlapping manner. Since the sheets 230 are not continuously elongated, the feed device 231 continuously and sequentially feeds the sheets 230 to a resin coating device and between the pressing rollers 220 and 221, such that the coated film formed on the sheets 230 can be coated smoothly with a strong bonding force.

In this embodiment, the laminate film 210 is endless, and a film driving roller 233 is provided to drive and convey the endless laminate film 210. That is, if the driving roller 233 is driven to rotate by a driving unit (not shown), the endless laminate film 210 is sequentially and circularly conveyed to the curing device, the separating device, and the curing device.

In this embodiment, the laminate film 210 overlaps the coated film of the coating composition formed on the sheet 230 by the pressing rollers 220 and 221, and the coated film and the surface of the laminate film 210 are pressed and bonded to each other. Simultaneously, ultraviolet rays are irradiated from the first liglit-emitting diode 222 to half-cure the coated film, the coated film is completely cured by ultraviolet irradiation from the second light-emitting diode 223, and subsequently only the laminate film 210 is separated from the sheet 230 by the separating roller 224. Thus, the same resin film as in the foregoing embodiment can be formed on the surface of the sheet 230 to coat the sheet 230.

Any coating device may be used insofar as the coating device can coat the coating composition on the surface of the paper material 202. For example, a form in which the coating composition is coated by blowing through a spray, gravure, flexography, or a bar coater may be used.

Although in the above-described embodiment, an example has been described where the second light-emitting diode 223 is used to completely cure the coated film, the second light-emitting diode 223 may not be provided depending on the components in the coating composition or the irradiation amount of the first light-emitting diode 222, and the coated film may be completely cured only by the first light-emitting diode 222. Alternatively, the first light-emitting diode 222 may not be provided and only the second light-emitting diode 223 may be provided.

The printing method of the invention, the method of preparing an overprint of the invention, and the method for processing a laminate of the invention may include known steps other than the above-described steps.

### [Examples]

The invention will be further described in detail with reference to the following Examples, but the invention is not intended to be limited to these Examples. Further, in the following description. "part(s)" means "part(s) by weight" unless otherwise mentioned.

### <Coating Composition Examples>

### (Example 1)

The components below were stirred using a stirrer to obtain a coating composition.

| | |
|---|---|
| - Ebecryl 605 (bisphenol A epoxy diacrylate, manufactured by Cytec Surface Specialties) | 40% by weight |
| -Tripropylene, glycol diacrylate (manufactured by Aldrich Chemical Co., Inc.) | 20% by weight |
| - Dodecyl acrylate | 20% by weight |
| - Polymerization initiator 1 (IRGACURE 907, manufactured by Ciba Specialty Chemicals Inc.) | 10% by weight |
| - Compound represented by the formula (I) (Compound (1-1) above) | 8% by weight |
| - Polydimethylsiloxane (manufactured by Aldrich Chemical Co., Inc.) | 2% by weight |

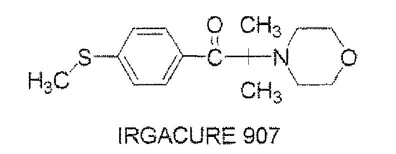

### <Evaluation of Non-Tackiness (Suppression of Surface Tackiness)>

An electrophotographically printed matter obtained using double-sided coated paper output from a digital printer (DC8000) manufactured by Fuji Xerox Co., Ltd. was coated on one side with a coating composition at a film thickness of 5 g/m² using a bar coater. The coating film thus obtained was exposed with an illumination intensity of 4,0 W/cm² for 0.3 seconds using an Aicure UD80 (manufactured by Panasonic Electric Works Co., Ltd.) set up at an interval of 10 mm from the electrophotographically printed matter, thus preparing an overprint sample. The non-tackiness after exposure was evaluated by feeling. The evaluation criteria are shown below.
A: No tackiness
O: Almost no tackiness
X: Tackiness present

### <Transparency (Hue)>

An overprint sample was prepared by coating a polyethylene terephthalate (PET) film at a thickness of 5 g/m² using a bar coater, and exposing the coating film thus obtained with an illumination intensity of 4.0 W/cm² for 0.3 seconds using an Aicure UD80 (manufactured by Panasonic Electric Works Co., Ltd.) set up at an interval of 10 mm from the material to be printed. The PET film thus obtained was visually evaluated, sensory evaluation was carried out for hue (transparency), chromaticity indices a and b were measured using a colorimeter CR-100 manufactured by Monica Minolta Sensing, Inc., and a combined evaluation was made in accordance with the criteria below. The results are given in Table 1.
O: Good and transparent (in the ranges of -2.0≤a≤0 and -6≤b≤2).
Δ: Level at which a yellow color could be discerned only by placing the PET on white paper (in the ranges of -4.0≤a≤2.0 and -4<b≤0).
X: Strongly yellowish transparency (values of a and b were outside the above-mentioned ranges).

As a result of evaluation by the methods above, the coating composition of Example 1 gave "A" for non-tackiness and "O" for transparency.

### (Comparative Example 1)

A coating composition was produced by the same method as in Example 1 except that 8% by weight of the polymerization initiator 1 (18% by weight each in total) was used instead of the compound represented by the formula (I). Further, evaluation of performance was carried out in the same manner as in Example 1.

### (Examples 2 to 66 and Comparative Examples 2 and 3)

Each of the coating compositions was prepared by the same method as in Example 1 except that the compound represented by the formula (I) and the polymerization initiator were changed to the compounds described in Table 1 or 2. Moreover, when two kinds of the photopolymerization initiators were used, they were each used in an amount of 5% by weight. Further, evaluation of performance was also carried out in the same manner as in Example 1.

### (Comparative Example 4)

A coating composition was prepared by the same method as in Example 1 except that 8% by weight of dodecyl acrylate was used instead of the compound (I-1) represented by the formula (I). Further, evaluation of performance was also carried out in the same manner as in Example 1.

**[Table 1]**

| Example Comparative Example | Compound represented by the formula (1) | Photopolymerization initiator | Evaluation results | |
|---|---|---|---|---|
| | | | Non-tackiness | Transparency |
| Example 1 | I-1 | Polymerization initiator 1 | A | O |
| Example 2 | 1-3 | Polymerization initiator 1 | A | O |
| Example 3 | I-4 | Polymerization initiator 1 | A | O |
| Example 4 | 1-7 | Polymerization initiator 1 | A | O |
| Example 5 | I-8 | Polymerization initiator 1 | A | O |
| Example 6 | 1-14 | Polymerization initiator 1 | A | O |
| Example 7 | I-15 | Polymerization initiator 1 | A | O |
| Example 8 | 1-27 | Polymerization initiator 1 | A | O |
| Example 9 | I-32 | Polymerization initiator 1 | A | O |
| Example 10 | I-35 | Polymerization initiator 1 | A | O |
| Example 11 | I-54 | Polymerization initiator 1 | A | O |
| Example 12 | 1-64 | Polymerization initiator 1 | A | O |
| Example 13 | I-80 | Polymerization initiator 1 | A | O |
| Example 14 | I-116 | Polymerization initiator 1 | A | O |
| Example 15 | I-123 | Polymerization initiator 1 | A | O |
| Example 16 | I-132 | Polymerization initiator 1 | A | O |
| Examples 17 | I-1 | Polymerization initiator 2 | A | O |
| Example 18 | I-1 | Polymerization initiator 3 | A | O |
| Example 19 | I-1 | Polymerization initiator 4 | O | O |
| Example 20 | I-1 | Polymerization initiator 5 | O | O |
| Example 21 | I-1 | Polymerization initiator 6 | O | O |
| Example 22 | I-1 | Polymerization initiator 7 | O | O |
| Example 23 | I-1 | Polymerization initiator 8 | O | O |
| Example 24 | I-1 | Polymerization initiator 9 | O | O |
| Example 25 | I-1 | Polymerization initiator 10 | O | O |
| Example 26 | I-1 | Polymerization initiator 11 | O | O |
| Example 27 | I-1 | Polymerization initiator 12 | O | O |
| Example 28 | I-1 | Polymerization initiator 13 | O | O |
| Example 29 | I-1 | Polymerization initiator 14 | O | O |
| Example 30 | I-1 | Polymerization initiator 1+Polymerization initiator 2 | A | O |
| Example 31 | I-14 | Polymerization initiator 2 | A | O |
| Example 32 | 1-14 | Polymerization initiator 4 | A | O |
| Example 33 | I-14 | Polymerization initiator 9 | A | O |
| Example 34 | I-14 | Polymerization initiator 11 | A | O |
| Example 35 | 1-14 | Polymerization initiator 13 | A | O |
| Example 36 | 1-14 | Polymerization initiator 1+Polymerization initiator 2 | A. | O |

**[Table 2]**

| Example Comparative Example | Compound represented by the formula (1) | Photopolymerization initiator | Evaluation results | |
|---|---|---|---|---|
| | | | Non-tackiness | Transparency |
| Example 37 | 1-27 | Polymerization initiator 2 | A | O |
| Example 38 | 1-27 | Polymerization initiator 4 | O | O |
| Example 39 | 1-27 | Polymerization initiator 9 | O | O |
| Example 40 | 1-27 | Polymerization initiator 11 | O | O |
| Example 41 | 1-27 | Polymerization initiator 13 | O | O |
| Example 42 | 1-27 | Polymerization initiator 1+ Polymerization initiator 2 | A | O |
| Example 43 | 1-35 | Polymerization initiator 2 | A | O |
| Example 44 | I-35 | Polymerization initiator 4 | O | O |
| Example 45 | I-35 | Polymerization initiator 9 | O | O |
| Example 46 | I-35 | Polymerization initiator 11 | O | O |
| Example 47 | I-35 | Polymerization initiator 13 | O | O |
| Example 48 | I-35 | Polymerization initiator 1 + Polymerization initiator 2 | A | O |
| Example 49 | 1-64 | Polymerization initiator 2 | A | O |
| Example 50 | I-64 | Polymerization initiator 4 | O | O |
| Example 51 | I-64 | Polymerization initiator 9 | O | O |
| Example 52 | 1-64 | Polymerization initiator 11 | O | O |
| Example 53 | 1-64 | Polymerization initiator 13 | O | O |
| Example 54 | 1-64 | Polymerization initiator 1 +Polymerization initiator 2 | A | O |
| Example 55 | I-116 | Polymerization initiator 2 | A | O |
| Example 56 | I-116 | Polymerization initiator 4 | O | O |
| Examples 57 | I-116 | Polymerization initiator 9 | O | O |
| Example 58 | I-116 | Polymerization initiator 11 | O | O |
| Example 59 | I-116 | Polymerization initiator 13 | O | O |
| Example 60 | I-116 | Polymerization initiator 1+Polymerization initiator 2 | A | O |
| Example 61 | I-132 | Polymerization initiator 2 | A | O |
| Example 62 | I-132 | Polymerization initiator 4 | A | O |
| Example 63 | 1-132 | Polymerization initiator 9 | A | O |
| Example 64 | I-132 | Polymerization initiator 11 | A | O |
| Example 65 | I-132 | Polymerization initiator 13 | A | O |
| Example 66 | I-132 | Polymerization initiator 1+Polymerization initiator 2 | A | O |
| Comparative Example 1 | None | Polymerization initiator 1 | × | O |
| Comparative Example 2 | 2-Chlorothioxan thone | Polymerization initiator 1 | A | × |
| Comparative Example 3 | 2,4-Diethylthiox anthone | Polymerization initiator 1 | A | × |
| Comparative Example 4 | Dodecyl acrylate | Polymerization initiator 1 | × | O |

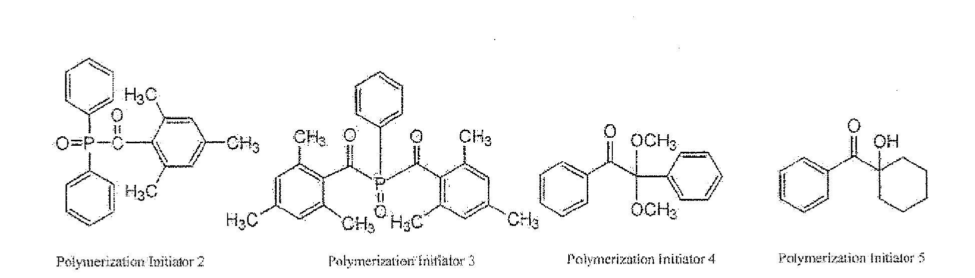

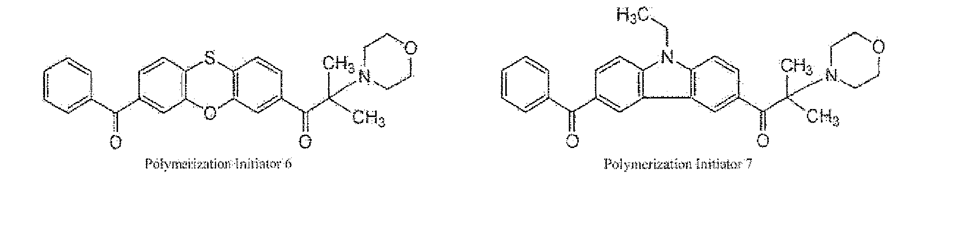

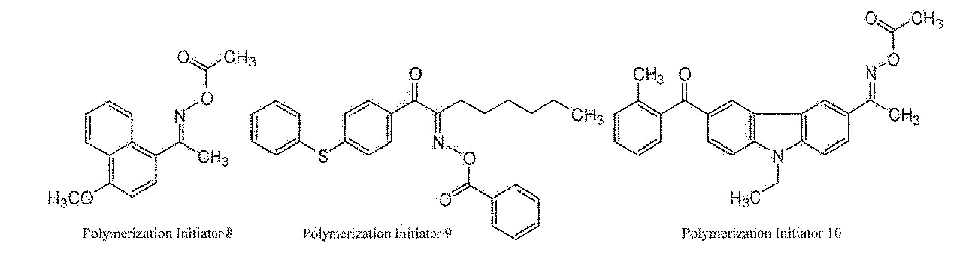

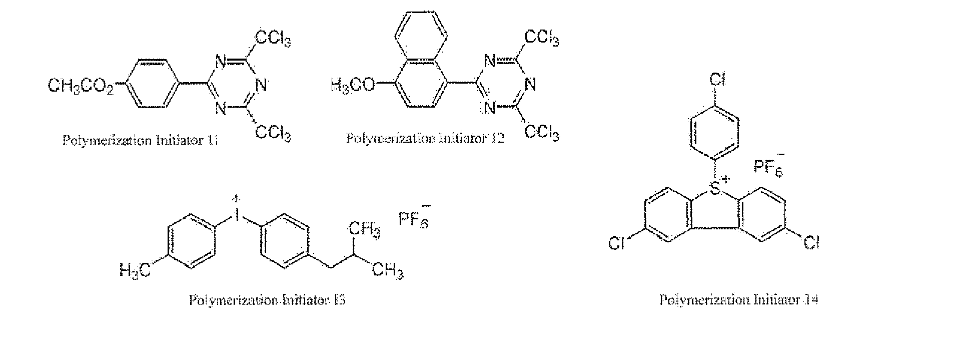

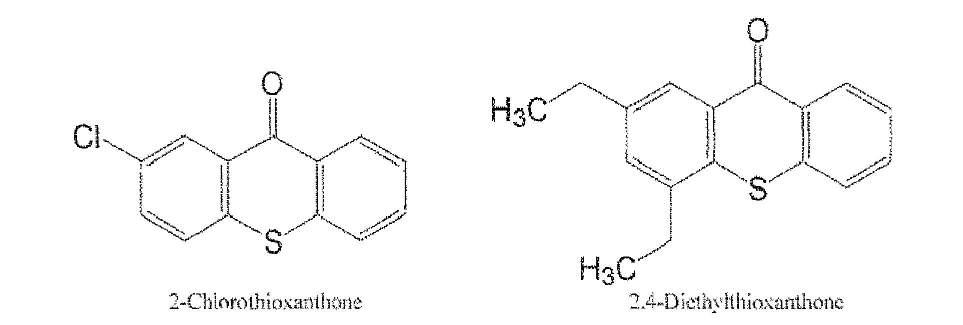

### <Ink Composition Example>

### (Production of Polyurethane Having No Radically Polymerizable Double Bond)

A solvent of Polyurethane 520 (polyurethane including an aliphatic polyisocyanate component and a polyhydric alcohol component having no aromatic cyclic structure, manufactured by Arakawa Chemical Industries, Ltd.) was distilled off at 100°C under reduced pressure of 15 to 40 kPa, to obtain a urethane compound (Ala.) To 60 parts of this urethane compound (Ala) was added, as a reactive diluent, 40 parts of trimethylolpropanepropoxy triacrylate (Aronix M-310 manufactured by Toagosei Co., Ltd.) having a surface tension of 39 mN/m at 20°C to produce a liquid component (Ala).

### (Production of Polyester Having Ethylenically Unsaturated Bond)

42 Parts of phthalic anhydride, 36 parts of bisphenol A and 19 parts of 1,6-hexanediol were subjected to an esterification reaction at 230°C until generation of water ceased. Then, while blowing air at 100 to 130°C, 3 parts of acrylic acid was introduced to the reaction system and the esterification reaction was continued until generation of water ceased, to synthesize a polyester acrylate (B2a).
The obtained polyester acrylate contained an ethylenically unsaturated bond and a carboxyl group derived from the acrylic acid, and had an acid value of 10 mg KOH/g. To 60 parts of this polyester acrylate (B2a) was added 40 parts of Aronix M-310 as a reactive diluent to produce a liquid component (B2a).

### (Example 67)

A white ink composition having a tack value of 15 was produced by mixing the following components in the formulation mentioned below, and then milling and stirring the mixture by using a three-roll mill.

### (Formulation)

-

| | |
|---|---|
| Urethane compound (Ala) | 25 parts |
| • Resin (B2a) | 25 parts |
| • Titanium oxide (White pigment) | 40 parts |
| • Compound (I-1) represented by the formula (I) | 3 parts |
| • Polymerization initiator 1 | 3 parts |
| • Hydroquinone (Polymerization inhibitor) | 0.5 parts |
| • Aronix M-310 | Amount for obtaining a tack value of 15 |

Further, TIPAQUE CR-58 manufactured by Ishihara Sangyo Kaisha Ltd. was used as a titanium oxide.

Furthermore, the "tack" in the tack value above refers to a restoring force of the ink composition layer in a predetermined width between the two rotating rollers which is generated by shearing of the ink layer on the surfaces of the rollers. The tack value is a value measured with a rotary tack meter designed for measuring the tack (see JIS K5700).

This white ink composition was printed in a film thickness of 1.5 µm by offset printing method on a steel panel (200 µm thick) pre-coated with a polyester to prepare an uncured panel. Then, the following tests were carried out by using this uncured panel. The results are shown in Table 3.

### <Evaluation of Non-tackiness (Suppression of Surface Tackiness)>

The uncured panel was exposed with an illumination intensity of 4.0 W/cm² for 1 second using an Aicure UD80 (manufactured by Panasonic Electric Works Co.. Ltd.) set up at an interval of 10 mm, and the non-tackiness after exposure was evaluated by feeling. The evaluation criteria are shown below.
A: No tackiness
O: Almost no tackiness
X: Tackiness present

### (Hue Test)

The uncured panel was exposed with an illumination intensity of 4.0 W/cm² for 0.5 seconds using an Aicure UD80 (manufactured by Panasonic Electric Works Co., Ltd.) set up at an interval of 10 mm, and the panel obtained was evaluated visually for a sensory test of the hue. The evaluation criteria are shown below.
O: Good and white.
Δ: Level at which some yellow color could be discerned.
X: Strongly yellowish white.

As the results of evaluations using the methods above, the photocurable coating composition of Example 67 gave "A" far non-tackiness and "O" for hue.

### (Comparative Example 5)

An uncured panel was prepared by the same method as in Example 67 except that 3 parts of the polymerization initiator 1 (6 parts in total) was used instead of the compound (I-1) represented by the formula (1). Further, evaluation of performance was carried out in the same manner as in Example 67.

### (Examples 68 to 132 and Comparative Examples 6 and 7)

Uncured panels were prepared by the same method as in Example 67 except that the compound represented by the formula (I) and the photopolymerization initiator were changed to the compounds in Table 3 or 4. Further, when two kinds of the photopolymerization initiators were used, they were each used in an amount of 1.5 parts. Further, evaluation of performance was also carried out in the same manner as in Example 67.

**[Table 3]**

| Example Comparative Example | Compound represented by the formula (1) | Photopolymerization initiator | Evaluation results | |
|---|---|---|---|---|
| | | | Non-tackiness | Color |
| Example 67 | I-1 | Polymerization initiator 1 | A | O |
| Example 68 | I-3 | Polymerization initiator 1 | A | O |
| Example 69 | 1-4 | Polymerization initiator 1 | A | O |
| Example 70 | I-7 | Polymerization initiator 1 | A | O |
| Example 71 | I-8 | Polymerization initiator 1 | A | O |
| Example 72 | I-14 | Polymerization initiator 1 | A | O |
| Example 73 | I-15 | Polymerization initiator 1 | A | O |
| Example 74 | I-27 | Polymerization initiator 1 | A | O |
| Example 75 | 1-32 | Polymerization initiator 1 | A | O |
| Example 76 | I-35 | Polymerization initiator 1 | A | O |
| Example 77 | I-54 | Polymerization initiator 1 | A | O |
| Example 78 | 1-64 | Polymerization initiator 1 | A | O |
| Example 79 | I-80 | Polymerization initiator 1 | A | O |
| Example 80 | I-116 | Polymerization initiators 1 | A | O |
| Example 81 | 1-123 | Polymerization initiator 1 | A | O |
| Example 82 | 1-132 | Polymerization initiator 1 | A | O |
| Example 83 | I-1 | Polymerization initiator 2 | A | O |
| Example 84 | I-1 | Polymerization initiator 3 | A | O |
| Example 85 | I-1 | Polymerization initiator 4 | O | O |
| Example 86 | I-1 | Polymerization initiator 5 | O | O |
| Example 87 | I-1 | Polymerization initiator 6 | O | O |
| Example 88 | I-1 | Polymerization initiator 7 | O | O |
| Example 89 | I-1 | Polymerization initiator 8 | O | O |
| Example 90 | 1-1 | Polymerization initiator 9 | O | O |
| Example 91 | I-1 | Polymerization initiator 10 | O | O |
| Example 92 | I-1 | Polymerization initiator 11 | O | O |
| Example 93 | 1-1 | Polymerization initiator 12 | O | O |
| Example 94 | 1-1 | Polymerization initiator 13 | O | O |
| Example 95 | I-1 | Polymerization initiator 14 | O | O |
| Example 96 | I-1 | Polymerization initiator 1 +Polymerization initiator 2 | A | O |
| Example 97 | I-14 | Polymerization initiator 2 | A | O |
| Example 98 | I-14 | Polymerization initiator 4 | A | O |
| Example 99 | I-14 | Polymerization initiator 9 | A | O |
| Example 100 | I-14 | Polymerization initiator 11 | A | O |
| Example 101 | I-14 | Polymerization initiator 13 | A | O |
| Example 102 | 1-14 | Polymerization initiator 1+Polymerization initiator 2 | A | O |

**[Table 4]**

| Example Comparative Example | Compound represented by the formula (1) | Photopolymerization initiator | Evaluation results | |
|---|---|---|---|---|
| | | | Non-tackines s | Color |
| Example 103 | I-27 | Polymerization initiator 2 | A | O |
| Example 104 | I-27 | Polymerization initiator 4 | O | O |
| Example 105 | I-27 | Polymerization initiator 9 | O | O |
| Example 106 | 1-27 | Polymerization initiator 11 | O | O |
| Example 107 | 1-27 | Polymerization initiator 13 | O | O |
| Example 108 | 1-27 | Polymerization initiator 1+Polymerization initiator 2 | A | O |
| Example 109 | I-35 | Polymerization initiator 2 | A | O |
| Example 110 | I-35 | Polymerization initiator 4 | O | O |
| Example 111 | 1-35 | Polymerization initiator 9 | O | O |
| Example 112 | I-35 | Polymerization initiator 11 | O | O |
| Example 113 | 1-35 | Polymerization initiator 13 | O | O |
| Example 114 | I-35 | Polymerization initiator 1+Polymerization initiator 2 | A | O |
| Example 115 | 1-64 | Polymerization Initiator 2 | A | O |
| Example 116 | I-64 | Polymerization initiator 4 | O | O |
| Example 117 | I-64 | Polymerization initiator 9 | O | O |
| Example 118 | 1-64 | Polymerization initiator 11 | O | O |
| Example 119 | I-64 | Polymerization initiator 13 | O | O |
| Example 120 | 1-64 | Polymerization initiator 1+Polymerization initiator 2 | A | O |
| Example 121 | I-116 | Polymerization initiator 2 | A | O |
| Example 122 | I-116 | Polymerization initiator 4 | O | O |
| Example 123 | I-116 | Polymerization initiator 9 | O | O |
| Example 124 | I-116 | Polymerization initiator 11 | O | O |
| Example 125 | I-116 | Polymerization initiator 13 | O | O |
| Example 126 | I-116 | Polymerization initiator 1+Polymerization initiator 2 | A | O |
| Example 127 | I-132 | Polymerization initiator 2 | A | O |
| Example 128 | I-132 | Polymerization initiator 4 | A | O |
| Example 129 | I-132 | Polymerization initiator 9 | A | O |
| Example 130 | 1-132 | Polymerization initiator 11 | A | O |
| Example 131 | I-132 | Polymerization initiator 13 | A | O |
| Example 132 | I-132 | Polymerization initiator 1+Polymerization initiator 2 | A | O |
| Comparative Example 5 | None | Polymerization initiator 1 | X | ○ |
| Comparative Example 6 | 2-Chlorothioxanthone | Polymerization initiator 1 | A | X |
| Comparative Example 7 | 2,4-Diethylthioxanthon e | Polymerization initiator 1 | A | X |

### (Example 133)

With the same ink composition as in Example 67 except that the formulation in Table 5 was used, the white, yellow, red, blue, green, and black ink compositions were produced, respectively. Further, "part(s)" represents "part(s) by weight"' in Table 5.

The white, yellow, red, blue, green, and black ink composition in this order were printed on plain paper (manufactured by Fuji Xerox Co., Ltd., full-color plain paper JV649) at a film thickness of 1.5 µm for each of the colors, by an offset printing method. The ink composition was cured by exposing it for each of the colors at an illumination intensity of 4.0 W/cm² for 0.5 seconds using an Aicure UD80 (manufactured by Panasonic Electric Works Co., Ltd.) above. For each of the colors, the non-tackiness after exposure was evaluated by feeling, and as a result, the non-tackiness was A and the hue was O. The 6-color printed pattern was a clear printed matter, from which an oblong photographic image including images of people could be obtained. The non-tackiness after 6-color printing and exposure was evaluated by touch feeling, and as a result, the non-tackiness was A, and thus, a printed matter having a good hue could be obtained.

**[Table 5]**

| Ink composition | White | Yellow | Red | Blue | Green | Black |
|---|---|---|---|---|---|---|
| Urethane compound (Ala) | 25 parts | 35 parts | 35 parts | 35 parts | 35 parts | 37 parts |
| Resin (B2a) | 25 parts | 35 parts | 35 parts | 35 parts | 35 parts | 37 parts |
| TIPAQUE CR-58 | 40 parts | - | - | - | - | - |
| Permanent Yellow-HR | - | 15 parts | - | - | - | - |
| Permanent Pink E | - | - | 15 parts | - | - | - |
| Phthalocyanine Blue | - | - | - | 15 parts | - | - |
| Phthalocyanine Green | - | - | - | - | 15 parts | - |
| Special Black 250 | - | - | - | - | - | 10 parts |
| Compound (I-1) represented by Formula. (I) | 3 parts | 3 parts | 3 parts | 3 parts | 3 parts | 3 parts |
| Polymerization Initiator 1 | 3 parts | 3 parts | 3 parts | 3 parts | 3 parts | 3 parts |
| Hydroquinine (polymerization inhibitor) | 0.5 parts | 0.5 parts | 0.5 parts | 0.5 parts | 0.5 parts | 0.5 parts |
| Aronix M-310 | Amount for obtaining a tack value of 15 | | | | | |

### [Description of Symbols]

1: PLATE CYLINDER, 2: RUBBER CYLINDER, 3: IMPRESSION CYLINDER, 4: LIGHT-EMITTING DIODE, 5: SUBSTRATE, 6: SUPPORT MEMBER, 9a, 9b, 9c: TRANSFER CYLINDERS, 20: SHEET FEEDING SECTION. 30: PRINTING SECTION, 30a to 30e: PRINTING UNITS, 30f: DRYING UNIT, 40: SHEET DISCHARGING SECTION, 100: PRINTING MACHINE, S: CONTROLLER, T: ULTRAVIOLET IRRADIATION PORTION, 200, 201: COATING DEVICE, 202: PAPER MATERIAL, 203: ROLL, 204: PAPER MATERIAL UNWINDING DEVICE, 205: GUIDE ROLLER, 206: PAPER MATERIAL WINDING DEVICE, 210: LAMINATE FILM, 211: ROLL, 212: LAMINATE FILM UNWINDING DEVICE, 213: GUIDE ROLLER, 214: LAMINATE FILM WINDING DEVICE, 215: STORAGE TANK, 216: COATING ROLLER, 217: ROLLER, 220. 221: PRESSING ROLLER, 222: FIRST LIGHT-EMITTING DIODE, 223: SECOND LIGHT-EMITTING DIODE, 224: SEPARATING ROLLER, 225: HOLDING ROLLER, 230: SHEET, 231: FEED DEVICE, 232: STOCK DEVICE, 233: DRIVING ROLLER.

## Claims

1. A printing method comprising:
a printing step of printing an ink composition comprising (component A) a compound represented by the formula (I), (component B) a photopolymerization initiator, (component C) an ethylenically unsaturated compound, and (component D) a colorant on a material to be printed, and
a curing step of irradiating ultraviolet rays having a peak wavelength at 375 to 395 nm by a light-emitting diode to cure the printed ink composition: 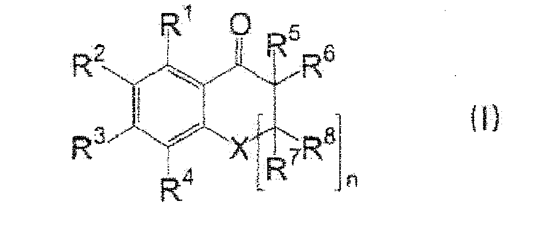 (in the formula (I), X represents O, S, or NR, n represents an integer of 0 to 4, R represents a hydrogen atoms, an alkyl group, or an acyl group, R¹ to R⁸ each independently represent a hydrogen atom or a monovalent substituent, two of R¹ to R⁴ which are adjacent, respectively, may be bonded to each other to form a ring, and two of R⁵ to R⁸ which are adjacent, respectively, may be bonded to each other to form an aliphatic ring).

2. The printing method as described in claim 1, wherein the printing method is an offset printing method.

3. The printing method as described in claim 1 or 2, wherein at least one of R¹ to R⁸ in the formula (I) is a halogen atom.

4. The printing method as described in any one of claims 1 to 3, wherein the component A is a compound represented by the following formula (I-C): 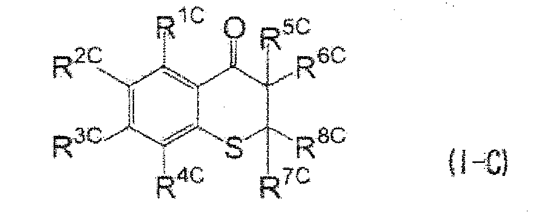 (in the formula (I-C), R^{1c} to R^{4c} each independently represent a hydrogen atom or a halogen atom, R^{5c} to R^{8c} each independently represent a hydrogen atom or an alkyl group, at least one of R^{1C} to R^{4C} is a halogen atom, and at least one of R^{5C} to R^{8C} is an alkyl group).

5. The printing method as described in any one of claims 1 to 4, wherein the component B is an α-aminoketone-based compound and/or an acylphosphine oxide-based compound.

6. The printing method as described in claim 5, wherein the component B is an α-aminoketone-based compound and an acylphosphine oxide-based compound.

7. The printing method as described in any one of claims 1 to 6, wherein the printing step is a printing step of fun-color printing on a material to be printed using at least the ink composition.

8. A method for preparing an overprint comprising:
a coating step of coating a coating composition comprising (component A) a compound represented by the formula (I), (components B) a photopolymerization initiator, and (component C) an ethylenically unsaturated compound on a printed matter, and
a curing step of irradiating ultraviolet rays having a peak wavelength at 375 to 395 mn by a light-emitting diode to cure the coating composition thus coated: 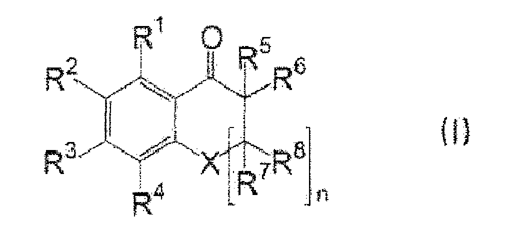 (in the formula (I), X represents O, S, or NR, n represents an integer of 0 to 4, R represents a hydrogen atom, an alkyl group, or an acyl group, R¹ to R⁸ each independently represent a hydrogen atom or a monovalent substituent, two of R¹ to R⁴ which are adjacent, respectively, may be bonded to each other to form a ring, and two of R⁵ to R⁸ which are adjacent, respectively, may be bonded to each other to form an aliphatic ring).

9. A method for processing a laminate, comprising:
a coating step of coating a coating composition comprising (component A) a compound represented by the formula (I), (component B) a photopolymerization initiator, and (component C) an ethylenically unsaturated compound on a printed matter,
a laminating step of laminating a laminate film on the printed matter having the coating composition coated thereon, and
a curing step of irradiating ultraviolet, rays having a peak wavelength at 375 to 395 nm by a light-emitting diode to cure the coating composition thus coated: 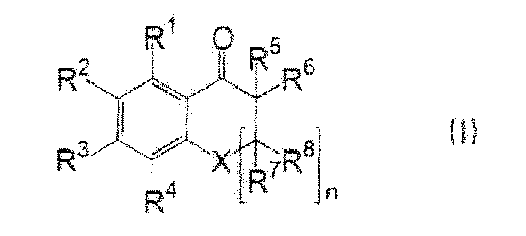 (in the formula (I), X represents O S, or NR, n represents an integer of 0 to 4, R represents a hydrogen atom, an alkyl group, or an acyl group, R¹ to R⁸ each independently represent a hydrogen atom or a monovalent substituent, two of R¹ to R⁴ which are adjacent, respectively, may be bonded to each other to form a ring, and two of R⁵ to R⁸ which are adjacent, respectively, may be bonded to each other to form an aliphatic ring).

10. A light-emitting diode curable coating composition, which comprises:
(component A) a compound represented by the following formula (I),
(component B) a photopolymerization initiator, and
(component C) an ethylenically unsaturated compound, and
which is cured by irradiation with a light-emitting diode having a peak wavelength at 375 to 395 nm: 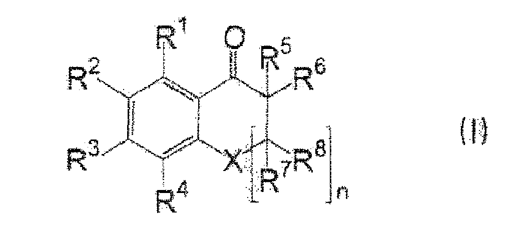 (in the formula (I), X represents O, S, or NR, n represents an integer of 0 to 4, R represents a hydrogen atom an alkyl group, or an acyl group, R¹ to R⁸ each independently represent a hydrogen atom or a monovalent substituent, two of R¹ to R⁴ which are adjacent, respectively, may be bonded to each other to form a ring, and two of R⁵ to R⁸ which are adjacent, respectively, may be bonded to each other to form an aliphatic ring).

11. The light-emitting diode curable coating composition as described in claim 10, wherein the component A is a compound represented by the following formula (I-C): 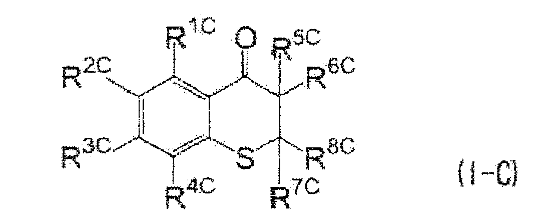 (in the formula (I-C), R^{1C} to R^{4C} each independently represent a hydrogen atom or a halogen atom, R^{5C} to R^{8C} each independently represent, a hydrogen atom or an alkyl group, at least one of R^{1C} to R^{4C} is a halogen atom, and at least one of R^{5C} to R^{8G} is an alkyl group).

12. The light-emitting diode curable coating composition as described in claim 10 or 11, which is a coating composition for offset printing.

13. Alight-emitting diode curable ink composition, which comprises:
(component A) a compound represented by the following formula (I),
(component B) a photopolymerization initiator,
(component C) an ethylenically unsaturated compound, and
(component D) a colorant, and
which is cured by irradiation with a light-emitting diode having a peak wavelength at 375 to 395 mn: 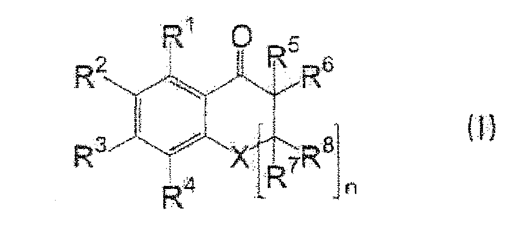 (in the formula (I), X represents O, S, or NR, n represents an integer of 0 to 4, R represents a hydrogen atom, an alkyl group, or an acyl group, R¹ to R⁸ each independently represent a hydrogen atom or a monovalent substituent, two of R¹ to R⁴ which are adjacent, respectively, may be bonded to each other to form a ring, and two of R⁵ to R⁸ which are adjacent, respectively, may be bonded to each other to form an aliphatic ring).

14. The light-emitting diode curable ink composition as described in claim 13, wherein the component A is a compound represented by the following formula (I-C): 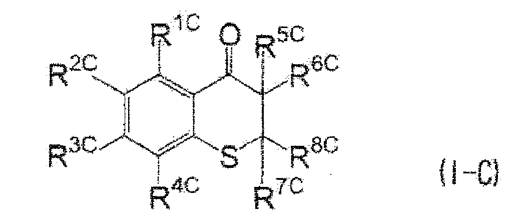 (in the formula (I-C), R^{1C} to R^{4C} each independently represent a, hydrogen atom or a halogen atom, R^{5C} to R^{8C} each independently represent a hydrogen atom or an alkyl group, at least one of R^{1C} to R^{4C} is a halogen atom, and at least one of R^{5C} to R^{8C} is an alkyl group).

15. The light-emitting diode curable ink composition as described in claim 13 or 14, which is a curable ink composition for offset printing.
